(19) Europäisches Patentamt
European Patent Office
Office européen des brevets

(11) **EP 4 625 527 A1**

(12) **EUROPEAN PATENT APPLICATION**

(43) Date of publication:
**01.10.2025 Bulletin 2025/40**

(21) Application number: **24167905.9**

(22) Date of filing: **29.03.2024**

(51) International Patent Classification (IPC):
***H01M 4/137*** *(2010.01)* ***H01M 4/60*** *(2006.01)*
***H01M 4/62*** *(2006.01)* ***H01M 10/0525*** *(2010.01)*
***H01M 10/054*** *(2010.01)*

(52) Cooperative Patent Classification (CPC):
**H01M 10/0525; H01M 4/137; H01M 4/60; H01M 4/608; H01M 4/625; H01M 10/054**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Massachusetts Institute Of Technology Cambridge, MA 02139 (US)**

(72) Inventors:
- **DINCA, Mircea**
  **Belmont, Massachusetts, 02478 (US)**
- **CHEN, Tianyang**
  **Dorchester Center, Massachusetts, 02139 (US)**
- **WANG, Jiande**
  **Cambridge, Massachusetts, 02142 (US)**
- **TAN, Bowen**
  **Watertown, Massachusetts, 02472 (US)**

(74) Representative: **Hoffmann Eitle**
**Patent- und Rechtsanwälte PartmbB**
**Arabellastraße 30**
**81925 München (DE)**

(54) **BATTERIES, INCLUDING SODIUM-ION BATTERIES WITH CARBON NANOSTRUCTURE COMPOSITES, AND RELATED COMPOSITIONS, ARTICLES, AND METHODS**

(57) Compositions, articles, and methods related to batteries (e.g., sodium-ion batteries) including carbon nanostructure (e.g., carbon nanotube) composites are generally described.

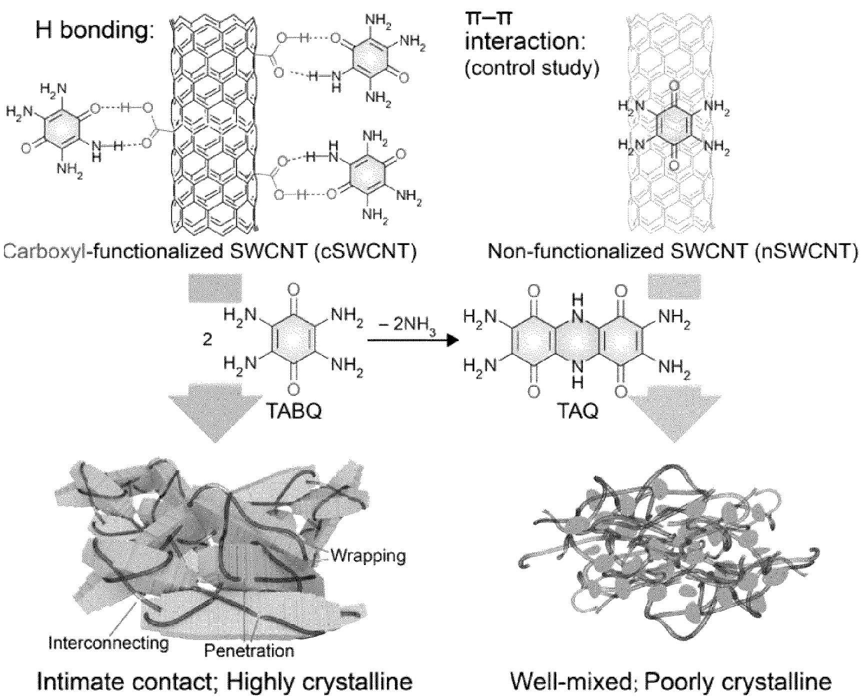


*FIG. 5*

EP 4 625 527 A1

## Description

### TECHNICAL FIELD

Compositions, articles, and methods related to batteries (e.g., sodium-ion batteries) including carbon nanostructure (e.g., carbon nanotube) composites are generally described.

### BACKGROUND

Lithium-ion batteries (LIBs) have been pivotal in powering consumer electronics and electric vehicles (EVs). However, the lithium-ion industry is facing increasingly severe challenges largely related to ethical, environmental, and sustainability issues, particularly regarding the mining and processing of raw materials used in LIBs, such as lithium (Li) and cobalt (Co). Therefore, "beyond-lithium" battery technologies to mitigate the rising concerns of the lithium-ion industry have drawn significant attention. Among these technologies, sodium-ion batteries (SIBs) have exhibited potential as a promising complimentary technology to LIBs for stationary energy storage applications like (micro)grids, data and/or loading centers, and/or commercial scale renewables, benefiting from sodium's abundant availability.

Accordingly, improved compositions, articles, systems, and methods related to batteries (e.g., sodium-ion batteries) are needed.

### SUMMARY

Compositions, articles, and methods related to batteries (e.g., sodium-ion batteries) including carbon nanostructure (e.g., carbon nanotube) composites are generally described. In certain embodiments, a composite comprises: (i) an electrochemically active material comprising a *bis*-tetraamino-benzoquinone molecule and/or a dimer, tautomer, oligomer, polymer, and/or derivative thereof; and (ii) at least one carbon nanotube (CNT). In some embodiments, the composite may be suitable for use as an electrode and/or an electrode material in an electrochemical cell. In certain embodiments, the electrochemical cell is a battery (e.g., a rechargeable battery, such as a sodium-ion battery).

According to some embodiments, a battery is described, the battery comprising an electrode comprising a composite comprising an electrochemically active material comprising a *bis*-tetraamino-benzoquinone molecule and/or a dimer, tautomer, oligomer, polymer, and/or derivative thereof, and wherein the composite further comprises at least one CNT. In certain embodiments, the battery has a discharge capacity greater than or equal to 125 mAh per gram of the electrode when current density is set at a value of at least 1000 mA per gram of the electrochemically active material in the electrode.

In certain embodiments, a rechargeable sodium-ion battery is described, the rechargeable sodium-ion battery comprising an electrode comprising an electrochemically active material. In some embodiments, the rechargeable sodium-ion battery has a discharge capacity greater than or equal to 200 mAh per gram of the electrode when current density is set at a value of at least 1000 mA per gram of the electrochemically active material in the electrode.

In some embodiments, a method of operating a battery is described. In certain embodiments, the method comprises discharging the battery, wherein the battery comprises an electrode comprising a composite comprising an electrochemically active material comprising a *bis*-tetraamino-benzoquinone molecule and/or a dimer, tautomer, oligomer, polymer, and/or derivative thereof, and wherein the composite further comprises at least one CNT. In certain embodiments, the battery has a discharge capacity greater than or equal to 125 mAh per gram of the electrode when current density is set at a value of at least 1000 mA per gram of the electrochemically active material in the electrode.

Other advantages and novel features of the present disclosure will become apparent from the following detailed description of various non-limiting embodiments of the disclosure when considered in conjunction with the accompanying figures. In cases where the present specification and a document incorporated by reference include conflicting and/or inconsistent disclosure, the present specification shall control.

### BRIEF DESCRIPTION OF THE DRAWINGS

Non-limiting embodiments of the present disclosure will be described by way of example with reference to the accompanying figures, which are schematic and are not intended to be drawn to scale unless otherwise indicated. In the figures, each identical or nearly identical component illustrated is typically represented by a single numeral. For purposes of clarity, not every component is labeled in every figure, nor is every component of each embodiment of the disclosure shown where illustration is not necessary to allow those of ordinary skill in the art to understand the disclosure. In the figures:

FIG. 1 shows a cross-sectional schematic diagram of an electrochemical cell, in accordance with certain embodiments.

FIG. 2A shows an exemplary chemical structure of a *bis*-tetraamino-benzoquinone (TAQ) molecule, in accordance with certain embodiments.

FIG. 2B shows an exemplary chemical structure of derivatives of a *bis*-tetraamino-benzoquinone molecule, in accordance with certain embodiments.

FIG. 3 shows a schematic diagram of a two-dimensional layered crystal structure of a *bis*-tetraamino-benzoquinone molecule with close interlayer spacing of 3.14 Å, in accordance with certain embodiments.

FIG. 4 shows a variety of functionalized carbon nanotubes (CNTs), in accordance with certain embodiments.

FIG. 5 shows schematic diagrams of a hydrogen bonding assisted synthesis of a composite using carboxyl-functionalized CNTs (left) and a synthesis of a composite using non-functionalized CNTs (right), in accordance with certain embodiments.

FIG. 6A shows a scanning electron microscopy (SEM) image of a TAQ-CNT composite synthesized by hydrogen bonding assisted growth, in accordance with certain embodiments.

FIG. 6B shows a transmission electron microscopy (TEM) image of a TAQ-CNT composite synthesized by hydrogen bonding assisted growth, in accordance with certain embodiments.

FIG. 7 shows the first two cycles of a charge-discharge voltage profile of a TAQ-Na cell, in accordance with certain embodiments.

FIG. 8 shows the rate capability of a TAQ-Na cell, in accordance with certain embodiments.

FIG. 9 shows a rate capability comparison of TAQ-Na cells using electrolytes with different ratios of dimethoxyethane (DME) and diglyme, in accordance with certain embodiments.

FIG. 10 shows cycling studies of TAQ-Na cells using 1 M sodium hexafluorophosphate ($NaPF_6$) in DME:diglyme (1:1) as the electrolyte, in accordance with certain embodiments.

FIG. 11 shows rate capability studies at current densities from 25 mA/g to 2000 mA/g of: (i) a TAQ-carboxyl functionalized single-walled CNT (cSWCNT) composite-based half-cell; (ii) a TAQ-carboxyl functionalized multi-walled CNT (cMWCNT) composite-based half-cell; (iii) a TAQ-based half-cell; and (iv) a physically mixed TAQ/cSWCNT composite-based half-cell, in accordance with certain embodiments.

FIG. 12 shows cycling studies of full cells based on different TAQ-cSWCNT composites with increasing current densities to 10 A/g and decreasing current densities to 0.2 A/g, in accordance with certain embodiments.

FIG. 13 shows a cycling study of a TAQ-cSWCNT-based full cell at 2 A/g and 10 A/g, in accordance with certain embodiments.

FIG. 14A shows a comparison of the electrode-level gravimetric energy densities of TAQ-cSWCNT cathodes and conventional organic electrode materials (OEMs) as a function of current densities, in accordance with certain embodiments.

FIG. 14B shows a comparison of the electrode-level gravimetric energy densities of TAQ-cSWCNT cathodes and conventional inorganic cathodes, in accordance with certain embodiments.

FIG. 14C shows the corresponding conventional electrode materials in FIGS. 14A-14B, in accordance with certain embodiments.

FIG. 14D shows a charge-discharge voltage profile of a TAQ-hard carbon (HC) cell, in accordance with certain embodiments.

FIG. 14E shows capacity retention as a function of cycle time for TAQ-cSWCNT compared to conventional organic and inorganic electrodes, in accordance with certain embodiments.

FIG. 15A shows conventional strategies to solve the dissolution and insulation problems of OEMs, in accordance with certain embodiments.

FIG. 15B shows a two-stage strategy to solve the dissolution and insulation problems of OEMs through both molecular-level and composite-level engineering, in accordance with certain embodiments.

FIG. 15C shows the chemical structure and redox chemistry of TAQ, in accordance with certain embodiments.

FIG. 15D shows a diffuse reflectance (DR) UV-Vis-NIR spectrum of TAQ plotted in the Tauc coordinates, in accordance with certain embodiments.

FIG. 15E shows band structure and density of states of TAQ, in accordance with certain embodiments.

FIG. 15F shows galvanostatic charge-discharge voltage profiles of TAQ-Na half cells using 1 M $NaPF_6$ in DME, diglyme, or DME/diglyme (1:1) as the electrolyte, and the inset shows an SEM image of TAQ electrode, in accordance with certain embodiments.

FIG. 16A shows *ex-situ* diffuse reflectance infrared Fourier transform (DRIFT) spectra of TAQ cathodes at different states of charge and discharge, in accordance with certain embodiments.

FIG. 16B shows a rate capability study of a TAQ-HC cell, in accordance with certain embodiments.

FIG. 16C shows a cycling study of a TAQ-Na half cell using 1 M $NaPF_6$ in DME/diglyme (1:1) as the electrolyte at a current density of 200 mA/g, wherein the insets show the evolution of voltage profiles during cycling, in accordance with certain embodiments.

FIG. 16D shows a cycling study of a TAQ-HC full cell using 1 M $NaPF_6$ in DME/diglyme (1:1) as the electrolyte at a current density of 800 mA/g after initial formation cycles at 100 mA/g, in accordance with certain embodiments.

FIG. 16E shows electrode-level energy density of conventional state-of-the-art organic cathodes and TAQ cathodes versus their energy density at the active-material level, in accordance with certain embodiments.

FIG. 17A shows voltage profiles (left) and in-operando powder X-diffraction (PXRD) patterns (right) of a TAQ-Na cell cycled at a current density of 100 mA/g, in accordance with certain embodiments.

FIG. 17B shows voltage profiles (left) and in-operando PXRD patterns (right) of a TAQ-Na cell cycled at a current density of 200 mA/g, in accordance with certain embodiments.

FIG. 17C shows a discharge/charge voltage profile of a TAQ-Na cell at 25 mA/g with schematics of the charge storage mechanism for TAQ, in accordance with certain embodiments.

FIG. 17D shows *ex-situ* DR UV-Vis-NIR spectra, in accordance with certain embodiments.

FIG. 17E shows *ex-situ* SEM images of TAQ cathodes at different states of discharge/charge, in accordance with certain embodiments.

FIG. 18A shows a PXRD pattern of TAQ and a TAQ-cSWCNT composite, in accordance with certain embodiments.

FIG. 18B shows a TEM image of a TAQ-cSWCNT composite, in accordance with certain embodiments.

FIG. 18C shows DR UV-Vis-NIR spectrum of a TAQ-cSWCNT composite, exhibiting enhanced electronic absorption below 0.8 eV, in accordance with certain embodiments.

FIG. 18D shows electrical conductivities of TAQ and TAQ-cSWCNT composites, in accordance with certain embodiments.

FIG. 18E shows a comparison of $CR_{25}^{m}$ ($50 \leq m \leq 5000$) for TAQ-cSWCNT- and physically mixed TAQ/cSWCNT-based half cells, in accordance with certain embodiments.

FIG. 18F shows discharge/charge voltage profiles of the two cells in FIG. 18E, in accordance with certain embodiments.

FIG. 18G shows $R_{ESR}$ (top left), $R_{interface}$ (bottom left), and $R_{charge\,transfer}$ (right) of TAQ- and TAQ-cSWCNT-based half cells at various equilibrium voltages obtained by electrochemical impedence spectroscopy (EIS) studies, in accordance with certain embodiments.

FIG. 18H shows rate capability studies of TAQ-cSWCNT (2 wt.%)-HC and TAQ-cSWCNT (4 wt.%)-HC full cells under current densities ranging from 0.05 A/g to 10 A/g, in accordance with certain embodiments.

## DETAILED DESCRIPTION

Described herein are electrochemically active materials having advantageous properties, composites comprising electrochemically active materials, electrodes, and batteries (e.g., rechargeable batteries, such as sodium-ion batteries), and related methods. In one aspect, an electrochemically active material can primarily or entirely include an organic material that has abundant redox-active sites making the electrochemically active material a suitable high-capacity material. For example, the electrochemically active material can include a substantially low amount (e.g., less than or equal to 1 wt.% versus a total weight of the electrochemically active material) of metal atoms (e.g., nickel, cobalt, manganese, and the like). As compared to conventional organic electrochemically active materials, the electrochemically active materials described herein exhibit enhanced charge transport, ion transport, and/or charge storage.

The electrochemically active material may, in certain embodiments, comprise a fused aromatic system. For example, in some embodiments, the electrochemically active material is or comprises a *bis*-tetraaminobenzoquinone molecule and/or a dimer, tautomer, oligomer, polymer, and/or derivative thereof. In some embodiments, the fused rings in the backbone of the fused aromatic system are advantageously co-planar and $\pi$-conjugated, which provides high structural stability while also allowing for intermolecular $\pi$-$\pi$ stacking interactions. In accordance with certain embodiments, the fused aromatic system comprises a high density of heteroatomic functionalities (e.g., imines, quinones, and the like) that serve both as redox-active sites and as hydrogen bonding donors and/or acceptors. The in-plane electronic conjugation, inter-plane $\pi$-$\pi$ stacking, and strong intra-plane hydrogen bonding interactions advantageously provide a highly insoluble organic solid with high bulk electrical conductivity (e.g., greater than or equal to $10^{-6}$ S/cm).

Another aspect of this disclosure includes a composite comprising an electrochemically active material that is or comprises a *bis*-tetraaminobenzoquinone molecule and/or a dimer, tautomer, oligomer, polymer, and/or derivative thereof. In certain embodiments, the electrochemically active material further comprises at least one carbon nanostructure (e.g., at least one carbon nanotube). According to some embodiments, the composite comprising at least one carbon nanostructure may advantageously provide an increase in conductivity as compared to the conductivity of the electrochemically active material. The composite may, in some embodiments, comprise an advantageously high amount of electrochemically active material and an advantageously low amount of the at least one carbon nanostructure. In certain non-limiting embodiments, for example, the composite comprises: (i) the electrochemically active material in an amount greater than or equal to 90 wt.% and less than or equal to 99.9 wt.% versus a total weight of the composite; and (ii) the at

least one carbon nanostructure in an amount greater than or equal to 0.1 wt.% and less than or equal to 10 wt.% versus a total weight of the composite. Advantageously, the composite comprising a high amount of the electrochemically active material may, in certain embodiments, have desirable conductivities without exhibiting a loss in one or more electrochemical performance metrics (e.g., energy density, discharge capacity (and/or charge capacity), and/or the like).

According to certain embodiments, at least a portion of at least one carbon nanostructure may be functionalized with one or more functional groups (e.g., one or more carboxylic acid (-C(O)OH) groups). The *bis*-tetraamino-benzoquinone molecule and/or the dimer, tautomer, oligomer, polymer, and/or derivative thereof may, in certain embodiments, interact with at least one functionalized carbon nanostructure via one or more hydrogen bonding interactions (e.g., intermolecular hydrogen bonding interactions) between at least a portion of the *bis*-tetraamino-benzoquinone molecule and/or the dimer, tautomer, oligomer, polymer, and/or derivative thereof and one or more functional groups of at least one carbon nanostructure. In some embodiments, the *bis*-tetraamino-benzoquinone molecule and/or the dimer, tautomer, oligomer, polymer, and/or derivative thereof may interact with at least one carbon nanostructure via one or more $\pi$-$\pi$ interactions (e.g., one or more intermolecular $\pi$-$\pi$ stacking interactions). In certain embodiments, one or more hydrogen bonding interactions and/or one or more $\pi$-$\pi$ interactions between the *bis*-tetraamino-benzoquinone molecule and/or the dimer, tautomer, oligomer, polymer, and/or derivative thereof and the functionalized carbon nanostructure advantageously results in the *bis*-tetraamino-benzoquinone molecule and/or the dimer, tautomer, oligomer, polymer, and/or derivative thereof being evenly wrapped and interconnected by the functionalized carbon nanostructure. According to some embodiments, the composite (e.g., the composite comprising: (i) an electrochemically active material comprising the *bis*-tetraamino-benzoquinone molecule and/or the dimer, tautomer, oligomer, polymer, and/or derivative thereof; and (ii) at least one carbon nanostructure) may be highly crystalline.

Another aspect of this disclosure includes an electrode which can (but need not) include an electrochemically active material or a composite comprising an electrochemically active material as described herein. In another aspect, this disclosure provides a battery which can include such an electrode (e.g., as a cathode and/or as an anode; a cathode in one set of embodiments). Batteries of this disclosure can be primary or secondary (e.g., rechargeable), such as a sodium-ion or lithium-ion battery.

According to some embodiments, the battery may exhibit desirable discharge capacities (and/or charge capacities) per gram of the electrode (e.g., cathode) when current density is set to a certain value per gram of the electrochemically active material in the electrode (e.g., cathode). For example, in certain non-limiting embodiments, the battery has a discharge capacity (and/or a charge capacity) greater than or equal 125 mAh per gram of the electrode (e.g., cathode) when current density is set at a value of at least 1000 mA per gram of the electrochemically active material in the electrode (e.g., cathode). In some non-limiting embodiments, the battery has a discharge capacity (and/or a charge capacity) greater than or equal to 150 mAh per gram of the electrode (e.g., cathode) when current density is set to a value of at least 5000 mA per gram of the electrochemically active material in the electrode (e.g., cathode). In certain non-limiting embodiments, the battery has a discharge capacity (and/or a charge capacity) greater than or equal to 125 mAh per gram of the electrode (e.g., cathode) when current density is set to a value of at least 10000 mA per gram of the electrochemically active material in the electrode (e.g., cathode).

The battery may, in some embodiments, advantageously be cycled (e.g., discharged and charged) without a substantial drop in discharge capacity (and/or charge capacity) per gram of the electrode (e.g., cathode) when current density is set at a certain value per gram of the electrochemically active material in the electrode (e.g., cathode). For example, in some non-limiting embodiments, the discharge capacity (and/or charge capacity) of the battery per gram of the electrode (e.g., cathode) decreases by less than or equal to 30% after cycling the battery at least 100 times when current density is set at 1000 mA per gram of the electrochemically active material in the electrode (e.g., cathode).

In some embodiments, an electrochemically active material is described. In certain embodiments, the electrochemically active material can be used as an electrode and/or an electrode material, which itself can be configured for use in an electrochemical cell (e.g., a battery). According to some embodiments, the electrochemically active material comprises abundant redox-active sites making the electrochemically active material suitable as a high-capacity material, as the redox-active sites rapidly transport electric and/or ionic charges throughout the bulk of the electrochemically active material (e.g., the bulk of an electrode that comprises the electrochemically active material).

In some embodiments, the electrochemically active material primarily or entirely comprises an organic material. The organic electrochemically active material advantageously offers structural tunability and synthetic feasibility for diverse designs of various electrode materials that utilize earth-abundant elements. Conventional organic materials have poor intrinsic electrical conductivity, limited electronic delocalization, and/or high solubility in electrolytes, therefore providing inferior electrochemical performances. Organic electrochemically active materials as described herein, however, may be an insoluble organic solid that exhibits enhanced charge transport, ion transport, and/or charge storage as compared to conventional organic materials.

The electrochemically active material may comprise a relatively limited quantity of metal atoms. For example, in some embodiments, the electrochemically active material comprises at most a trace amount of transition metals (e.g., nickel (Ni) and/or cobalt (Co)). In some embodiments, the electrochemically active material comprises one or more

transition metals (e.g., Ni and/or Co) in a total amount less than or equal to 5 weight percent (wt.%), less than or equal to 2 wt.%, less than or equal to 1 wt.%, less than or equal to 0.5 wt.%, less than or equal to 0.2 wt.%, less than or equal to 0.1 wt.%, less than or equal to 0.05 wt.%, less than or equal to 0.02 wt.%, less than or equal to 0.01 wt.%, or less, based on a total weight of the electrochemically active material. In certain embodiments, the electrochemically active material comprises one or more transition metals (e.g., Ni and/or Co) in a total amount greater than or equal to 0.001 wt.%, greater than or equal to 0.01 wt.%, greater than or equal to 0.02 wt.%, greater than or equal to 0.05 wt.%, greater than or equal to 0.1 wt.%, greater than or equal to 0.2 wt.%, greater than or equal to 0.5 wt.%, greater than or equal to 1 wt.%, or greater than or equal to 2 wt.% based on a total weight of the electrochemically active material. Combinations of the above recited ranges are possible (e.g., the electrochemically active material comprises one or more transition metals in a total amount less than or equal to 5 wt.% and greater than or equal to 0.001 wt.% based on a total weight of the electrochemically active material, the electrochemically active material comprises one or more transition metals in a total amount less than or equal to 0.2 wt.% and greater than or equal to 0.1 wt.% based on a total weight of the electrochemically active material). Other ranges are also possible.

The electrochemically active material may have any of a variety of suitable electrical conductivities. In certain embodiments, for example, the electrochemically active material has an electrical conductivity greater than or equal to $10^{-6}$ S/cm, greater than or equal to $10^{-5}$ S/cm, greater than or equal to $10^{-4}$ S/cm, greater than or equal to $10^{-3}$ S/cm, or greater than or equal to $10^{-2}$ S/cm. In some embodiments, the electrochemically active material has an electrical conductivity less than or equal to $10^{-1}$ S/cm, less than or equal to $10^{-2}$ S/cm, less than or equal to $10^{-3}$ S/cm, less than or equal to $10^{-4}$ S/cm, or less than or equal to $10^{-5}$ S/cm. Combinations of the above recited ranges are possible (e.g., the electrochemically active material has an electrical conductivity greater than or equal to $10^{-6}$ S/cm and less than or equal to $10^{-1}$ S/cm, the electrochemically active material has an electrical conductivity greater than or equal to $10^{-4}$ S/cm and less than or equal to $10^{-2}$ S/cm). Other ranges are also possible.

In certain embodiments, the electrical conductivity of the electrochemically active material is measured using an electrical conductivity meter.

According to some embodiments, the electrochemically active material can be used as an electrode and/or electrode material. In certain embodiments, for example, the electrochemically active material itself, and/or the electrochemically active material in conjunction with one or more other materials with which it can be compounded, synthesized, or otherwise combined (e.g., a composite, as described herein in greater detail), provides the requisite level of cohesiveness, structural self-support, electronic and/or ionic conductivity, and/or other features recognized as useful for use as an electrode and/or electrode material. In some embodiments, the electrode and/or electrode material is configured for use in an electrochemical cell (e.g., a battery). For example, in certain embodiments, the electrode and/or electrode material has requisite properties for connection to a circuit (which can connect to another electrode in the electrochemical cell), interface with an electrolyte (e.g., a liquid and/or solid electrolyte) without damage and/or degradation, and/or the like.

According to certain embodiments, the electrochemically active material comprises a fused aromatic system. As used herein, the term "fused aromatic system" refers to two or more cyclic (e.g., monocyclic, bicyclic, tricyclic, etc.) aromatic rings that share connecting bonds, and/or a plurality of two or more cyclic (e.g., monocyclic, bicyclic, tricyclic, etc.) aromatic rings that share connecting bonds. In some embodiments, for example, the fused aromatic system comprises one or more fused aromatic molecules comprising at least two aromatic rings that share connecting bonds. In certain embodiments, the fused aromatic system possesses dense redox-active sites in the aromatic backbone with extended conjugation. Without wishing to be bound by theory, the fused aromatic system may, in some embodiments, have a continuously $\pi$-conjugated backbone that ensures high electrical conductivity, thereby facilitating low-charge transfer resistance. In some non-limiting embodiments, the fused aromatic system comprises a *bis*-tetraamino-benzoquinone molecule and/or a dimer, tautomer, oligomer, polymer, and/or derivative thereof, as described herein in greater detail.

In certain embodiments, the electrochemically active material is a solid material that is insoluble in both organic and/or aqueous media through strong intermolecular hydrogen bonding and/or donor-acceptor $\pi$-$\pi$ interactions. Advantageously, the fused aromatic system may, in some embodiments, exhibit excellent charge-storage capacities and ion (e.g., lithium ion, sodium ion) diffusivities in various electrolytes (e.g., organic electrolytes, aqueous electrolytes, and/or solid electrolytes). Without wishing to be bound by theory, the advantageous properties of the fused aromatic system may be associated with electronic delocalization and facile ion transport, which may be facilitated by the dense presence of redox-active groups in the aromatic backbone and/or an alternating arrangement of electron donor and electron acceptor aromatic rings in the fused aromatic system.

According to some embodiments, the fused aromatic system comprises carbon atoms and/or hydrogen atoms. In certain embodiments, the fused aromatic system comprises one or more heteroatoms replacing a carbon atom. Examples of suitable heteroatoms include, but are not limited to, nitrogen (N), oxygen (O), sulfur (S), and/or selenium (Se).

The fused aromatic system may have any of a variety of suitable ratios of carbon atoms to heteroatoms (e.g., N atoms, O atoms, S atoms, Se atoms, etc.). Without wishing to be bound by theory, a relatively low ratio of carbon atoms to heteroatoms (e.g., less than 2) advantageously provides a system with more redox-active sites as compared to a system

with a high ratio of carbon atoms to heteroatoms (e.g., greater than 2) that is otherwise equivalent, thereby providing sufficient transport pathways for electric and/or ionic charges through the bulk of the material. In certain embodiments, for example, the fused aromatic system comprises a relatively high number of redox-active sites, including, but not limited to, carbonyl groups, amine groups, and/or imine groups. The presence of heteroatoms in the fused aromatic system may also advantageously provide an alternating arrangement of electron donor and electron acceptor aromatic rings, therefore facilitating the transport of electric and/or ionic charges through the bulk of the material.

In some embodiments, the ratio of carbon atoms to heteroatoms in the fused aromatic system is greater than 1, greater than or equal to 1.1, greater than or equal to 1.2, greater than or equal to 1.3, greater than or equal to 1.4, greater than or equal to 1.5, greater than or equal to 1.6, greater than or equal to 1.7, greater than or equal to 1.8, or greater than or equal to 1.9. In certain embodiments, the ratio of carbon atoms to heteroatoms in the fused aromatic system is less than 2, less than or equal or equal to 1.9, less than or equal to 1.8, less than or equal to 1.7, less than or equal to 1.6, less than or equal to 1.5, less than or equal to 1.4, less than or equal to 1.3, less than or equal to 1.2, or less than or equal to 1.1. Combinations of the above recited ranges are also possible (e.g., the ratio of carbon atoms to heteroatoms in the fused aromatic system is greater than 1 and less than 2, the ratio of carbon atoms to heteroatoms in the fused aromatic system is greater than or equal to 1.2 and less than or equal to 1.4). Other ranges are also possible.

In certain embodiments, the ratio of carbon atoms to heteroatoms in the fused aromatic system is determined by structural and/or elemental analyses.

In certain embodiments, at least a portion of the fused aromatic system may be interconnected via one or more hydrogen bonding interactions. In some embodiments, for example, at least a portion of the *bis*-tetraamino-benzoquinone molecules and/or the dimers, tautomers, oligomers, polymers, and/or derivatives thereof interact with each other in a planar and/or two-dimensional configuration via hydrogen bonding. According to some embodiments, the hydrogen bonding interactions are between one or more hydrogen atoms and one more oxygen atoms (e.g., of a carbonyl group) and/or one or more nitrogen atoms (e.g., of an amine group and/or imine group). Without wishing to be bound by theory, interconnection of the fused aromatic system via hydrogen bonding interactions may advantageously facilitate electronic charge delocalization and diffusion of ionic charges through the fused aromatic system, in accordance with certain embodiments. In some embodiments, interconnection of the fused aromatic system via hydrogen bonding advantageously results in a solid material that is insoluble in organic and aqueous media, thereby providing a material suitable for use in electrodes.

The fused aromatic system may have any of a variety of suitable hydrogen bonding interactions. In some embodiments, for example, the fused aromatic system comprises greater than or equal to 0.1, greater than or equal to 0.2, greater than or equal to 0.3, greater than or equal to 0.4, greater than or equal to 0.5, greater than or equal to 0.6, greater than or equal to 0.7, greater than or equal to 0.8, or greater than or equal to 0.9 hydrogen bonds per mole of carbon atoms in the fused aromatic system. In certain embodiments, the fused aromatic system comprises less than or equal to 1, less than or equal to 0.9, less than or equal to 0.8, less than or equal to 0.7, less than or equal to 0.6, less than or equal to 0.5, less than or equal to 0.4, less than or equal to 0.3, or less than or equal to 0.2 hydrogen bonds per mole of carbon atoms in the fused aromatic system. Combinations of the above recited ranges are also possible (e.g., the number of hydrogen bonding interactions in the fused aromatic system is between greater than or equal to 0.1 and less than or equal to 1 hydrogen bonds per mole of carbon atoms in the fused aromatic system, the number of hydrogen bonding interactions in the fused aromatic system is between greater than or equal to 0.5 and less than or equal to 0.6 hydrogen bonds per mole of carbon atoms in the fused aromatic system). Other ranges are also possible.

In certain embodiments, the number of hydrogen bonding interactions in the fused aromatic system is determined by structural and/or elemental analysis.

The fused aromatic system may have any of a variety of suitable $\pi$-$\pi$ interactions (e.g., donor-acceptor $\pi$-$\pi$ interactions). For example, in certain embodiments, at least a portion of the fused aromatic system is configured in a stacked and/or three-dimensional configuration via one or more $\pi$-$\pi$ interactions. Without wishing to be bound by theory, interconnection of the fused aromatic system via $\pi$-$\pi$ interactions may advantageously facilitate electronic charge delocalization and diffusion of ionic charges through the fused aromatic system, in accordance with certain embodiments. In some embodiments, interconnection of the fused aromatic system via $\pi$-$\pi$ interactions advantageously results in a solid material that is insoluble in organic and aqueous media, thereby providing a suitable material for use in electrodes.

In some embodiments, the average interlayer distance between the portion of the fused aromatic system configured in a stacked and/or three-dimensional configuration via one or more $\pi$-$\pi$ interactions is greater than or equal to 2 Å, greater than or equal to 2.5 Å, greater than or equal to 3 Å, or greater than or equal to 3.5 Å. In certain embodiments, the average interlayer distance between the portion of the fused aromatic system configured in a stacked and/or three-dimensional configuration via one or more $\pi$-$\pi$ interactions is less than or equal to 4 Å, less than or equal to 3.5 Å, less than or equal to 3 Å, or less than or equal to 2.5 Å. Combinations of the above recited ranges are also possible (e.g., the average interlayer distance between the portion of the fused aromatic system configured in a stacked and/or three-dimensional configuration via one or more $\pi$-$\pi$ interactions is greater than or equal to 2 Å and less than or equal to 4 Å, the average interlayer distance between the portion of the fused aromatic system configured in a stacked and/or three-dimensional

configuration via one or more π-π interactions is greater than or equal to 3 Å and less than or equal to 3.5 Å). Other ranges are also possible.

In certain embodiments, the average interlayer distance between the portion of the fused aromatic system configured in a stacked and/or three-dimensional configuration via one or more π-π interactions is determined by structural analysis and/or microscopic methods.

As described herein, the electrochemically active material may, in certain embodiments, have a low solubility in organic and/or aqueous solvents (e.g., at ambient temperature and pressure) due at least in part to the hydrogen bonding interactions and/or π-π interactions of the fused aromatic system. In accordance with some embodiments, it is advantageous for the electrochemically active material to have a low solubility in organic and aqueous solvents, as the electrochemically active material may be used as an electrode and/or electrode material.

The fused aromatic system may have any of a variety of suitable solubilities in organic and/or aqueous solvents. In certain embodiments, for example, the fused aromatic system has a solubility less than or equal to 2 millimoles per liter of solvent (e.g., an organic solvent and/or an aqueous solvent), less than or equal to 1.5 millimoles per liter of solvent, less than or equal to 1 millimole per liter of solvent, less than or equal to 0.5 millimoles per liter of solvent, or less. According to some embodiments, the fused aromatic system has a solubility greater than 0 millimoles per liter of solvent (e.g., an organic solvent and/or an aqueous solvent), greater than or equal to 0.1 millimoles per liter of solvent, greater than or equal to 0.5 millimoles per liter of solvent, greater than or equal to 1 millimole per liter of solvent, or greater than or equal to 1.5 millimoles per liter of solvent. Combinations of the above recited ranges are possible (e.g., the fused aromatic system has a solubility less than or equal to 2 millimoles per liter of solvent and greater than 0 millimoles per liter of solvent, the fused aromatic system has a solubility greater than or equal to 0.5 millimoles per liter of solvent and less than or equal to 1.5 millimoles per liter of solvent). Other ranges are also possible.

As described herein, the electrochemically active material may comprise a *bis*-tetraamino-benzoquinone molecule and/or a dimer, tautomer, oligomer, polymer, and/or derivative thereof, in accordance with certain embodiments. In some embodiments, for example, the electrochemically active material comprises a molecule of the structure (and/or a plurality of molecules of the structure):

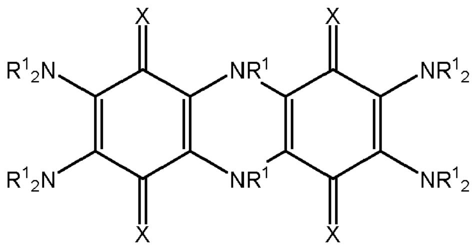
,

wherein each X comprises O, S, Se, or $NR^1$, and wherein each $R^1$ is the same or different and is selected from the group consisting of hydrogen (-H), an optionally substituted - $C_1$-$C_{10}$ alkyl group (e.g., $-CH_3$), an optionally substituted $-C_2$-$C_{10}$ alkenyl group (e.g., - $CH=CH_2$), and/or an optionally substituted $-C_2$-$C_{10}$ alkynyl group (e.g., -C=CH).

Dimers, tautomers, and/or isomers of the structure shown above are also possible, in some embodiments.

In certain embodiments, the electrochemically active material comprises a molecule of the structure (and/or a plurality of molecules of the structure):

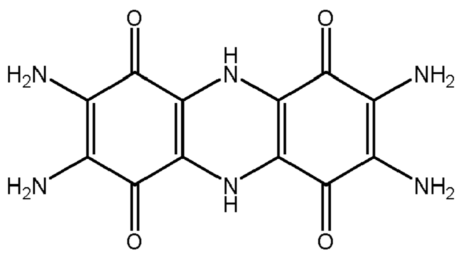
.

Dimers, tautomers, and/or isomers of the structure shown above are also possible, in some embodiments.

According to certain embodiments, the electrochemically active material is synthesized from a tetraamino-*p*-benzoquinone molecule and/or a derivative thereof. In some embodiments, for example, the electrochemically active material is synthesized from a molecule of the structure:

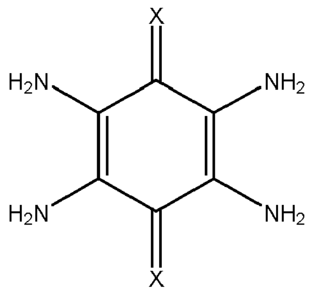

,

wherein each X comprises O, S, Se, or $NR^1$, and wherein each $R^1$ is the same or different and is selected from the group consisting of hydrogen (-H), an optionally substituted - $C_1$-$C_{10}$ alkyl group (e.g., $-CH_3$), an optionally substituted $-C_2$-$C_{10}$ alkenyl group (e.g., - $CH=CH_2$), and/or an optionally substituted $-C_2$-$C_{10}$ alkynyl group (e.g., -C=CH).

Tetraamino-*p*-benzoquinone may be purchased commercially and/or synthesized using techniques known to a person of ordinary skill in the art. According to some embodiments, the electrochemically active material is synthesized from tetraamino-*p*-benzoquinone and/or a derivative thereof via a one-step Michael addition and elimination with a loss of ammonia.

According to certain embodiments, the electrochemically active material comprises an oligomer and/or polymer of a *bis*-tetraamino-benzoquinone molecule and/or a derivative thereof (and/or a plurality of oligomers and/or polymers of a *bis*-tetraamino-benzoquinone molecule and/or a derivative thereof).

The oligomer and/or polymer of the *bis*-tetraamino-benzoquinone molecule and/or the derivative thereof may have any of a variety of suitable forms. In some embodiments, for example, the oligomer and/or polymer of the *bis*-tetraamino-benzoquinone molecule and/or the derivative thereof is of the structure:

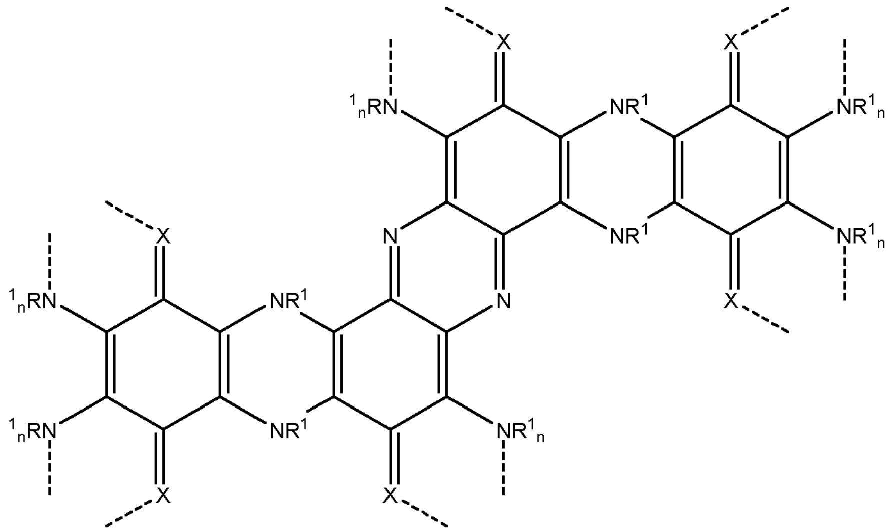

,

wherein each dotted line independently represents either a bond of another aromatic ring of the fused aromatic system or a terminal end of the fused aromatic system. In some embodiments wherein a dotted line represents a bond of another aromatic ring of the fused aromatic system, X comprises N, $R^1$ comprises hydrogen (-H), an optionally substituted $C_1$-$C_{10}$ alkyl group (e.g., $-CH_3$), an optionally substituted $-C_2$-$C_{10}$ alkenyl group (e.g., $-CH=CH_2$), and/or an optionally substituted $-C_2$-$C_{10}$ alkynyl group (e.g., - C=CH), and n is 1. In certain embodiments wherein a dotted line represents a terminal end of the fused aromatic system, X comprises O, S, Se, or $NR^1$, $R^1$ comprises hydrogen (-H), an optionally substituted $C_1$-$C_{10}$ alkyl group (e.g., $-CH_3$), an optionally substituted $-C_2$-$C_{10}$ alkenyl group (e.g., $-CH=CH_2$), and/or an optionally substituted $-C_2$-$C_{10}$ alkynyl group (e.g., -C=CH), and n is 2. Tautomers and/or isomers of the structure shown above are also possible, in some embodiments.

As would generally be understood by a person of ordinary skill in the art, in certain embodiments wherein a dotted line represents a bond of another aromatic ring of the fused aromatic system, the fused aromatic system may continue to extend, via one or more fused aromatic rings, beyond the aromatic ring formed by the bond represented by the dotted line.

In some embodiments, the oligomer and/or polymer of the *bis*-tetraamino-benzoquinone molecule and/or the derivative thereof is of the structure:

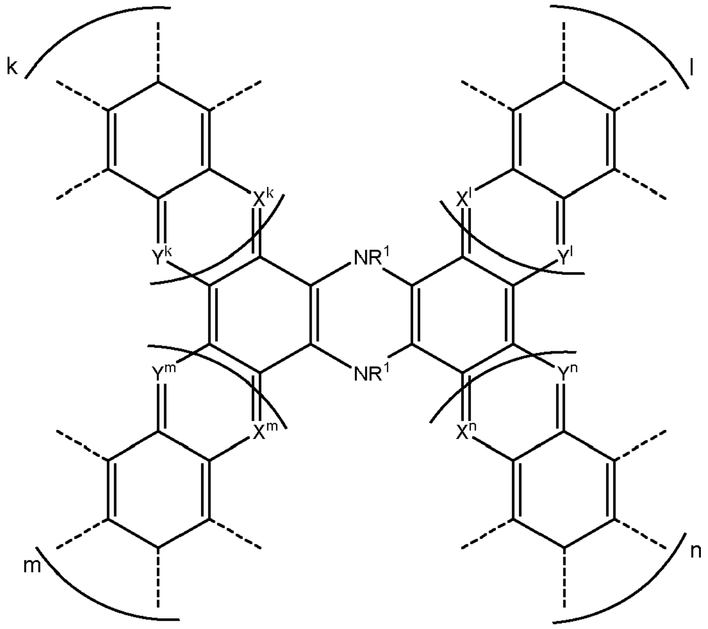

,

wherein when k is greater than 0, $X^k$ and $Y^k$ are N; when k is 0, $X^k$ is O and $Y^k$ is $NR^1$; when 1 is greater than 0, $X^1$ and $Y^1$ are N; when 1 is 0, $X^1$ is O and $Y^1$ is $NR^1$; when m is greater than 0, $X^m$ and $Y^m$ are N; when m is 0, $X^m$ is O and $Y^m$ is $NR^1$; when n is greater than 0, $X^n$ and $Y^n$ are N; when n is 0, $X^n$ is O and $Y^n$ is $NR^1$, and wherein $R^1$ comprises hydrogen (-H), an optionally substituted $C_1$-$C_{10}$ alkyl group (e.g., $-CH_3$), an optionally substituted $-C_2$-$C_{10}$ alkenyl group (e.g., $-CH=CH_2$), and/or an optionally substituted $-C_2$-$C_{10}$ alkynyl group (e.g., -C=CH).

In some non-limiting embodiments, the oligomer and/or polymer of the *bis*-tetraamino-benzoquinone molecule and/or the derivative thereof if of the structure:

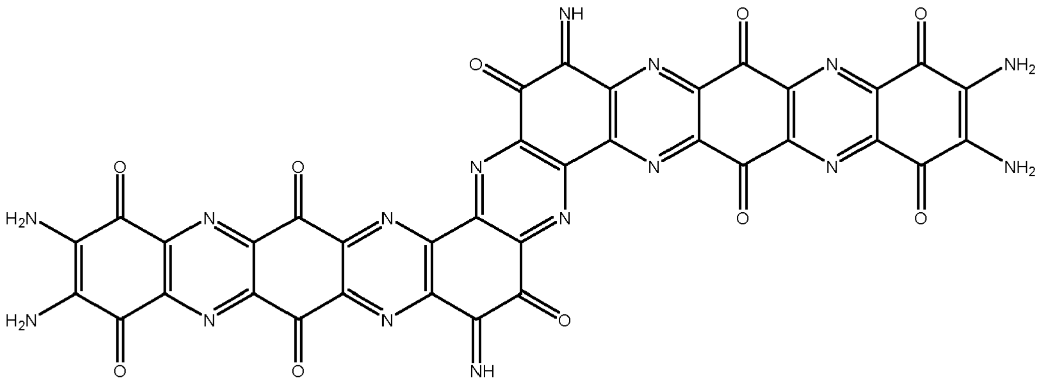

,

or

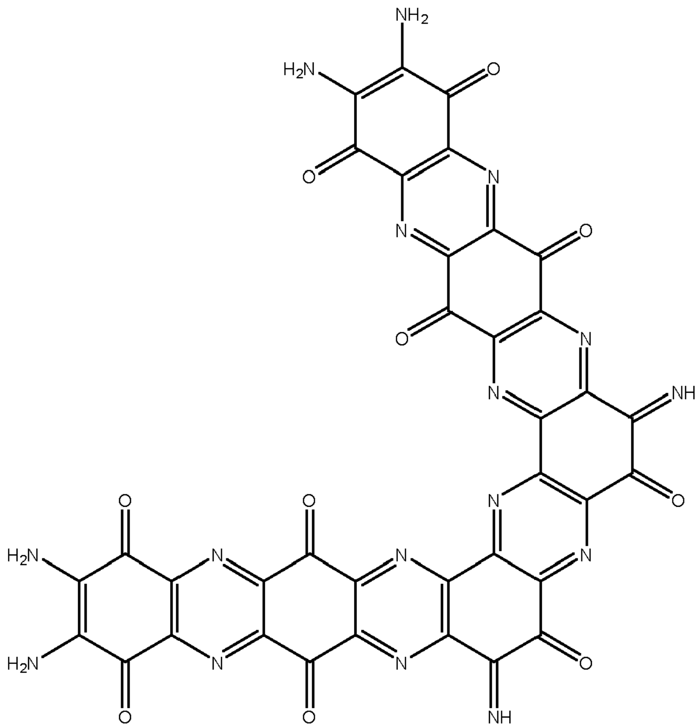

.

Tautomers and/or other isomers of the structures shown above are also possible.

The structure of the oligomer and/or polymer of the *bis*-tetraamino-benzoquinone molecule and/or the derivative thereof may be determined, in some embodiments, based on elemental analysis, matrix-assisted laser desorption/ionization-time of flight (MALDI-TOF) mass spectrometry, and/or X-ray photoelectron spectroscopy.

According to certain embodiments, the oligomer and/or polymer of the *bis*-tetraamino-benzoquinone molecule and/or the derivative thereof is synthesized via polycondensation of a *bis*-tetraamino-benzoquinone molecule and/or a derivative thereof in the presence of heat with a loss of water. In some embodiments, the polycondensation reaction is a ladderization reaction.

In some embodiments, an electrochemically active material consists only of the *bis*-tetraamino-benzoquinone molecule and/or the dimer, tautomer, oligomer, polymer, and/or derivative thereof, and does not include any additional materials.

According to certain embodiments, a composite is described. In some embodiments, the composite comprises: (i) an electrochemically active material comprising a *bis*-tetraamino-benzoquinone molecule and/or the dimer, tautomer, oligomer, polymer, and/or derivative thereof; and (ii) at least one carbon nanostructure. In certain embodiments, the composite can be used as an electrode, which itself can be configured for use in an electrochemical cell (e.g., a battery).

In some embodiments, the composite primarily or entirely comprises one or more organic materials. The organic composite advantageously offers structural tunability and synthetic feasibility for diverse designs of various electrode materials that utilize earth-abundant elements. As described herein in greater detail, conventional organic materials have poor intrinsic electrical conductivity, limited electronic delocalization, and/or high solubility in electrolytes, therefore providing inferior electrochemical performances. Organic composites as described herein, however, may be an insoluble organic material that exhibits enhanced charge transport, ion transport, and/or charge storage as compared to conventional organic materials.

The composite may comprise a relatively limited quantity of metal atoms. For example, in some embodiments, the composite comprises at most a trace amount of transition metals (e.g., nickel (Ni) and/or cobalt (Co)). In some embodiments, the composite comprises one or more transition metals (e.g., Ni and/or Co) in a total amount less than or equal to 5 wt.%, less than or equal to 2 wt.%, less than or equal to 1 wt.%, less than or equal to 0.5 wt.%, less than or equal to 0.2 wt.%, less than or equal to 0.1 wt.%, less than or equal to 0.05 wt.%, less than or equal to 0.02 wt.%, less than or equal to 0.01 wt.%, or less, based on a total weight of the composite. In certain embodiments, the composite comprises one or more transition metals (e.g., Ni and/or Co) in a total amount greater than or equal to 0.001 wt.%, greater than or equal to 0.01 wt.%, greater than or equal to 0.02 wt.%, greater than or equal to 0.05 wt.%, greater than or equal to 0.1 wt.%, greater than or equal to 0.2 wt.%, greater than or equal to 0.5 wt.%, greater than or equal to 1 wt.%, or greater than or equal to 2 wt.% based on a total weight of the composite. Combinations of the above recited ranges are possible (e.g., the composite comprises one or more transition metals in a total amount less than or equal to 5 wt.% and greater than or equal to 0.001 wt.% based on a total weight of the composite, the composite comprises one or more transition metals in a total amount

less than or equal to 0.2 wt.% and greater than or equal to 0.1 wt.% based on a total weight of the composite). Other ranges are also possible.

The composite may have any of a variety of suitable electrical conductivities. According to some embodiments, one or more components of the composite (e.g., at least one carbon nanostructure) may advantageously provide an increase in conductivity as compared to the conductivity of the electrochemically active material. In certain embodiments, the composite has an electrical conductivity greater than or equal to $10^{-6}$ S/cm, greater than or equal to $10^{-5}$ S/cm, greater than or equal to $10^{-4}$ S/cm, greater than or equal to $10^{-3}$ S/cm, greater than or equal to $10^{-2}$ S/cm, or greater than or equal to $10^{-1}$ S/cm. In some embodiments, the composite has an electrical conductivity less than or equal to 1 S/cm, less than or equal to $10^{-1}$ S/cm, less than or equal to $10^{-2}$ S/cm, less than or equal to $10^{-3}$ S/cm, less than or equal to $10^{-4}$ S/cm, or less than or equal to $10^{-5}$ S/cm. Combinations of the above recited ranges are possible (e.g., the composite has an electrical conductivity greater than or equal to $10^{-6}$ S/cm and less than or equal to 1 S/cm, the composite has an electrical conductivity greater than or equal to $10^{-4}$ S/cm and less than or equal to $10^{-2}$ S/cm). Other ranges are also possible.

In certain embodiments, the electrical conductivity of the composite is measured using an electrical conductivity meter.

According to some embodiments, the composite can be used as an electrode and/or electrode material. In certain embodiments, for example, the composite itself, and/or the composite in conjunction with one or more other materials with which it can be compounded, synthesized, or otherwise combined, provides the requisite level of cohesiveness, structural self-support, electronic and/or ionic conductivity, and/or other features recognized as useful for use as an electrode and/or electrode material. In some embodiments, the electrode and/or electrode material is configured for use in an electrochemical cell (e.g., a battery). For example, in certain embodiments, the electrode and/or electrode material has requisite properties for connection to a circuit (which can connect to another electrode in the electrochemical cell), interface with an electrolyte (e.g., a liquid and/or solid electrolyte) without damage and/or degradation, and/or the like.

As described herein in greater detail, the composite may comprise an electrochemically active material comprising a *bis*-tetraamino-benzoquinone molecule and/or the dimer, tautomer, oligomer, polymer, and/or derivative thereof, in accordance with certain embodiments. The composite may comprise the electrochemically active material in any of a variety of suitable amounts. In some embodiments, the composite comprises the electrochemically active material in an advantageously high amount, thereby exhibiting desirable conductivities without a loss in one or more performance metrics (e.g., discharge capacity and/or charge capacity, as described herein in greater detail) when the composite is used as an electrode and/or electrode material in an electrochemical cell (e.g., a battery). In certain embodiments, for example, the composite comprises the electrochemically active material in an amount greater than or equal to 50 wt.%, greater than or equal to 60 wt.%, greater than or equal to 70 wt.%, greater than or equal to 80 wt.%, greater than or equal to 90 wt.%, greater than or equal to 95 wt.%, greater than or equal to 98 wt.%, or greater than or equal to 99 wt.% versus a total weight of the composite. In some embodiments, the composite comprises the electrochemically active material in an amount less than or equal to 99.9 wt.%, less than or equal to 99 wt.%, less than or equal to 98 wt.%, less than or equal to 95 wt.%, less than or equal to 90 wt.%, less than or equal to 80 wt.%, less than or equal to 70 wt.%, or less than or equal to 60 wt.% versus a total weight of the composite. Combinations of the above recited ranges are possible (e.g., the composite comprises the electrochemically active material in an amount greater than or equal to 50 wt.% and less than or equal to 99.9 wt.% versus a total weight of the composite, the composite comprises the electrochemically active material in an amount greater than or equal to 95 wt.% and less than or equal to 99 wt.% versus a total weight of the composite). Other ranges are also possible.

According to some embodiments, the composite comprises at least one nanostructure (e.g., carbon nanostructure). In certain embodiments, the composite comprises a plurality of nanostructures (e.g., a plurality of carbon nanostructures). The term "nanostructure" is used herein in a manner consistent with its ordinary meaning in the art and refers to a structure that has a characteristic dimension, such as a cross-sectional diameter, or other appropriate dimension, that is greater than or equal to 1 nanometer and less than 1 micrometer. In some embodiments, the nanostructure has at least one characteristic dimension of less than 750 nm, less than 500 nm, less than 250 nm, less than 100 nm, less than 75 nm, less than 50 nm, less than 25 nm, less than 10 nm, or, in some cases, less than 5 nm.

In certain embodiments, the at least one nanostructure comprises at least one carbon-based nanostructure (i.e., at least one nanostructure that is at least 50 atomic percent (at.%) carbon and, in some cases, can be at least 60 at.%, at least 70 at.%, at least 80 at.%, at least 90 at.%, at least 95 at.%, at least 99 at.%, or more carbon). According to some embodiments, the at least one carbon-based nanostructure is electrically conductive. Suitable carbon-based nanostructures are described herein in greater detail.

The composite may comprise at least one carbon nanostructure in any of a variety of suitable amounts. In some embodiments, the composite comprises the at least one carbon nanostructure in an advantageously small amount, thereby exhibiting desirable conductivities without a loss in one or more performance metrics (e.g., discharge capacity and/or charge capacity, as described herein in greater detail) when the composite is used as an electrode and/or electrode material in an electrochemical cell (e.g., a battery). In certain embodiments, for example, the composite comprises the at least one carbon nanostructure in an amount greater than or equal to 0.1 wt.%, greater than or equal to 1 wt.%, greater than

or equal to 2 wt.%, greater than or equal to 5 wt.%, greater than or equal to 10 wt.%, or greater than or equal to 20 wt.% versus a total weight of the composite. In some embodiments, the composite comprises the at least one carbon nanostructure in an amount less than or equal to 30%, less than or equal to 20 wt.%, less than or equal to 10 wt.%, less than or equal to 5 wt.%, less than or equal to 2 wt.%, or less than or equal to 1 wt.% versus a total weight of the composite. Combinations of the above recited ranges are possible (e.g., the composite comprises the at least one carbon nanostructure in an amount greater than or equal to 0.1 wt.% and less than or equal to 30 wt.% versus a total weight of the composite, the composite comprises the at least one carbon nanostructure in an amount greater than or equal to 1 wt.% and less than or equal to 5 wt.% versus a total weight of the composite). Other ranges are also possible.

In certain embodiments, at least a portion of the at least one carbon nanostructure (e.g., at least a portion of the plurality of carbon nanostructures) may be functionalized with one or more functional groups. The at least one carbon nanostructure may comprise any of a variety of suitable functional groups. In certain embodiments, for example, the at least one carbon nanostructure is functionalized with an aldehyde (-C(O)H) group, a ketone (-C(O)$R^1$) group, an amide (-C(O)N$R^2R^3$) group, a hydroxyl (-OH) group, a carboxylic acid (-C(O)OH), an amine (-N$R^2R^3$) group, a thiol (-SH) group, a halogen group (e.g., a bromine (-Br) group, a chlorine (-Cl), a fluorine (-F) group), and/or combinations thereof. In certain embodiments, $R^1$ comprises an optionally substituted - $C_1$-$C_{10}$ alkyl group (e.g., -$CH_3$), an optionally substituted -$C_2$-$C_{10}$ alkenyl group (e.g., - CH=$CH_2$), an optionally substituted -$C_2$-$C_{10}$ alkynyl group (e.g., -C=CH), and/or an optionally substituted aryl group. In some embodiments, $R^2$ and $R^3$ are the same or different and comprise hydrogen (-H), an optionally substituted -$C_1$-$C_{10}$ alkyl group (e.g., -$CH_3$), an optionally substituted -$C_2$-$C_{10}$ alkenyl group (e.g., -CH=$CH_2$), an optionally substituted -$C_2$-$C_{10}$ alkynyl group (e.g., -C=CH), and/or an optionally substituted aryl group. Other functional groups are also possible.

According to certain embodiments, the *bis*-tetraamino-benzoquinone molecule and/or the dimer, tautomer, oligomer, polymer, and/or derivative thereof may interact with the at least one carbon nanostructure via one or more hydrogen bonding interactions (e.g., intermolecular hydrogen bonding interactions). In certain embodiments, for example, one or more hydrogen atoms, one or more oxygen atoms (e.g., of a carbonyl group), and/or one or more nitrogen atoms (e.g., of an amine group and/or an imine group) of the *bis*-tetraamino-benzoquinone molecule and/or the dimer, tautomer, oligomer, polymer, and/or derivative thereof interact with one or more functional groups of the at least one carbon nanostructure via one or more hydrogen bonding interactions. In certain non-limiting embodiments, for example, one or more hydrogen atoms (e.g., of an amine group) of the bis-tetraamino-benzoquinone molecule and/or the dimer, tautomer, oligomer, polymer, and/or derivative thereof interact with one or more oxygen atoms of a functional group (e.g., an oxygen of a carbonyl group of a carboxylic acid functional group) of the at least one carbon nanostructure. In some non-limiting embodiments, one or more oxygen atoms (e.g., of a carbonyl group) of the *bis*-tetraamino-benzoquinone molecule and/or the dimer, tautomer, oligomer, polymer, and/or derivative thereof interact with one or more hydrogen atoms (e.g., a hydrogen atom of a hydroxyl group of a carboxylic acid functional group) of the at least one carbon nanostructure. Other hydrogen bonding interactions between the *bis*-tetraamino-benzoquinone molecule and/or the dimer, tautomer, oligomer, polymer, and/or derivative thereof and the at least one carbon nanostructure are also possible.

According to certain embodiments, the *bis*-tetraamino-benzoquinone molecule and/or the dimer, tautomer, oligomer, polymer, and/or derivative thereof may interact with the at least one carbon nanostructure via one or more $\pi$-$\pi$ interactions (e.g., one or more intermolecular $\pi$-$\pi$ stacking interactions). For example, in some embodiments, at least a portion of the fused aromatic system of the *bis*-tetraamino-benzoquinone molecule and/or the dimer, tautomer, oligomer, polymer, and/or derivative thereof may interact with one or more six-membered aromatic carbon rings in the at least one carbon nanotube via one or more $\pi$-$\pi$ interactions.

In certain embodiments, the one or more hydrogen bonding interactions and/or the one or more $\pi$-$\pi$ interactions between the *bis*-tetraamino-benzoquinone molecule and/or the dimer, tautomer, oligomer, polymer, and/or derivative thereof and the carbon nanostructure (e.g., functionalized carbon nanostructure) advantageously results in the *bis*-tetraamino-benzoquinone molecule and/or the dimer, tautomer, oligomer, polymer, and/or derivative thereof being evenly wrapped and interconnected by the carbon nanostructure (e.g., functionalized carbon nanostructure). In some embodiments, the one or more hydrogen bonding interactions and/or the one or more $\pi$-$\pi$ interactions between the *bis*-tetraamino-benzoquinone molecule and/or the dimer, tautomer, oligomer, polymer, and/or derivative thereof and the carbon nanostructure (e.g., functionalized carbon nanostructure) results in the composite being highly crystalline. Advantageously, a composite comprising an electrochemically active material comprising a *bis*-tetraamino-benzoquinone molecule and/or the dimer, tautomer, oligomer, polymer, and/or derivative thereof interacting with the at least one carbon nanostructure (e.g., functionalized carbon nanostructure) via one or more hydrogen bonding interactions and/or one or more $\pi$-$\pi$ interactions may exhibit enhanced electrochemical performance metrics (e.g., discharge capacity and/or charge capacity, as described herein in greater detail) as compared to the electrochemically active material alone and/or the electrochemically active material physically mixed with at least one carbon nanostructure, in accordance with certain embodiments.

The composite may comprise any of a variety of suitable nanostructures (e.g., carbon nanostructures). In some embodiments, for example, the composite comprises at least one carbon nanotube (CNT) (e.g., a plurality of CNTs). The

term "carbon nanotube" is used herein in a manner consistent with its ordinary meaning in the art and refers to a substantially cylindrical molecule or nanostructure comprising a fused network of primarily six-membered rings (e.g., six-membered aromatic rings) comprising primarily carbon atoms. In some embodiments, the composite comprises at least one single-walled CNT (SWCNT) (e.g., a plurality of SWCNT). In certain embodiments, the electrochemically active material comprises at least one multi-walled CNT (MWCNT) (e.g., a plurality of MWCNT). In some embodiments, the composite comprises at least one carbon nanofiber, at least one carbon nanowire, at least one carbon nanorod, or the like. Other carbon nanostructures are also possible.

According to certain embodiments, the composite is synthesized by exposing the at least one carbon nanostructure (e.g., the at least one functionalized carbon nanostructure) to a tetraamino-*p*-benzoquinone molecule and/or a derivative thereof. In certain embodiments, the tetraamino-*p*-benzoquinone molecule and/or a derivative thereof may interact with one or more functional groups of at the least one carbon nanostructure via one or more hydrogen bonding interactions (e.g., one or more intermolecular hydrogen bonding interactions). In some embodiments, the tetraamino-*p*-benzoquinone molecule and/or a derivative thereof may interact with the least one carbon nanostructure via one or more $\pi$-$\pi$ interactions (e.g., one or more intermolecular $\pi$-$\pi$ stacking interactions). In some embodiments, the tetraamino-*p*-benzoquinone molecule and/or a derivative thereof reacts via a one-step Michael addition and elimination with a loss of ammonia to form a composite comprising: (i) the *bis*-tetraamino-benzoquinone molecule and/or the dimer, tautomer, oligomer, polymer, and/or derivative thereof; and (ii) at least one carbon nanostructure.

As described in greater detail herein, the composite (e.g., the composite comprising: (i) the electrochemically active material comprising a *bis*-tetraamino-benzoquinone molecule and/or the dimer, tautomer, oligomer, polymer, and/or derivative thereof; (ii) at least one carbon nanostructure) may be used as an electrode and/or electrode material, in accordance with certain embodiments.

According to some embodiments, an electrochemical cell is described. In certain embodiments, the electrochemical cell is a battery. The battery may, in some embodiments, be a primary (e.g., single use) battery. In other embodiments, the battery is a secondary (e.g., rechargeable) battery. In certain embodiments, the battery is a lithium (Li)-ion battery. In other embodiments, the battery is a sodium (Na)-ion battery.

The electrochemical cell (e.g., battery) may have any of a variety of suitable structures and/or designs. Generally, an electrochemical cell comprises an electrode that includes an electrochemically active material, which can be a charge storage material. The electrochemical cell may comprise more than one electrode, for example, a first electrode (e.g., a cathode) and a second electrode (e.g., an anode), each electrode comprising an electrochemically active material. FIG. 1 shows a cross-sectional schematic diagram of electrochemical cell 101 (e.g., battery), in accordance with certain embodiments. In some embodiments, electrochemical cell 101 comprises first electrode 103 (e.g., a cathode) and second electrode 105 (e.g., an anode). In certain embodiments, electrochemical cell 101 comprises electrolyte 107 disposed between first electrode 103 and second electrode 105.

The electrochemical cell may, in some embodiments, comprise more than one electrochemically active material. In certain embodiments, for example, first electrode 103 is or comprises a first electrochemically active material and second electrode 107 is or comprises a second electrochemically active material. According to some embodiments, multiple electrochemically active materials can be provided in a single electrode. For example, in some embodiments, first electrode 103 is or comprises more than one electrochemically active material and/or second electrode 105 is or comprises more than one electrochemically active material.

In some embodiments, an electrochemically active material (and/or a composite comprising an electrochemically active material) as described herein may be used in first electrode 103 (e.g., a cathode) and/or in second electrode 105 (e.g., an anode), depending on the application. In some embodiments, the electrochemically active materials (and/or composites comprising an electrochemically active material) described herein perform particularly well when used as an electrochemically active material of a cathode. In certain embodiments, the electrochemically active materials (and/or composites comprising an electrochemically active material) described herein perform particularly well when used as an electrochemically active material of a cathode in a Na-ion secondary (e.g., rechargeable) battery.

The first electrode (e.g., cathode) may comprise any of a variety of suitable electrochemically active materials. In some embodiments, for example, the first electrode comprises an electrochemically active material comprising a *bis*-tetraamino-benzoquinone molecule and/or a dimer, tautomer, oligomer, polymer, and/or derivative thereof, as described herein. In some embodiments, the first electrode comprises a composite comprising: (i) an electrochemically active material comprising a *bis*-tetraamino-benzoquinone molecule and/or a dimer, tautomer, oligomer, polymer, and/or derivative thereof; and (ii) at least one carbon nanostructure. Other electrochemically active materials for the first electrode are also possible.

The second electrode (e.g., anode) may comprise any of a variety of suitable electrochemically active materials. In some embodiments, for example, the second electrode comprises an electrochemically active material comprising a *bis*-tetraamino-benzoquinone molecule and/or a dimer, tautomer, oligomer, polymer, and/or derivative thereof, as described herein. In certain embodiments, the second electrode comprises a composite comprising: (i) an electrochemically active material comprising a *bis*-tetraamino-benzoquinone molecule and/or a dimer, tautomer, oligomer, polymer,

and/or derivative thereof; and (ii) at least one carbon nanostructure.

According to some embodiments, the second electrode comprises a metal. Suitable metals include, but are not limited to, lithium (Li), sodium (Na), potassium (K), magnesium (Mg), zinc (Zn), calcium (Ca), aluminum (Al), and/or iron (Fe). Other electrochemically active materials for the second electrode are also possible.

An electrode (e.g., a first electrode and/or a second electrode) may include the electrochemically active material comprising a *bis*-tetraamino-benzoquinone molecule and/or a dimer, tautomer, oligomer, polymer, and/or derivative thereof in any of a variety of suitable amounts. In some embodiments, for example, an electrode comprises the electrochemically active material in an amount greater than or equal to 50 weight percent (wt.%), greater than or equal to 60 wt.%, greater than or equal to 70 wt.%, greater than or equal to 80 wt.%, greater than or equal to 90 wt.%, or greater than or equal to 95 wt.% versus a total weight of the electrode. In some embodiments, an electrode comprises the electrochemically active material in an amount less than or equal to 100 wt.%, less than or equal to 95 wt.%, less than or equal to 90 wt.%, less than or equal to 80 wt.%, less than or equal to 70 wt.%, or less than or equal to 60 wt.% versus a total weight of the electrode. Combinations of the above recited ranges are possible (e.g., an electrode comprises the electrochemically active material in an amount greater than or equal to 50 wt.% and less than or equal to 100 wt.% versus a total weight of the electrode, an electrode comprises the electrochemically active material in an amount greater than or equal to 80 wt.% and less than or equal to 90 wt.% versus a total weight of the electrode). Other ranges are also possible.

An electrode (e.g., a first electrode and/or a second electrode) may include the composite (e.g., a composite comprising: (i) the electrochemically active material comprising a bis-tetraamino-benzoquinone molecule and/or a dimer, tautomer, oligomer, polymer, and/or derivative thereof; and (ii) at least one carbon nanostructure) in any of a variety of suitable amounts. In some embodiments, for example, an electrode comprises the composite in an amount greater than or equal to 50 weight percent (wt.%), greater than or equal to 60 wt.%, greater than or equal to 70 wt.%, greater than or equal to 80 wt.%, greater than or equal to 90 wt.%, or greater than or equal to 95 wt.% versus a total weight of the electrode. In some embodiments, an electrode comprises the composite in an amount less than or equal to 100 wt.%, less than or equal to 95 wt.%, less than or equal to 90 wt.%, less than or equal to 80 wt.%, less than or equal to 70 wt.%, or less than or equal to 60 wt.% versus a total weight of the electrode. Combinations of the above recited ranges are possible (e.g., an electrode comprises the composite in an amount greater than or equal to 50 wt.% and less than or equal to 100 wt.% versus a total weight of the electrode, an electrode comprises the composite in an amount greater than or equal to 80 wt.% and less than or equal to 90 wt.% versus a total weight of the electrode. Other ranges are also possible.

According to certain embodiments, an electrode (e.g., a first electrode and/or a second electrode) comprises one or more binders, one or more conductive materials, and/or one or more dielectric materials. In certain embodiments, for example, an electrode comprises one or more binders, such as styrene-butadiene rubber. Other binders are also possible. In some embodiments, an electrode comprises one or more conductive materials that increase the conductivity of the electrode. In some embodiments, for example, an electrode comprises a conductive carbon material (e.g., graphite, graphene, and/or carbon black (CB)). Other conductive materials are also possible. In certain embodiments, an electrode comprises one or more dielectric materials, such as a dielectric polymer (e.g., polyvinylidene fluoride, carboxymethyl cellulose). Other dielectric materials are also possible.

The electrode may comprise the one or more binders, one or more conductive materials, and/or one or more dielectric materials in any of a variety of suitable amounts. In certain embodiments, for example, the electrode comprises the one or more binders, one or more conductive materials, and/or one or more dielectric materials in an amount greater than or equal to 1 wt.%, greater than or equal to 10 wt.%, greater than or equal to 20 wt.%, greater than or equal to 30 wt.%, or greater than or equal to 40 wt.% versus a total weight of the electrode. In some embodiments, the electrode comprises the one or more binders, one or more conductive materials, and/or one or more dielectric materials in an amount less than or equal to 50 wt.%, less than or equal to 40 wt.%, less than or equal to 30 wt.%, less than or equal to 20 wt.%, or less than or equal to 10 wt.% versus a total weight of the electrode. Combinations of the above recited ranges are possible (e.g., an electrode comprises the one or more binders, one or more conductive materials, and/or one or more dielectric materials in an amount greater than or equal to 1 wt.% and less than or equal to 50 wt.% versus a total weight of the electrode, an electrode comprises the one or more binders, one or more conductive materials, and/or one or more dielectric materials in an amount greater than or equal to 10 wt.% and less than or equal to 20 wt.% versus a total weight of the electrode). Other ranges are also possible.

In some embodiments, an electrode consists only of one or more electrochemically active materials (and/or one or more composites comprising the electrochemically active material), and does not include any additional materials (e.g., one or more binders, one or more conductive materials, and/or one or more dielectric materials).

The first electrode (e.g., the cathode) may have any of a variety of suitable thicknesses. Referring, for example, to FIG. 1, first electrode 103 has thickness 110a. In some embodiments, the first electrode has a thickness less than or equal to 2000 micrometers, less than or equal to 1500 micrometers, less than or equal to 1000 micrometers, less than or equal to 500 micrometers, less than or equal to 100 micrometers, less than or equal to 50 micrometers, less than or equal to 25 micrometers, less than or equal to 10 micrometers, less than or equal to 5 micrometers, or less. In certain embodiments,

the first electrode has a thickness greater than or equal to 1 micrometer, greater than or equal to 5 micrometers, greater than or equal to 10 micrometers, greater than or equal to 25 micrometers, greater than or equal to 50 micrometers, greater than or equal to 100 micrometers, greater than or equal to 500 micrometers, greater than or equal to 1000 micrometers, greater than or equal to 1500 micrometers, or more. Combinations of the above recited ranges are possible (e.g., the first electrode has a thickness less than or equal to 2000 micrometers and greater than or equal to 1 micrometer, the first electrode has a thickness less than or equal to 1000 micrometers and greater than or equal to 500 micrometers). Other ranges are also possible.

The second electrode (e.g., the anode) may have any of a variety of suitable thicknesses. Referring, for example, to FIG. 1, second electrode 105 has thickness 110b. In some embodiments, the second electrode has a thickness less than or equal to 2000 micrometers, less than or equal to 1500 micrometers, less than or equal to 1000 micrometers, less than or equal to 500 micrometers, less than or equal to 100 micrometers, less than or equal to 50 micrometers, less than or equal to 25 micrometers, less than or equal to 10 micrometers, less than or equal to 5 micrometers, or less. In certain embodiments, the second electrode has a thickness greater than or equal to 1 micrometer, greater than or equal to 5 micrometers, greater than or equal to 10 micrometers, greater than or equal to 25 micrometers, greater than or equal to 50 micrometers, greater than or equal to 100 micrometers, greater than or equal to 500 micrometers, greater than or equal to 1000 micrometers, greater than or equal to 1500 micrometers, or more. Combinations of the above recited ranges are possible (e.g., the second electrode has a thickness less than or equal to 2000 micrometers and greater than or equal to 1 micrometer, the second electrode has a thickness less than or equal to 1000 micrometers and greater than or equal to 500 micrometers). Other ranges are also possible.

As described herein, the electrochemical cell may, in some embodiments, comprise an electrolyte. Referring to FIG. 1, for example, electrochemical cell 101 (e.g. battery) comprises electrolyte 107 disposed between first electrode 103 and second electrode 105. According to certain embodiments, the electrolyte can function as a medium for the storage and transport of ions (e.g., Li ions, Na ions) between electrodes of the electrochemical cell. Any of a variety of suitable liquid, solid, and/or gel materials capable of storing and transporting ions may be used, provided that the material facilitates the transport of ions between the first electrode (e.g., cathode) and the second electrode (e.g., anode). In some embodiments, the electrolyte is electronically nonconductive to prevent short circuiting between the electrodes. According to certain embodiments, the electrolyte comprises one or more liquid electrolyte solvents, gel polymer materials, and/or polymer materials. The electrolyte may, in some embodiments, comprise one or more ionic electrolyte salts (e.g., dissolved and/or suspended in one or more liquid electrolyte solvents) to provide and/or enhance ionic conductivity.

In some embodiments, the electrochemical chemical cell comprises a liquid electrolyte. The liquid electrolyte may, in some embodiments, comprise water. In some embodiments, the liquid electrolyte comprising water optionally includes one or more ionic electrolyte salts dissolved and/or suspended in the water. In certain embodiments, for example, the electrochemical cell comprises an aqueous liquid electrolyte system.

In certain embodiments, the liquid electrolyte comprises an organic, non-aqueous solvent comprising no water or only a trace amount of water. In some embodiments, for example, the liquid electrolyte comprises water in an amount greater than 0 wt.% and less than or equal to 5 wt.% versus a total weight of the liquid electrolyte. In some embodiments, the liquid electrolyte comprising an organic, non-aqueous solvent comprises one or more ionic electrolyte salts dissolved and/or suspended in the organic, non-aqueous solvent. In certain embodiments, for example, the electrochemical cell comprises a non-aqueous liquid electrolyte system. Suitable organic, non-aqueous electrolyte solvents include, but are not limited to, acetonitrile, carbonates (e.g., propylene carbonate (PC), ethylene carbonate (EC), dimethyl carbonate (DMC), diethyl carbonate (DEC)), 1,3-dioxolane (DOL), dimethoxyethane (DME), diethylene glycol dimethyl ether (diglyme), triethylene glycol dimethyl ether (TGDME), and/or tetraethylene glycol dimethyl ether (TEGDME). Other organic, non-aqueous electrolyte solvents are also possible.

The electrolyte may comprise any of a variety of suitable ionic electrolyte salts. In some embodiments, for example, an ionic electrolyte salt comprises a metal cation (e.g., $Li^+$, $Na^+$, $K^+$, and/or $Mg^{2+}$) in combination with an anion (e.g., chloride, hydrogen phosphate, carbonate, hexafluoroarsenate, hexafluorophosphate, perchlorate, tetrafluoroborate, tris(pentafluoroethyl)trifluorophosphate, trifluoromethanesulfonate, bis(fluorosulfonyl)imide, cyclo-difluoromethane-1,1-bis(sulfonyl)imide), bis(perfluoroethanesulfonyl)imide, bis(trifluoromethanesulfonyl)imide, bis(perfluoroethanesulfonyl)imide, bis(oxalate)borate, difluoro(oxalato)borate, bis(fluoromalonato)borate, tetracyanoborate, dicyanotriazolate, dicyano-trifluoromethyl-imidazole, and/or dicyano-pentafluoroethyl-imidazole). Other ionic electrolyte salts are also possible.

In some embodiments, the electrochemical cell comprises a separator, which can be configured to inhibit (e.g., prevent) physical contact between the first electrode and the second electrode, i.e., which can prevent short circuiting of the electrochemical cell. In some embodiments, the separator is disposed between the first electrode and the second electrode. For example, in certain embodiments, the separator is disposed in the electrolyte. The separator may comprise any of a variety of suitable materials. In some embodiments, for example, the separator comprises a polymeric material.

According to some embodiments, the electrochemical cell may also include one or more current collectors, external circuitry, a housing structure, and/or the like. Those of ordinary skill in the art would be aware of the many battery

arrangements that can be utilized with the general schematic arrangement as shown in the figures and described herein.

An electrochemical cell (e.g., battery) described herein may have any of a variety of suitable discharge capacities (and/or charge capacities, as noted below). The discharge capacity (and/or charge capacity) of the battery, as described herein, may be measured in milliampere hours per gram of the electrode (e.g., cathode) (mAh/g). In some embodiments, the discharge capacity (and/or charge capacity) of the battery depends on the current density of the battery. The current density of the battery, as described herein, may be measured in milliamperes per gram of the electrochemically active material in the electrode (e.g., cathode) (mA/g). For purposes of illustration, if a battery has a discharge capacity of 100 mAh/g when current density is set at a value of 1 mA/g, then, for 1 gram of the electrochemically active material, the battery will discharge 1 mA of current for 100 hours, and if a battery has a charge capacity of 100 mAh/g when current density is set at a value of 1 mA/g, then, for 1 gram of the electrochemically active material, the battery will charge 1 mA of current for 100 hours. As another example, if a battery has a discharge capacity of 200 mAh/g when current density is set at a value of 50 mA/g, then, for 1 gram of the electrochemically active material, the battery will discharge 50 mA of current for 4 hours, and if a battery has a charge capacity of 200 mA/g when current density is set at a value of 50 mA/g, then, for 1 gram of the electrochemically active material, the battery will charge 50 mA of current for 4 hours. The discharge capacities (and/or charge capacities) described herein are expressed in terms of a value of current density.

According to certain embodiments, the battery has an advantageously high discharge capacity per gram of the electrode (e.g., cathode) when current density is set at a certain value per gram of the electrochemically active material in the electrode (e.g. cathode). In some embodiments, for example, the battery has a discharge capacity greater than or equal to 125 mAh/g, greater than or equal to 150 mAh/g, greater than or equal to 175 mAh/g, greater than or equal to 200 mAh/g, greater than or equal to 225 mAh/g, greater than or equal to 250 mAh/g, or greater than or equal to 275 mAh/g when current density is set at a value of at least 1000 mA/g (e.g., at least 2000 mA/g, at least 5000 mA/g, at least 10000 mA/g, etc.). In certain embodiments, the battery has a discharge capacity less than or equal to 300 mAh/g, less than or equal to 275 mAh/g, less than or equal to 250 mAh/g, less than or equal to 225 mAh/g, less than or equal to 200 mAh/g, less than or equal to 175 mAh/g, or less than or equal to 150 mAh/g when current density is set at a value of at least 1000 mA/g (e.g., at least 2000 mA/g, at least 5000 mA/g, at least 10000 mA/g, etc.). Combinations of the above recited ranges are possible (e.g., the battery has a discharge capacity greater than or equal to 125 mAh/g and less than or equal to 300 mAh/g when current density is set at a value of at least 1000 mA/g, the battery has a discharge capacity greater than or equal to 200 mAh/g and less than or equal to 225 mAh/g when current density is set at a value of at least 1000 mA/g). Other ranges are also possible.

According to some embodiments, the battery has a discharge capacity greater than or equal to 125 mAh/g, greater than or equal to 150 mAh/g, greater than or equal to 175 mAh/g, greater than or equal to 200 mAh/g, greater than or equal to 225 mAh/g, greater than or equal to 250 mAh/g, or greater than or equal to 275 mAh/g when current density is set at a value of at least 5000 mA/g (e.g., at least 6000 mA/g, at least 7500 mA/g, at least 10000 mA/g, etc.). In certain embodiments, the battery has a discharge capacity less than or equal to 300 mAh/g, less than or equal to 275 mAh/g, less than or equal to 250 mAh/g, less than or equal to 225 mAh/g, less than or equal to 200 mAh/g, less than or equal to 175 mAh/g, or less than or equal to 150 mAh/g when current density is set at a value of at least 5000 mA/g (e.g., at least 6000 mA/g, at least 7500 mA/g, at least 10000 mA/g, etc.). Combinations of the above recited ranges are possible (e.g., the battery has a discharge capacity greater than or equal to 125 mAh/g and less than or equal to 300 mAh/g when current density is set at a value of at least 5000 mA/g, the battery has a discharge capacity greater than or equal to 225 mAh/g and less than or equal to 250 mAh/g when current density is set at a value of at least 5000 mA/g). Other ranges are also possible.

According to some embodiments, the battery has a discharge capacity greater than or equal to 100 mAh/g, greater than or equal to 125 mAh/g, greater than or equal to 150 mAh/g, greater than or equal to 175 mAh/g, greater than or equal to 200 mAh/g, greater than or equal to 225 mAh/g, greater than or equal to 250 mAh/g, or greater than or equal to 275 mAh/g when current density is set at a value of at least 10000 mA/g. In certain embodiments, the battery has a discharge capacity less than or equal to 300 mAh/g, less than or equal to 275 mAh/g, less than or equal to 250 mAh/g, less than or equal to 225 mAh/g, less than or equal to 200 mAh/g, less than or equal to 175 mAh/g, less than or equal to 150 mAh/g, or less than or equal to 125 mAh/g when current density is set at a value of at least 10000 mA/g. Combinations of the above recited ranges are possible (e.g., the battery has a discharge capacity greater than or equal to 100 mAh/g and less than or equal to 300 mAh/g when current density is set at a value of at least 10000 mA/g, the battery has a discharge capacity greater than or equal to 200 mAh/g and less than or equal to 225 mAh/g when current density is set at a value of at least 10000 mA/g). Other ranges are also possible.

The values in the preceding paragraphs may also apply to the charge capacity of the battery per gram of the electrode (e.g., cathode) when current density is set at a certain value per gram of the electrochemically active material in the electrode (e.g., cathode). For example, in certain embodiments, the battery has a charge capacity greater than or equal to 125 mAh/g and less than or equal to 300 mAh/g when current density is set at a value of at least 1000 mA/g. In some embodiments, the battery has a charge capacity greater than or equal to 125 mAh/g and less than or equal to 300 mAh/g when current density is set at a value of at least 5000 mA/g. In certain embodiments, the battery has a charge capacity

greater than or equal to 100 mAh/g and less than or equal to 300 mAh/g when current density is set at a value of at least 10000 mA/g. Other combinations of the values in the preceding paragraphs are also possible.

In some embodiments, the discharge capacity (and/or charge capacity) of the battery per gram of the electrode may be measured by a constant-current charge/discharge method, optionally with an additional constant voltage period after the constant-current charge/discharge method. In accordance with certain embodiments, the discharge capacity (and/or charge capacity) is calculated by: (i) multiplying the current (e.g., in milliamperes) and the time (e.g., in hours) used to discharge (and/or charge) the electrode, thereby yielding the discharge capacity (and/or charge capacity) of the battery (i.e., in mAh); and (ii) dividing the discharge capacity (and/or charge capacity) of the battery by the mass of the electrode (e.g., in grams), thereby yielding the discharge capacity (and/or charge capacity) of the battery per gram of the electrode (i.e., in mAh/g). For purposes of illustration, if a battery with a mass of an electrode equal to 1 gram is discharged (and/or charged) using a current of 50 mA, and the time used to discharge (and/or charge) the battery is 2 hours, then the calculated discharge capacity (and/or charge capacity) of the battery per gram of the electrode is 100 mAh/g. As another example, if a battery with a mass of an electrode equal to 1 gram is discharged (and/or charged) using a current of 200 mA, and the time used to discharge (and/or charge) the battery is 3 hours, then the calculated discharge capacity (and/or charge capacity) of the battery per gram of the electrode is 600 mAh/g.

As described herein in greater detail, the battery may be a secondary (e.g., rechargeable) battery, in accordance with certain embodiments. The battery may be capable of being cycled (e.g., discharged and charged) any of a variety of suitable number of times. In some embodiments, the battery is advantageously capable of being cycled a high number of times. For example, in some embodiments, the battery is capable of being cycled at least 100 times, at least 500 times, at least 1000 times, at least 2000 times, at least 3000 times, at least 4000 times, at least 5000 times, at least 6000 times, at least 7000 times, at least 8000 times, at least 9000 times, or more. In certain embodiments, the battery is capable of being cycled less than or equal to 10000 times, less than or equal to 9000 times, less than or equal to 8000 times, less than or equal to 7000 times, less than or equal to 6000 times, less than or equal to 5000 times, less than or equal to 4000 times, less than or equal to 3000 times, less than or equal to 2000 times, less than or equal to 1000 times, or less than or equal to 500 times. Combinations of the above recited ranges are possible (e.g., the battery is capable of being cycled at least 100 times and less than or equal to 10000 times, the battery is capable of being cycled at least 2000 times and less than or equal to 5000 times). Other ranges are also possible.

The discharge capacity of the battery per gram of the electrode (e.g., cathode) may decrease by any of a variety of suitable percentages after cycling the battery any of a variety of suitable number of times when current density is set at a certain value per gram of the electrochemically active material in the electrode (e.g., cathode). In certain embodiments, the discharge capacity of the battery per gram of the electrode (e.g., cathode) decreases by an advantageously small amount after cycling the battery. In some embodiments, for example, the discharge capacity of the battery per gram of the electrode (e.g., cathode) decreases by less than or equal to 30%, less than or equal to 20%, less than or equal to 10%, less or equal to 5%, or less than or equal to 1% after cycling the battery at least 100 times (e.g., at least 500 times, at least 1000 times, at least 2000 times, at least 3000 times, at least 4000 times, at least 5000 times, at least 6000 times, at least 7000 times, at least 8000 times, at least 9000 times, etc.) when current density is set at a value of at least 1000 mA/g (e.g., at least 2000 mA/g, at least 5000 mA/g, at least 10000 mA/g, etc.). In certain embodiments, the discharge capacity of the battery per gram of the electrode (e.g., cathode) decreases by greater than or equal to 0.1%, greater than or equal to 1%, greater than or equal to 5%, greater than or equal to 10%, or greater than or equal to 20% after cycling the battery at least 100 times (e.g., at least 500 times, at least 1000 times, at least 2000 times, at least 3000 times, at least 4000 times, at least 5000 times, at least 6000 times, at least 7000 times, at least 8000 times, at least 9000 times, etc.) when current density is set at a value of at least 1000 mA per gram of the electrochemically active material in the electrode (e.g., cathode) (e.g., at least 2000 mA/g, at least 5000 mA/g, at least 10000 mA/g, etc.). Combinations of the above recited ranges are possible (e.g., the discharge capacity of the battery per gram of the electrode decreases by less than or equal to 30% and greater than or equal to 0.1% after cycling the battery at least 100 times when current density is set at a value of at least 1000 mA per gram of the electrochemically active material in the electrode, the discharge capacity of the battery per gram of the electrode decreases by less than or equal to 10% and greater than or equal to 5% after cycling the battery at least 100 times when current density is set at a value of at least 1000 mA per gram of the electrochemically active material in the electrode). Other ranges are also possible.

The values in the preceding paragraph may also apply to the charge capacity of the battery per gram of the electrode (e.g., cathode). For example, in certain embodiments, the charge capacity of the battery per gram of the electrode (e.g., cathode) decreases by less than or equal to 30% and greater than or equal to 0.1% after cycling the battery at least 100 times when current density is set at a value of at least 1000 mA per gram of the electrochemically active material in the electrode (e.g., cathode). Other combinations of the values in the preceding paragraph are also possible.

In some non-limiting embodiments, the discharge capacity (and/or charge capacity) of the battery per gram of the electrode (e.g., cathode) decreases by less than or equal to 30%, less than or equal to 20%, or less than or equal to 10% after cycling the battery at least 2000 times when current density is set at a value of at least 1000 mA per gram of the electrochemically active material in the electrode (e.g., cathode). In certain non-limiting embodiments, the discharge

capacity (and/or charge capacity) of the battery per gram of the electrode (e.g., cathode) decreases by less than or equal to 30% after cycling the battery at least 5000 times when current density is set at a value of at least 1000 mA per gram of the electrochemically active material in the electrode (e.g., cathode).

In certain non-limiting embodiments, the discharge capacity (and/or charge capacity) of the battery per gram of the electrode (e.g., cathode) decreases by less than or equal to 30%, less than or equal to 20%, or less than or equal to 10% after cycling the battery at least 2000 times when current density is set at a value of at least 5000 mA per gram of the electrochemically active material in the electrode (e.g., cathode). In some non-limiting embodiments, the discharge capacity (and/or charge capacity) of the battery per gram of the electrode (e.g., cathode) decreases by less than or equal to 30%, less than or equal to 20%, or less than or equal to 10% after cycling the battery at least 5000 times when current density is set at a value of at least 5000 mA per gram of the electrochemically active material in the electrode (e.g., cathode).

In some non-limiting embodiments, the discharge capacity (and/or charge capacity) of the battery per gram of the electrode (e.g., cathode) decreases by less than or equal to 30%, less than or equal to 20%, or less than or equal to 10% after cycling the battery at least 2000 times when current density is set at a value of at least 10000 mA per gram of the electrochemically active material in the electrode (e.g., cathode). In certain non-limiting embodiments, the discharge capacity (and/or charge capacity) of the battery per gram of the electrode (e.g., cathode) decreases by less than or equal to 30%, less than or equal to 20%, or less than or equal to 10% after cycling the battery at least 5000 times when current density is set at a value of at least 10000 mA per gram of the electrochemically active material in the electrode (e.g., cathode).

The battery may have any of a variety of suitable energy densities (e.g., discharge energy densities and/or charge energy densities). In certain embodiments, for example, the battery has an energy density greater than or equal to 200 Wh per kilogram of the electrode (e.g., cathode) (Wh/kg), greater than or equal to 250 Wh/kg, greater than or equal to 300 Wh/kg, greater than or equal to 350 Wh/kg, greater than or equal to 400 Wh/kg, greater than or equal to 450 Wh/kg, greater than or equal to 500 Wh/kg, greater than or equal to 550 Wh/kg, or greater than or equal to 600 Wh/kg. In some embodiments, the battery has an energy density less than or equal to 650 Wh/kg, less than or equal to 600 Wh/kg, less than or equal to 550 Wh/kg, less than or equal to 500 Wh/kg, less than or equal to 450 Wh/kg, less than or equal to 400 Wh/kg, less than or equal to 350 Wh/kg, less than or equal to 300 Wh/kg, or less than or equal to 250 Wh/kg. Combinations of the above recited ranges are possible (e.g., the battery has an energy density greater than or equal to 200 Wh/kg and less than or equal to 650 Wh/kg, the battery has an energy density greater than or equal to 400 Wh/kg and less than or equal to 450 Wh/kg). Other combinations are also possible.

According to certain embodiments, the energy density (e.g., discharge energy density and/or charge energy density) of the battery in units of Watt-hours per kilogram of the electrode (Wh/kg) is calculated by multiplying the charge capacity (and/or discharge capacity) of the battery in units of mAh per gram of the electrode by the discharge nominal voltage (and/or charge nominal voltage). For purposes of illustration, if a battery has a discharge capacity (and/or charge capacity) of 100 mAh per gram of the electrode, and the discharge nominal voltage (and/or charge nominal voltage) is 2.5 V, then the calculated discharge energy density (and/or charge energy density) of the battery per kilogram of the electrode is 250 Wh/kg. As another example, if a battery has a discharge capacity (and/or charge capacity) of 300 mAh per gram of the electrode, and the discharge nominal voltage (and/or charge nominal voltage) is 2 V, then the calculated discharge energy density (and/or charge energy density) of the battery per kilogram of the electrode is 600 Wh/kg.

According to some embodiments, the energy density of the battery per kilogram of the electrode (e.g., cathode) is at least 10% higher, at least 20% higher, at least 30% higher, at least 40% higher, at least 50% higher, or at least 60% higher than the energy density per kilogram of an electrode of a conventional battery that does not comprise the electrochemically active material but is otherwise equivalent and measured under substantially similar conditions. In some embodiments, the energy density of the battery per kilogram of the electrode (e.g., cathode) is less than or equal to 70% higher, less than or equal to 60% higher, less than or equal to 50% higher, less than or equal to 40% higher, less than or equal to 30% higher, or less than or equal to 20% higher than the energy density per kilogram of an electrode of a conventional battery that does not comprise the electrochemically active material but is otherwise equivalent and measured under substantially similar conditions.

According to certain embodiments, a method of operating an electrochemical cell (e.g., a battery) is described. In some embodiments, the electrochemical cell (e.g., the battery) comprises an electrode comprising an electrochemically active material comprising a bis-tetraamino-benzoquinone molecule and/or a dimer, tautomer, oligomer, polymer, and/or derivative thereof, as described herein in greater detail. In certain embodiments, the electrochemical cell (e.g., the battery) comprises an electrode comprising a composite (e.g., a composite comprising: (i) an electrochemically active material comprising a *bis*-tetraamino-benzoquinone molecule and/or a dimer, tautomer, oligomer, polymer, and/or derivative thereof; and (ii) at least one carbon nanostructure). In some embodiments, the battery is a secondary (e.g., rechargeable) battery, such as a lithium-ion battery or a sodium-ion battery.

In some embodiments, the method comprises discharging the battery. During the discharging, the battery may have any of a variety of suitable discharge capacities per gram of the electrode (e.g. cathode) when current density is set at

a certain value per gram of the electrochemically active material in the electrode (e.g., cathode), as described herein in greater detail. In certain embodiments, for example, the battery has a discharge capacity greater than or equal to 125 mAh/g and less than or equal to 300 mAh/g when current density is set at a value of at least 1000 mA/g. In some embodiments, the battery has a discharge capacity greater than or equal to 125 mAh/g and less than or equal to 300 mAh/g when current density is set at a value of at least 5000 mA/g. According to some embodiments, the battery has a discharge capacity greater than or equal to 100 mAh/g and less than or equal to 300 mAh/g when current density is set at a value of at least 10000 mA/g. Other combinations of the discharge capacity values described herein are also possible.

According to some embodiments, the method comprises charging the battery. During the charging, the battery may have any of a variety of suitable charge capacities per gram of the electrode (e.g., cathode) when current density is set at a certain value per gram of the electrochemically active material in the electrode (e.g., cathode), as described herein in greater detail. In certain embodiments, for example, the battery has a charge capacity greater than or equal to 125 mAh/g and less than or equal to 300 mAh/g when current density is set at a value of at least 1000 mA/g. In some embodiments, the battery has a charge capacity greater than or equal to 125 mAh/g and less than or equal to 300 mAh/g when current density is set at a value of at least 5000 mA/g. According to some embodiments, the battery has a charge capacity greater than or equal to 100 mAh/g and less than or equal to 300 mAh/g when current density is set at a value of at least 10000 mA/g. Other combinations of the charge capacity values described herein are also possible.

In certain embodiments, the method comprises cycling the battery. In some embodiments, the cycling comprises discharging and charging the battery. The cycling may comprise cycling the battery any of a variety of suitable times. In certain embodiments, for example, the cycling comprises cycling the battery at least 100 times, at least 500 times, at least 1000 times, at least 2000 times, at least 3000 times, at least 4000 times, at least 5000 times, at least 6000 times, at least 7000 times, at least 8000 times, at least 9000 times, or more. In some embodiments, the cycling comprises cycling the battery less than or equal to 10000 times, less than or equal to 9000 times, less than or equal to 8000 times, less than or equal to 7000 times, less than or equal to 6000 times, less than or equal to 5000 times, less than or equal to 4000 times, less than or equal to 3000 times, less than or equal to 2000 times, less than or equal to 1000 times, less than or equal to 500 times, or less. Combinations of the above recited ranges are possible (e.g., the cycling comprises cycling the battery at least 100 times and less than or equal to 10000 times, the cycling comprises cycling the battery at least 2000 times and less than or equal to 5000 times). Other ranges are also possible.

According to some embodiments, the discharge capacity (and/or charge capacity) of the battery per gram of the electrode (e.g., cathode) may decrease by any of a variety of suitable amounts after the cycling when current density is set at a certain value per gram of the electrochemically active material in the electrode (e.g., cathode), as described herein in greater detail. In certain embodiments, for example, the discharge capacity (and/or charge capacity) of the battery per gram of the electrode (e.g., cathode) decreases by less than or equal to 30% and greater than or equal to 0.1% after cycling the battery at least 100 times (e.g., at least 500 times, at least 1000 times, at least 2000 times, at least 3000 times, at least 4000 times, at least 5000 times, at least 6000 times, at least 7000 times, at least 8000 times, at least 9000 times, etc.) when current density is set at a value of at least 1000 mA per gram of the electrochemically active material in the electrode (e.g., cathode).

The compositions, articles, systems, and methods described herein may be used in any of a variety of suitable applications. In certain embodiments, for example, an electrochemical cell (e.g., a battery) described herein is used in a consumer electronic (e.g., a mobile phone, a computer, a television, a video game console, and the like) and/or electric vehicle. According to some embodiments, a method described herein is used to operate a battery in a consumer electronic and/or an electric vehicle. In some embodiments, an electrochemical cell (e.g., a battery) described herein is used for energy storage, e.g., in micro-grids, data and/or loading centers, and/or commercial scale renewables. In certain embodiments, a method described herein is used to operate a battery for energy storage in a micro-grid, data and/or loading center, and/or a commercial scale renewable. Other applications are also possible.

The following applications are incorporated herein by reference, in their entirety, for all purposes: International Application No. PCT/US2022/013925, filed January 26, 2022, entitled "FUSED AROMATIC MOLECULES AS ELECTRODE MATERIALS"; and International Application No. PCT/US2022/047839, filed October 26, 2022, entitled "RECHARGEABLE BATTERIES, INCLUDING ORGANIC BATTERIES".

The following examples are intended to illustrate certain embodiments of the present disclosure, but do not exemplify the full scope of the disclosure.

**EXAMPLE 1**

Given the practically inexhaustible sodium (Na) abundance worldwide, sodium-ion batteries (SIBs) have potential as a promising complimentary technology to lithium-ion batteries (LIBs) for stationary energy storage applications like (micro)grids, data and/or loading centers, and/or commercial scale renewables. SIBs have also been considered as an ideal cost-effective and drop-in replacement for $LiFePO_4$ (LFP)-based LIBs for moderate-range five-passenger electric vehicles (EVs) with reduced cost and improved power rate capability, in addition to their use in the automotive

industry where storing and releasing regenerative braking energy is needed. However, conventional SIBs inherently exhibit ~30% lower energy density compared to LIBs because Na is roughly three times heavier than lithium (Li) and has a 300 mV higher redox potential. The cathode material largely determines the performance of SIBs. Three major cathode technologies, including: (i) layered transition metal (TM) Group I (A) oxides ($A_x(TM)O_2$, A = sodium (Na) and/or lithium (Li), TM = manganese (Mn), iron (Fe), nickel (Ni), copper (Cu), magnesium (Mg), and/or titanium (Ti)); (ii) Prussian blue/white analogues (PBAs); and (iii) vanadium-based fluorophosphates (NVPFs), have been built on more earth-abundant elements than cobalt (Co). However, these technologies suffer significantly from various issues, including: (i) the rapid and irreversible capacity decay of layered oxide cathodes and their use of critical transition metals such as Ni and Cu; (ii) the mediocre energy density and potential release of toxic substances for PBA cathodes; and (iii) the use of toxic vanadium for NVPF cathodes. Therefore, developing alternative cathode technologies that are based on more earth-abundant elements and therefore able to mitigate the aforementioned issues is crucial for the further development of SIBs.

Redox-active organic materials are generally derived entirely from earth-abundant elements such as carbon (C), hydrogen (H), nitrogen (N), oxygen (O), and sulfur (S), and exhibit high structural and functional tunability. Moreover, in some cases, different rechargeable metal-ion battery technologies can be realized using the same organic electrode materials (OEMs), allowing the versatile use of the existing LIB manufacturing infrastructures for various battery systems. More specifically, some OEMs for LIBs can be directly used for SIBs without further modifications even though $Na^+$ has a significantly larger ionic radius (102 pm) compared to $Li^+$ (76 pm), whereas inorganic cathode materials for LIBs generally perform poorly for sodium-ion technologies. OEMs for SIBs still face major challenges, however. Most conventional OEMs dissolute electrolytes during cycling, leading to rapid capacity decay. They also commonly have poor intrinsic electrical conductivity, rendering redox kinetics sluggish. As a result, SIB cathodes using OEMs usually require no less than 40 weight percent (wt.%) of binders and/or conductive carbon to achieve decent performance at the active material level, which nevertheless inevitably leads to unsatisfactory performance metrics, especially energy density, at the electrode level. However, simply increasing active material content undoubtedly causes low active material utilization, large overpotential, and inferior rate capability. Employing insoluble and electrically conductive OEMs has the promise to overcome these two challenges, but such OEMs are rare, with only a handful of polymeric materials that either insert anions instead of cations or have a low specific energy density. In fact, none of these materials realize active material content of over 70% in corresponding SIB cathodes. Alternatively, making composite electrodes with advanced carbon materials, such as carbon nanotubes (CNTs) and graphene, can potentially reduce the amount of conductive additives without sacrificing performance. However, this strategy also fails in most cases and significant amounts of advanced carbon materials (> 20 wt.%) and sometimes even large amounts of additional CB are needed to achieve desired rate capability due to the various limitations of compositing methods.

Described herein is the application of organic rechargeable SIBs using a layered electrically conductive conjugated molecule, *bis*-tetraamino-benzoquinone (referred to herein as TAQ), and its derivatives and CNT composites (FIGS. 2A-5) as cathode materials. TAQ exhibits high reversible specific capacity close to the theoretical value of 355 mAh/g, and long-term stable cycling with low conductive carbon content (< 5% wt.%). Also described herein is an in-situ seeded growth of TAQ crystals on a variety of functionalized single-walled and multi-walled CNTs, assisted by the hydrogen bonding between TAQ and CNTs, where TAQ crystals are evenly wrapped and interconnected by the single-walled and multi-walled CNTs (FIGS. 4-6B). Such composites exhibit high crystallinity of TAQ in comparison with the poorly crystalline composite grown on non-functionalized CNTs. The composites show exceptional rate capability as SIB cathode materials and can deliver 166 mAh/g and 126 mAh/g at the cathode level under extremely high current densities of 5 A/g and 10 A/g. The conductive and insoluble TAQ and its CNTs composites represent unique SIB cathode materials that offer exceptional energy and power performance, outperforming all conventional organic cathode materials and most conventional inorganic cathode materials at the electrode level.

Compared with conventional organic cathode materials requiring at least 30 wt.% conductive carbon additive, TAQ-based cathodes consisting of 90 wt.% of TAQ and 5 wt.% of conducting CB exhibit over 90% of active material utilization with the specific capacity above 300 mAh/g. The cathode level energy density of TAQ almost doubles the conventional state-of-the-art organic cathode materials. TAQ-CB electrodes show excellent rate and cycling performance, with cathode capacities of 229 mAh/g and 194 mAh/g after 150 cycles and 2200 cycles, respectively, corresponding to retentions of 98.9% and 91.8% relative to the highest capacity values during cycling at 50 mA/g and 200 mA/g, respectively.

An anchored growth method assisted by hydrogen bonding was developed to grow OEM crystals with TAQ and functionalized carbon nanotubes (CNTs), instead of or in addition to using $\pi$-$\pi$ interactions (FIGS. 4-6B). Conventional strategies for making OEM-CNT composites, including grafting/immobilization, encapsulation, and physical mixing (e.g., ball milling), employ CNTs as a major component or matrix for electrodes, whereas the strategy described herein can employ low weight percentages (e.g., 1 wt.%) of CNTs. TAQ-CNT composites synthesized by the hydrogen bonding assisted anchored growth include TAQ micro-crystals evenly wrapped and interconnected by CNTs, establishing an intimate and stable contact, leading to significantly improved electrical conductivity.

As a cathode for SIBs, compared to a TAQ-CB electrode, TAQ-CNT composites exhibit better rate capability and

cycling stability, and can deliver 166 mAh/g and 132 mAh/g at the cathode level at current densities of 5 A/g and 10 A/g, respectively. As a result, TAQ-CNT composites not only deliver electrode-level energy density reaching 550 Wh/kg at low rate, but also exhibit electrode energy density of ~260 Wh/kg and power density of 18 kW/kg simultaneously, outperforming all conventional OEMs and most conventional inorganic cathode materials for SIBs at the electrode level.

Full cells using TAQ as the cathode and hard carbon as the anode also show exceptional high current density cycling performance. A cycling study of a TAQ-CNT full cell at a current density of 10 A/g shows no drop of the capacity relative to the cycling at 2 A/g, delivering cathode capacities of nearly 200 mAh/g after 5000 cycles.

International Application No. PCT/US2022/013925, filed January 26, 2022, entitled "FUSED AROMATIC MOLECULES AS ELECTRODE MATERIALS", which is incorporated herein by reference in its entirety, describes that the TAQ molecule and its polymeric derivative, along with their derivatives and compositional analogues, are excellent candidates for ultrahigh-power energy storage in devices that use aqueous electrolytes. International Application No. PCT/US2022/047839, filed October 26, 2022, entitled "RECHARGEABLE BATTERIES, INCLUDING ORGANIC BATTERIES", which is also incorporated herein by reference in its entirety, describes the full-cell performances of TAQ, its polymeric derivative, along with their derivatives and compositional analogues, in devices that use non-aqueous organic electrolytes. Described herein is an anchored growth method assisted by hydrogen bonding to grow OEM crystals with TAQ and functionalized CNTS (FIGS. 4-6B), and the application of TAQ and its TAQ-CNT composites as cathode materials for SIBs. A cathode material adequately working in LIBs does not necessarily indicate or guarantee the same performance in SIBs, especially in the case of conventional state-of-the-art inorganic cathode materials. Therefore, the application of TAQ and TAQ-CNTs composites as cathode materials for SIBs is a distinct contribution from a scientific standpoint.

Conventional OEMs commonly have poor intrinsic electrical conductivity (e.g., < $10^{-9}$ S $cm^{-1}$), thus requiring no less than 30 wt.% of conductive carbon in the electrode formulation for operation. To achieve high power performance at the active material level, even more conductive carbon, such as 40 wt.% or 50 wt.%, is typically necessary, which is catastrophic for the performance metrics at the electrode level, especially energy density. In addition, most conventional OEMs dissolute into electrolytes during cycling, leading to rapid capacity decay. Alternatively, TAQ exhibits a high density of heteroatomic functionalities including imines and quinones that serve as both redox-active sites and hydrogen bonding donors/acceptors. This unique mix of in-plane electronic conjugation, inter-plane $\pi$-$\pi$ stacking, and strong intra-plane hydrogen bonding interactions produce a highly insoluble molecular solid with high bulk electrical conductivity. In addition, TAQ with advanced carbon materials such as CNTs further increases its electrical conductivity while maintaining the high active material content in the electrode.

Therefore, described herein is the use of TAQ and TAQ-CNT composites as the cathode material for SIBs, based on the following design principles: (i) TAQ is an excellent cathode material for LIBs; (ii) the material has a continuously $\pi$-conjugated planar backbone that ensures high bulk electrical conductivity values of greater than $10^{-4}$ mS/cm, facilitating low charge-transfer resistance; (iii) the functionalization groups on the CNTs can form hydrogen bonds with the precursor molecules and the resulting TAQ molecules during the in-situ growth of composites, thereby regulating the nucleation and ultimately yielding high crystalline TAQ composites with CNTs (FIG. 5); and (iv) TAQ-CNT composites, which contain a low weight percentages (e.g., 1 wt.%) of CNTs, exhibit significantly enhanced electrical conductivity relative to pristine TAQ, reaching 1 mS/cm. With a similar electrode formulation, TAQ-CNT-based electrodes have a fourfold increase in electrical conductivity compared to TAQ-based electrodes. Furthermore, with the additional benefit of TAQ micro-crystals evenly wrapped and interconnected by CNTs, TAQ-CNT composites give better rate and cycling performances.

TAQ composite electrodes were made from TAQ, CB, carboxymethyl cellulose (CMC), and styrene-butadiene rubber (SBR) with a mass ratio of 90:5:4:1, respectively. To reveal the intrinsic electrochemical performance of TAQ, the galvanostatic charge-discharge (GCD) voltage profile of a TAQ-Na cell was recorded at 25 mA/g between 1.1 V and 3.1 V in 1 M sodium hexafluorophosphate ($NaPF_6$) in 1-methoxy-2-(2-methoxyethoxy)ethane (diglyme) (FIG. 7). The cell exhibited initial discharge and charge capacities of 322.8 $mAh/g_{TAQ}$ and 305.3 $mAh/g_{TAQ}$ at the active material level, respectively, corresponding to an initial Coulombic efficiency (ICE) of 94.6%. Two plateaus in both the discharging and charging voltage profiles exhibited a roughly equal amount of capacity, corresponding to two two-electron redox processes and delivering an initial nominal voltage of 1.76 V. A rate capability study of a TAQ-Na cell with current densities from 5 mA/g to 2000 mA/g exhibited discharge cathode capacities of 219 mAh/g at 100 mA/g, 186 mAh/g at 400 mA/g, 116 mAh/g at 1000 mA/g, and 85 mAh/g at 2000 mA/g, corresponding to capacity retentions of 89%, 76%, 47%, and 35% relative to the performance at 20 mA/g (FIG. 8).

Battery studies of TAQ-Na cells were also conducted using a series of electrolytes including 1,2-dimethoxyethane (DME) and diglyme, ranging from 6:0 (pure DME) to 0:6 (pure diglyme). Specifically, the rate capability of TAQ-Na cells was tested in electrolytes with DME:diglyme ratios of 6:0, 5:1, 4:2, 3:3, 2:4, 1:5, and 0:6. DME is analogous to diglyme with a shorter chain, which can compete with diglyme to form tunable solvation shells for $Na^+$. The capacity retentions at 1000 mA/g relative to 25 mA/g in various electrolytes exhibited a volcano-like relationship to DME:diglyme ratio, and the ratio of 3:3 delivered the best retention of 60% (FIG. 9). Therefore, balancing the relative amount of DME and diglyme realizes the optimized $Na^+$ intercalation/de-intercalation kinetics. Moreover, cycling studies using the optimized electrolyte at current densities of 50 mA/g and 200 mA/g reveal the stabilization of capacity immediately after the initial increase, and

deliver cathode capacities of 229 mAh/g and 194 mAh/g after 150 cycles and 2200 cycles, respectively, corresponding to retentions of 98.9% and 91.8% relative to the highest capacity values during cycling, respectively (FIG. 10).

TAQ-carboxyl-functionalized single-walled CNT (cSWCNT) composite electrodes, made of TAQ and -COOH functionalized single-walled CNTs, exhibited a capacity retention $CR_{25}^{1000}$ ( $CR_{n}^{m}$ is defined as the ratio of the capacity at *m* mA/g over the capacity at *n* mA/g) reaching 88.3% or 83.4% based on the average of four cells (FIG. 11), delivering a capacity of 245.2 $mAh/g_{TAQ}$ at 1000 mA/g. Such high-rate capability significantly outperforms TAQ-CB based half-cells, which exhibited an average $CR_{25}^{1000}$ of only 59.6%. Notably, the poor rate capability of the composite made by physically mixing TAQ and cSWCNTs with an average $CR_{25}^{1000}$ of 55.8% reveals the importance of the intimate contact between TAQ and cSWCNTs realized by the hydrogen bonding assisted anchored growth method (FIG. 11). TAQ-cSWCNT-based full cells were assembled using a pre-sodiated hard carbon (HC) anode and their rate capabilities were evaluated. Interestingly, the power rate performance of TAQ-cSWCNT composites depends on the weight percentage of cSWCNTs in the composite. Cathodes made from TAQ-cSWCNT (2 wt.%) exhibited the highest capacity at current densities from 0.1 A/g to 10 A/g, whereas cathodes made from TAQ-cSWCNT (1 wt.%) exhibited the lowest rate performance (FIG. 12), which is nevertheless still significantly better than the rate capability of cathodes made from either TAQ-CB or a physically mixed TAQ-cSWCNT composite. Notably, an electrode-level capacity of 132 mAh/g is recorded at 10 A/g, which corresponds to a charging/discharging time less than 60 seconds and is unprecedented for all cathode materials for SIBs (FIG. 11).

A cycling study of a TAQ-cSWCNT full cell at a current density of 2 A/g exhibited a cathode capacity of 208.8 mAh/g after 2500 cycles and 195.6 mAh/g after 5000 cycles, which is even higher than the initial capacity after formation cycles (FIG. 13).

TAQ and TAQ-CNT-based cathodes outperform conventional state-of-the-art organic and inorganic cathode materials for SIBs in terms of both electrode-level energy and power densities, while offering low cost and environmental benignity. With such high energy and power performance, shorter charging times and extended traveling distances can be realized for moderate-range EVs. More importantly, TAQ, as an organic material, does not contain transition metals, lowering the cost of battery production as well as the recycling. Therefore, TAQ-based SIBs have intrinsic advantages over LIBs and inorganic SIBs for large scale energy storage, such as microgrids, power bank for data centers and loading centers, etc. These enormous advancements in performance of TAQ-based SIBs compared with conventional inorganic batteries offer great potential for the commercial use of TAQ.

Sustainable battery technologies for not only portable electronics and EVs, but also for grid storage, are receiving great industrial interest owing to the need to transition toward a low-carbon society. Several car makers and governments around the world have come up with ambitious goals in this regard. SIBs, as a cheaper and more sustainable alternative to LIBs, have become an ideal complementary technology to $LiFePO_4$ (LFP)-based Li-ion batteries for most applications. However, the specific energies of conventional SIBs are too low for acceptable-range (five passenger) EV applications. For example, conventional SIB technology can power a 160-to-280-mile driving-range five-passenger electric vehicles, which is not competitive to the state-of-the-art LFP Li-cells. The compositions, articles, systems, and methods described herein provide a more sustainable alternative, an organic SIB, to conventional inorganic LIBs. The TAQ-based SIB performs better than LFP cells in terms of both energy and power characteristics. Therefore, the TAQ and TAQ-CNT composite electrode-based SIBs are of interest as a drop-in replacement of the current LFP/graphite LIBs, and additional applications include both grid scale energy storage as well as long-range (five passenger) EVs.

## EXAMPLE 2

Significant progress has been made with SIBs using various cathode materials, including layered transition metal oxides, Prussian blue analogues, and polyanionic compounds. However, balancing high energy density with high power density at the electrode level remains a major challenge, as achieving high rate performance often requires additional composition with carbon materials, reducing electrode-level energy density.

To address this trade-off, a straightforward approach involves utilizing cathode materials that possess ample storage capacity. Redox-active organic materials have recently emerged as a promising solution, providing substantial opportunities due to their high theoretical specific capacity (e.g., > 300 mAh $g^{-1}$) and moderate redox potential (1.5 - 3 V vs. $Na^+/Na$). These properties lead to a superior material-level energy density when compared to conventional inorganic cathode materials. Additionally, organic electrode materials (OEMs) are typically composed of earth-abundant elements like C, H, N, O, and S, and offer considerable structural and functional versatility. However, a major limitation of conventional OEMs is their poor intrinsic electrical conductivity, often less than $10^{-9}$ S $cm^{-1}$), necessitating the inclusion of at least 20 wt.% conductive carbon in the electrode formulation for effective operation. To further achieve high power

performance at the active material level, a higher proportion of conductive carbon, normally no less than 40 wt.%, is required for conventional electrode fabrication. Such high carbon content adversely affects performance metrics at the electrode level, particularly energy density. Moreover, most conventional OEMs dissolve into electrolytes during cycling, leading to rapid decline of capacity. To counter this issue, it is crucial to immobilize them using a significant amount of carbon material, leveraging $\pi$-$\pi$ interactions between OEMs and the carbon surface to prevent dissolution (FIG. 15A). Even when using advanced carbon materials like carbon nanofibers, graphene, and carbon nanotubes (CNTs), a 20-30 wt.% incorporation is still needed for electrode fabrication. Alternative strategies, such as polymerization, framework construction, and salinization, inevitably introduce redox-inactive components, consequently diminishing the specific capacity at the active-material level (FIG. 15A). Therefore, achieving both high energy density and high power density simultaneously at the electrode level continues to pose a significant challenge for OEMs.

Here, a two-stage strategy was developed to overcome the dissolution and insulation problems associated with conventional OEMs, leveraging both molecular engineering and composite engineering. A layered organic solid, bis-tetraamino-benzoquinone (referred to herein as TAQ), with optimized molecular orbital overlapping, strong intermolecular interactions, and abundant redox-active sites was employed as the cathode material. TAQ-based cathodes exhibit high reversible specific capacity reaching the theoretical value, 355 mAh/g, fast charging/discharge capability, and long lifetime using an optimized electrolyte. A cathode-level energy density of 606 Wh/kg is recorded at 25 mA/g. Reversable variation of interlayer distance of TAQ two-dimensional (2D) layers between 3.23 Å and 3.47 Å during $Na^+$ intercalation and deintercalation through the continuous solid-solution pathway elucidates the origin of its high rate capability. Furthermore, hydrogen bonding-assisted anchored growth of TAQ crystals with carboxyl functionalized single-walled carbon nanotubes (cSWCNTs) produce composites comprising TAQ crystals that are closely wrapped and interconnected by as little as -2 wt.% of cSWCNTs. Such composites exhibit significantly improved electrical conductivity, leading to exceptional rate capability. They are able to deliver 128 mAh/$g_{cathode}$ under a current density of 20 A/g, corresponding to a cathode-level energy density of 231 Wh/kg and power density of 33.31 kW/kg. Therefore, TAQ-based cathodes can deliver high energy at the electrode level even when the charge/discharge times is less than 30 seconds, outperforming all organic cathode materials and most of the inorganic cathode materials.

TAQ appears as micro-crystals comprising closely $\pi$-stacked 2D molecular layers with an interlayer distance of 3.14 Å, which are formed through intermolecular hydrogen bonding of planar TAQ molecules (FIG. 3). Due to significant intramolecular conjugation, intermolecular $\pi$-$\pi$ interactions, and hydrogen bonding, TAQ exhibits broad absorption spanning from the ultraviolet (UV) region to the near-infrared (NIR) region (up to ~1600 nm) in its diffuse reflectance ultraviolet-visible-near-infrared (DR UV-Vis-NIR) spectrum, resulting in an indirect and a direct optical bandgap of 0.75 eV and 0.81 eV, respectively (FIG. 15D). Such small gaps are lower than most organic semiconductors. Moreover, the band diagram of TAQ crystal reveals an indirect electronic bandgap of 0.459 eV and a direct electronic bandgap of 0.588 eV (FIG. 15E), indicating that TAQ possesses promising charge transport properties, which is in great contrast to conventional OEMs with large bandgaps. Indeed, TAQ exhibits an average bulk electrical conductivity of $2.56\times10^{-3}$ mS/cm, which is higher than conventional inorganic cathode materials and most OEMs except some conducting polymers. Compact molecular packing and robust intermolecular interactions lead to TAQ's insolubility in common organic solvents and prevent the dissolution of TAQ electrodes into SIB electrolytes even after soaking for at least eight months. Possessing the ability to accommodate up to four $Na^+$ per formula through the reduction of carbonyl groups (FIG. 15C), TAQ offers a theoretical specific capacity of 355 mAh/g, rendering it a promising candidate for cathode material in SIBs. Furthermore, the insolubility and respectful conductivity of TAQ enable minimal use of conducting additives and binders, facilitating a commercially viable active-material content of 90 wt.% in cathodes.

TAQ undergo *in-situ* morphological change through the fracture of micro-rods preferentially along the cross-section direction during electrode fabrication, turning into sub-micron rhombic plates (FIG. 15F, inset and FIGS. 17D-17E). Na-ion half cells comprising a TAQ-based cathode with 90 wt.% of TAQ, a metallic Na anode, and an ether-based electrolyte in a potential window between 1.1 V and 3.1 V (all potentials are referenced to the $Na^+$/Na couple unless otherwise noted) were tested. Initial discharge/charge voltage profiles of half cells, recorded in a 1,2-dimethoxyethane (DME) electrolyte, a diethylene glycol dimethyl ether (diglyme) electrolyte, and a mixture electrolyte (DME:diglyme = 1:1) under a current density of 25 mA/g, exhibit almost identical shapes with two discharge plateaus centered around 2.15 V and 1.5 V, and two charge plateaus centered around 1.65 V and 2.5 V (FIG. 15F). Two plateaus in the discharging or charging voltage profiles exhibit roughly equal amount of capacity, likely corresponding to two two-electron redox processes. The cell using the mixture electrolyte delivers the highest initial discharge and charge capacities of 325 mAh/$g_{TAQ}$ and 318 mAh/$g_{TAQ}$, respectively, corresponding to an initial Coulombic efficiency (ICE) of 97.8%.

*Ex-situ* diffuse-reflectance infrared Fourier Transform (DRIFT) spectra of TAQ electrodes at different states of discharge and charge of the initial cycle reveal that both the C=O stretching band at 1624 $cm^{-1}$ and the C=N stretching band from the imine tautomer at 1568 $cm^{-1}$ diminish upon discharging and disappear when TAQ is reduced to $TAQ^{4-}$ (FIG. 16A). These vibrational bands recover upon charging to 3.1 V when $TAQ^{4-}$ is oxidized back to TAQ. This process is accompanied by the interconversion between the quinoid structure and the benzenoid structure of the carbon rings, as evidenced by the shifting between the quinoid C=C stretching band at 1546 $cm^{-1}$ and the benzene C-C stretching band at 1447 $cm^{-1}$. Such

spectroscopic evolution matches well with the proposed two two-electron redox processes.

Notably, TAQ-based cathodes exhibit electrolyte-dependent rate capability, as revealed by tests of half cells using a series of DME/diglyme electrolytes with a variety of ratios. The capacity retentions at 1000 mA/g relative to 25 mA/g (denoted as $CR_{25}^{1000}$, where $CR_{n}^{m}$ is defined as the capacity retention at *m* mA/g relative to *n* mA/g) in various electrolytes (FIG. 9) exhibit a volcano-like relationship to the DME/diglyme ratio, where the mixture electrolyte with the ratio of 3:3 delivers the best $CR_{25}^{1000}$ of 60%. The Galvanostatic Intermittent Titration Technique (GITT) determined that the $Na^+$ diffusion coefficients in TAQ cathodes are approximately $10^{-10}$ $cm^2/s$, irrespective of electrolyte composition. These coefficients rank among the highest for both inorganic and organic cathode materials, indicating that $Na^+$ diffusion is facile within the TAQ cathode and does not pose a limiting factor for the power rate performance of TAQ-based cathodes. Electrochemical impedance spectroscopic (EIS) studies reveal that both the charge transfer resistances and the interfacial resistances of TAQ-Na cells in the DME electrolyte and the DME/diglyme (1:1) electrolyte exhibit similar values between 1.2 V and 2.8 V, which are lower than those observed in the diglyme electrolyte. This finding suggests that DME more efficiently enhances the redox kinetics of TAQ compared to diglyme. However, DME is known to induce detrimental structural degradation and morphological alteration for OEMs during cation insertion/extraction, which often leads to poor rate performance and cycling stability. Indeed, *ex-situ* SEM images reveal significant morphological alteration of TAQ crystallites following the rate capability study in the DME electrolyte, which is identified as the primary reason for the observed inferior rate capability within this series of electrolytes. Similarly, TAQ electrodes exhibit suboptimal cycling performance in the DME electrolyte compared to others. Therefore, altering the ratio of DME/diglyme modulates the charge transfer and $Na^+$ intercalation/de-intercalation kinetics of TAQ, leading to the optimized electrolyte, 1 M $NaPF_6$ in DME:diglyme (1:1), which is used for the remaining studies unless otherwise noted.

Encouraged by the impressive power rate performance of TAQ-Na half cells, a TAQ full cell was fabricated using a Na pre-doped hard carbon (HC) anode (TAQ-HC) and its rate capability tested (FIG. 16B). It exhibits average discharge capacities of 336.2 $mAh/g_{TAQ}$, 297.8 $mAh/g_{TAQ}$, and 214.5 $mAh/g_{TAQ}$ at 25 mA/g, 100 mA/g, and 1000 mA/g, respectively. Cycling the cell at 2 A/g delivers 162.8 $mAh/g_{TAQ}$, which fully recovers to 295.0 $mAh/g_{TAQ}$ when the current density is switched back to 100 mA/g.

The cycling study of a TAQ-Na half cell at 200 mA/g (FIG. 16C) reveals a retention of 92% after 2000 cycles relative to the peak capacity, demonstrating the exceptional stability of TAQ cathodes. Interestingly, the discharge/charge voltage profiles underwent clear transformation from two-plateau (e.g., cycle 20) to four-plateau (e.g., cycle 200) approximately within the first 200 cycles, and remained essentially unchanged until cycle 2000 (FIG. 16C, insets). Such evolution of voltage profiles indicates a gradual change of charge storage mechanism, likely from two two-electron processes to four single-electron processes. Moreover, a TAQ-HC full cell delivers a discharge capacity of 187 mAh/g and an energy density of 336 Wh/kg at the cathode level after 5000 cycles at 800 mA/g (FIG. 16D), corresponding to a decline of only 7.4% relative to the peak capacity, 202 mAh/g. Such slow capacity decay (1.485% per cycle) indicates a projected lifespan of -13,500 cycles until the capacity retention drops to 80%. Grey arrows in FIGS. 16C-16D indicate disturbance of cycling studies due to unexpected power shutoff.

FIG. 16E compares the more practically-relevant electrode-level energy density of TAQ with conventional state-of-the-art OEMs. In FIG, 16E, the sizes of scatters represent current densities (see top right inset). Hollow scatters represent organic electrodes whose nominal voltage is less than or equal to 1.5 V, which is not ideal as a cathode. The conventional state-of-the-art OEMS shown in FIG. 16E used various conventional strategies to solve the dissolution and insulation problems of OEMs (see bottom inset). Although conventional OEMs are able to exhibit energy densities exceeding 1000 Wh/kg at the active-material level, which is far beyond what conventional inorganic cathode materials can achieve, they have never delivered energy densities over 500 Wh/kg at the electrode level even when using an ultra-low current density like 10 mA/g. Increasing the active-material content in the electrode formulation for those OEMs normally leads to dramatic drop of their battery performance. On the contrary, cathodes based on TAQ are capable of delivering energy densities of 501.5 $Wh/kg_{cathode}$ at 200 mA/g and 606 $Wh/kg_{cathode}$ at 25 mA/g, which are higher than most of conventional organic and inorganic cathode materials for SIBs. Such enhanced performance is attributed to TAQ's high theoretical capacity, inherent insolubility and its low bandgap coupled with high conductivity.

High crystallinity and extreme insolubility of TAQ enabled structural and morphological studies of $Na^+$ intercalation and deintercalation through a combination of in-operando PXRD and *ex-situ* electron microscopy. Upon discharging at 20 mA/g (i.e., $Na^+$ intercalation), the position of the (102) reflection, which translates to the interlayer distance of TAQ ($d_{102}$), shifts from 3.14 Å of the pristine TAQ first to 3.23 Å, corresponding to the intermediate phase (IP1), $Na_{2-n}TAQ$ (0 < n < 2), during the first two-electron reduction process (FIG. 17A). Further discharging and $Na^+$ intercalation leads to the formation of the second intermediate phase (IP2), $Na_{4-n}TAQ$ (0 < n < 2), during the second two-electron reduction process, which has an interlayer distance of 3.33 Å. Full discharging produces $Na_4TAQ$ with $d_{102}$ equal to 3.47 Å. The interlayer distance stays unchanged at 3.47 Å during the subsequent charging process until the second voltage plateau, roughly corresponding to the onsite of second two-electron oxidation process. Different from the discharging

process, $Na_2TAQ$ transforms to fully charged TAQ through a single-phase solid solution rather than phase transition, as verified by the continuous shifting of the position of (102) reflection from 3.47 Å to 3.23 Å. Such asymmetrical structural change of discharge and charge has been observed in $LiFePO_4$, but is unknown for OEMs. Noticeably, the interlayer distance of TAQ at its fully charged state irreversibly increases 2.65% relative to the pristine state after the first cycle, and keeps at 3.23 Å during further cycling. In-operando PXRD patterns for the third cycle reveal similar features of structural evolution, except that the fully charged TAQ and IP1 become indistinguishable since they have the same interlayer distance.

Cycling at higher current density of 200 mA/g (FIG. 17B) does not change the fluctuation range between 3.23 Å and 3.47 Å observed for the interlayer distance during steady-state cycling. However, the structural evolutions during both discharge and charge adopt the single-phase solid solution mechanism. Interestingly, the continuous shifting of (102) reflection completes between fully charged TAQ and $Na_2TAQ$, whereas the interlayer distance of $Na_{4-n}TAQ$ ($0 < n < 2$) remains unchanged as 3.47 Å regardless the states of charge/discharge. It was also noticed that $Na_4TAQ$ becomes less crystalline likely due to the generation of more structural disorder upon deep and rapid $Na^+$ intercalation and deintercalation. Nevertheless, the ability of TAQ to undergo structural evolution through continuous solid solution transformation explains the high rate capability of TAQ-based cathodes.

To further enhance the power rate performance of TAQ-based cathodes, a composite engineering approach was employed (FIG. 15B) and TAQ-cSWCNT composites were prepared. This was achieved through an *in-situ* anchored growth method, which is aided by the hydrogen bonding interaction between carboxyl groups on the cSWCNT surface and the carbonyl and amino groups of the TAQ precursor, tetraamino-*p*-benzoquinone (TABQ), yielding TAQ crystals in the presence of a minimal amount of cSWCNTs. The resulting TAQ-cSWCNT composite contains only 4 wt.% of cSWCNTs and exhibits high crystallinity, as verified by its PXRD pattern (FIG. 18A). Its SEM image (FIG. 6A) reveals that micron-sized TAQ crystallites are closely wrapped and interconnected by cSWCNTs. Transmission electron microscopy (TEM) images of the TAQ-cSWCNT composite further confirm that cSWCNTs attach firmly to the surface of TAQ crystallites, forming an intimate contact (FIG. 18B). The dashed lines in FIG. 18B indicate cSWCNTs that wrap and interconnect TAQ crystallites intimately. Interestingly, it was found that using non-functionalization SWCNTs (nSWCNTs) for the synthesis only yielded a TAQ-nSWCNT composite with substantially lower crystallinity and smaller particle sizes compared with the TAQ-cSWCNT composite. This difference supports the crucial role of the hydrogen bonding between TABQ and the carboxyl groups on cSWCNTs in the anchored growth of TAQ crystals with cSWCNTs.

The Raman spectrum of the TAQ-cSWCNT composite shows a red shift in the G band of cSWCNTs from 1597 $cm^{-1}$ for the pristine cSWCNTs to 1587 $cm^{-1}$, indicating a strong electronic coupling between TAQ and cSWCNTs. This doping-like interaction results in an enhanced optical absorption for the TAQ-cSWCNT composite below the optical bandgap of TAQ (FIG. 18C), leading to a smaller bandgap of approximately 0.5 eV, which is beneficial for electron transport and charge transfer.

Indeed, the TAQ-cSWCNT composite has a significantly improved electrical conductivity reaching 0.81 mS/cm (FIG. 18D), which is about 400 times higher than that of pristine TAQ, and approximately 4 times higher than that of TAQ-nSWCNT. To mimic the actual electrode formulation, TAQ or the TAQ-cSWCNT composite was physically mixed with carbon black (CB) to reach a total carbon material content of 5 wt.%, and a higher conductivity was observed for the TAQ-cSWCNT/CB mixture. Encouraged by this result, the amount of cSWCNTs was further reduced and a TAQ-cSWCNT composite was synthesized that contained only ~2 wt.% of cSWCNTs, which exhibits a conductivity of 0.41 mS/cm. Although this conductivity is slightly lower than that of TAQ-cSWCNT (4 wt.%), the TAQ-cSWCNT (2 wt.%)-CB (3 wt.%) mixture shows the highest conductivity of 4.14 mS/cm.

Electrodes made from TAQ-cSWCNT composites also contain 90 wt.% of TAQ like those TAQ-based electrodes, possessing crack-free coatings even under high mass loadings (> 10 mg/cm) likely due to the enhanced mechanical robustness caused by cSWCNTs. The TAQ-cSWCNT (4 wt.%)-Na half cell exhibits a discharge/charge voltage profile very close to a TAQ-Na half cell at a current density of 25 mA/g, delivering an enhanced ICE of 100% and a lower overpotential of 0.23 V compared to the TAQ-Na half cell.

TAQ-cSWCNT-based half cells exhibit a capacity retention $CR_{25}^{1000}$ reaching 88.3% or 85.1% based on the average of four cells (FIG. 18E), and deliver a cathode-level capacity reaching 220.7 mAh/g or 245.2 $mAh/g_{TAQ}$ at 1000 mA/g, exhibiting substantial enhancement of the power rate performance relative to TAQ-based half cells. More significantly, TAQ-cSWCNT cathodes deliver a cathode capacity reaching 167 mAh/g at 5 A/g, corresponding to a $CR_{25}^{5000}$ value of 67.0%. Such rate capability is superior compared to the physically mixed TAQ/cSWCNT composite with the same amount of cSWCNTs, which exhibits a $CR_{25}^{5000}$ value of 20.4% (FIG. 18E) and a cathode capacity of 48 mAh/g at 5000 mA/g. Furthermore, TAQ-cSWCNT cathodes exhibit essentially unchanged cell polarization of approximately 0.24 V when the current density is increased from 25 mA/g to 1000 mA/g (FIG. 18F). The resulting round-trip efficiency (RTE) is higher than 89%, which is comparable to RTEs of ~90% for commercial lithium-ion batteries. Although the polarization of

TAQ-cSWCNT cathodes increases to 0.396 V at 5 A/g and the corresponding RTE decreases slightly to 83%, such performance is substantially better than that of physically mixed TAQ/cSWCNT composite, which exhibits a severe polarization of 1.425 V at 5 A/g and delivers a RTE of only 49%.

To reveal the origin of such high power rate performance of TAQ-cSWCNT composites, the diffusion coefficients of $Na^+$ were determined in the TAQ-cSWCNT composite using GITT, which only exhibits a marginal increase to those for TAQ. These essentially identical diffusion coefficients suggest that $Na^+$ diffusion in between 2D layers of TAQ does not pose a limiting factor for the rate capability. Notably, EIS studies of TAQ-cSWCNT (4 wt.%)-Na half cells at various states of discharge/charge (FIG. 18G) reveal that the equivalent series resistances (ESR) decrease by more than 60% relative to TAQ-Na half cells, in great agreement with the higher conductivity of TAQ-cSWCNT composites. The intimate contact between TAQ crystals and cSWCNTs significantly enhances the interfacial electron conduction kinetics, leading to lower overall interfacial resistances ($R_{interface}$). Moreover, the charge transfer resistances ($R_{ct}$) of TAQ-cSWCNT-Na cells are also lower than TAQ-Na cells, indicating that cSWCNTs facilitate charge transfer kinetics of TAQ, likely through electronic coupling.

TAQ-cSWCNT-HC full cells exhibit better power rate performance than half cells, exhibiting a $CR_{50}^{10000}$ of 53.4%. Interestingly, TAQ-cSWCNT (2 wt.%)-based cathodes exhibit higher capacity than TAQ-cSWCNT (4 wt.%)-based cathodes at current densities from 0.1 A/g to 10 A/g. Notably, an electrode-level capacity of 132 mAh/g is recorded at 10 A/g, which corresponds to a charging time less than 60 seconds and is unprecedented for all cathode materials for SIBs. More importantly, the full cells deliver 266 $mAh/g_{TAQ}$ at 0.2 A/g after being cycled up to 10 A/g, exhibiting essentially no drop compared to 269 mAh/g at 0.2 A/g prior to the ultrahigh rate cycling. Stable switching between 0.1 A/g and 10 A/g reveals the ability of TAQ-cSWCNT cathodes to tolerate abrupt power fluctuation and fulfill the peak power requirements for most energy storage systems.

A cycling study of a TAQ-cSWCNT full cell at a current density of 2 A/g exhibits a cathode capacity of 195.6 mAh/g after 5000 cycles, corresponding to a capacity retention of 94% relative to the initial capacity after formation cycles (FIG. 13). Remarkably, increasing the current density to 10 A/g shows no capacity drop, delivering a cathode capacity of 181.2 mAh/g after 5000 cycles. Importantly, TAQ-cSWCNT full cells deliver stabilized discharge nominal voltages of 1.97 V at 2 A/g and 1.94 V at 10 A/g, which are essentially unchanged relative to the value obtained at 25 mA/g. Although the average polarization of cells increases to 0.479 V at 10 A/g, the average RTE only drop slightly to 80%.

The battery performances of conventional OEM-based electrodes at the active-material level can be improved substantially by introducing large amounts of conductive additives and binders in the electrode formulation. However, such electrodes exhibit low performance metrics at the electrode level, rendering them impractical. Therefore, a comparison of TAQ-based cathodes and other conventional state-of-the-art organic and inorganic cathodes was performed at the electrode level (FIGS. 14A-14B), which is more practically relevant. Although high active-material-level metrics can be achieved in many OEMs, the values at the cathode level are generally modest, ranging between 100 Wh/kg and 300 Wh/kg due to their low active material content. In great contrast, TAQ-cSWCNT-based electrodes show remarkable energy density throughout a wide range of rates, delivering electrode-level energy densities reaching 544.5 Wh/kg at 25 mA/g, and 257 Wh/kg at 10 A/g, corresponding to a specific power density of 18 kW/kg (FIG. 14A). Although a handful of conventional OEMs exhibit energy densities close to TAQ-cSWCNT-based electrodes at relative low rates, such as $Na_2C_6O_6$ (No. 4) and CuTCNQ (No. 20) (FIG. 14C), they suffer from less satisfactory cycling stability largely due to severe dissolution of active material during charge and discharge.

In addition, FIG. 14B shows that TAQ-cSWCNT electrodes also outperform all conventional state-of-the-art inorganic SIB cathodes with only one exception ($Na_2MoS_4$, No. 27) (FIG. 14C), which exhibits an electrode energy density of 589 Wh/kg at 50 mA/g but also a poor cycling stability with a capacity retention of only 50% after 250-hour cycling. In practical applications such as EVs, batteries must retain at least 80% of their nominal capacity over their operating lifetime. On the material level, the cycling performance of OEMs typically correlates more with the speed they dissolve in the electrolyte, namely, the time of cycling instead of the cycle number. Thus, the capacity retention was compared as a function as cycle time (FIG. 14E). Therefore, TAQ-cSWCNT composites synthesized by the hydrogen-bonding assisted anchored growth strategy present measurable advantages relative to leading contemporary SIB cathode technologies.

TAQ synthesis: TAQ was synthesized using a solvothermal method.

TAQ-carboxyl-functionalized single-walled carbon nanotube (TAQ-cSWCNT) composite synthesis: Carboxyl-functionalized SWCNTs (cSWCNTs; 1 mg) were added to 40 mL of dimethylformamide (DMF), and the mixture was sonicated for 1 hour to obtain a fine dispersion of cSWCNTs in DMF. The resulting dispersion was transferred into a 100-mL Schlenk tube with 100 mg of tetraamino-*p*-benzoquinone (TABQ, 0.59 mmol; 1 eq.) and 830 mg of anhydrous tetrabutylammonium chloride (TBACl; 2.95 mmol; 5 eq.). The Schlenk tube was sealed under ambient condition, sonicated for 1 minute, and then put into an isothermal oven at 120 °C. After 12 hours, the Schlenk tube was cooled down to room temperature, and the reaction mixture was filtered and washed with DMF until the filtrate became colorless. The resulting black solid was further washed with methanol and dried under air. 22 mg of TAQ-cSWCNT composite was obtained with a cSWCNT weight percentage of 4.5%. Varying the mass of the cSWCNTs in the synthesis provides TAQ-cSWCNT

composites with slightly different weight percentages of cSWCNT.

TAQ-non-functionalized single-walled carbon nanotube (TAQ-nSWCNT) composite synthesis: TABQ (80 mg), non-functionalized SWCNTs (nSWCNTs; 1.2 mg), and TBACl (525 mg) were transferred into a 100 mL Schlenk tube, followed by the addition of 10 mL of DMF. The Schlenk tube was sealed under ambient conditions, sonicated for 1 minutes, and then put into an isothermal oven at 120 °C. After 12 hours, the Schlenk tube was cooled down to room temperature, and the reaction mixture was filtered and washed with DMF until the filtrate became colorless. The resulting black solid was further washed with methanol and dried under air. 41 mg of TAQ-nSWCNT composite was obtained with a nSWCNT weight percentage of 3%.

Electrochemical tests: Electrochemical performances of TAQ electrodes were tested in CR2032 coin cells assembled in an argon (Ar)-filled glove box. All electrodes were prepared under ambient conditions. TAQ electrodes contained 90 wt.% TAQ, 5 wt.% carbon black (CB), 4 wt.% carboxymethyl cellulose (CMC), and 1 wt.% styrene butadiene rubber (SBR). For TAQ-cSWCNT electrodes, CB and cSWCNT together contributed to 5 wt.% of the cathode mass. CMC and SBR were well dissolved/suspended in a small amount of water (50-100 μL/mg) upon heating at 85 °C with vigorous stirring for 1 hour. Well-mixed TAQ (or TAQ-cSWCNT) and CB powders (upon grinding) were transferred into the CMC/SBR aqueous mixture, and the resulting mixture was vigorously stirred at 85 °C for 1 hour to produce the cathode slurry, which was then coated on stainless steel disks. All electrodes were dried under ambient conditions before drying in a vacuum oven at 100 °C for 12 hours. TAQ-based electrodes had TAQ loadings between 1.5 and 3.0 mg/cm for most of the tests. Higher mass loading studies used electrodes with TAQ loadings ranging between 4 mg/cm and 16 mg/cm. Half cells used a Na pellet as the anode and full cells used a Na pre-doped hard carbon (HC) coated on Al foil as the anode. A glass microfiber (Whatman GF/D) was used as the separator. To fabricate Na pre-doped HC electrodes, commercial HC anode on Al foil (92 wt.% of HC, MTI Corporation, 8 mg $cm^{-2}$) was cut into 15-mm disks (~13 mg of HC per disk), and the resulting electrodes were electrochemically sodiated in HC-Na cells by constant current discharge at a current of 0.2 mA. Coin cells were typically tested between 1.1 V and 3.1 V versus $Na^+$/Na using Landt battery cyclers at room temperature (25 °C). Galvanostatic Intermittent Titration Technique (GITT), cyclic voltammetry, and electrochemical impedance spectroscopy (EIS) tests were performed using a BioLogic VMP-3 workstation. GITT measurements were carried out at a current density of 25 mA/g where each step consistsed of a one-hour constant-current discharge or charge followed by a two-hour rest. Impedance of coin cells were collected from 10 mHz to 1 MHz at various potentials versus $Na^+$/Na.

In-operando powder X-ray diffraction (PXRD): In-operando PXRD measurements were performed using custom-made half-cells with a 10-μm-thick Al foil window on a Panalytical Empyrean diffractometer equipped with a Mo X-ray source, focusing mirror, and Galipix 3D detector. The corresponding electrodes were prepared as thin films by repeated kneading and rolling of a slurry of activated carbon, acetylene black, and a PTFE solution mixture with ethanol. The mass ratios were 8:1:1 and 6:3:1 for measurements at low current density (20 mA/g) and higher current density (100 mA/g and 200 mA/g), respectively. The prepared films were dried at 100 °C for at least 12 hours and pressed onto stainless steel mesh prior to use. To enhance the intensities of PXRD signals, TAQ mass loadings between 8 mg/$cm^2$ and 10 mg/$cm^2$ were used. The PXRD patterns were recorded in the Bragg-Brentano θ/2θ geometry using an in-operando coin cell battery holder. The coin cells were cycled under constant current between 1.1 V and 3.1 V while PXRD patterns were recorded.

While several embodiments of the present disclosure have been described and illustrated herein, those of ordinary skill in the art will readily envision a variety of other means and/or structures for performing the functions and/or obtaining the results and/or one or more of the advantages described herein, and each of such variations and/or modifications is deemed to be within the scope of the present disclosure. More generally, those skilled in the art will readily appreciate that all parameters, dimensions, materials, and configurations described herein are meant to be exemplary and that the actual parameters, dimensions, materials, and/or configurations will depend upon the specific application or applications for which the teachings of the present disclosure is/are used. Those skilled in the art will recognize, or be able to ascertain using no more than routine experimentation, many equivalents to the specific embodiments of the disclosure described herein. It is, therefore, to be understood that the foregoing embodiments are presented by way of example only and that, within the scope of the appended claims and equivalents thereto, the disclosure may be practiced otherwise than as specifically described and claimed. The present disclosure is directed to each individual feature, system, article, material, and/or method described herein. In addition, any combination of two or more such features, systems, articles, materials, and/or methods, if such features, systems, articles, materials, and/or methods are not mutually inconsistent, is included within the scope of the present disclosure.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Other elements may optionally be present other than the elements specifically identified by the "and/or" clause, whether related or unrelated to those elements specifically identified unless clearly indicated to the contrary. Thus, as a non-limiting example, a reference to "A and/or B," when used in conjunction with open-ended language such as "comprising" can refer, in one embodiment, to A without B (optionally including elements other than B); in another

embodiment, to B without A (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of' or "exactly one of," or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of." "Consisting essentially of," when used in the claims, shall have its ordinary meaning as used in the field of patent law.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

As used herein, "wt.%" is an abbreviation of weight percentage. As used herein, "at.%" is an abbreviation of atomic percentage.

Some embodiments may be embodied as a method, of which various examples have been described. The acts performed as part of the methods may be ordered in any suitable way. Accordingly, embodiments may be constructed in which acts are performed in an order different than illustrated, which may include different (e.g., more or less) acts than those that are described, and/or that may involve performing some acts simultaneously, even though the acts are shown as being performed sequentially in the embodiments specifically described above.

Use of ordinal terms such as "first," "second," "third," etc., in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

In the claims, as well as in the specification above, all transitional phrases such as "comprising," "including," "carrying," "having," "containing," "involving," "holding," and the like are to be understood to be open-ended, i.e., to mean including but not limited to. Only the transitional phrases "consisting of' and "consisting essentially of' shall be closed or semi-closed transitional phrases, respectively, as set forth in the United States Patent Office Manual of Patent Examining Procedures, Section 2111.03.

## Claims

1. A battery, comprising:

    an electrode comprising a composite comprising an electrochemically active material comprising a bis-tetraamino-benzoquinone molecule and/or a dimer, tautomer, oligomer, polymer, and/or derivative thereof, and wherein the composite further comprises at least one carbon nanotube (CNT),
    wherein the battery has a discharge capacity greater than or equal to 125 mAh per gram of the electrode when current density is set at a value of at least 1000 mA per gram of the electrochemically active material in the electrode.

2. The battery of claim 1, wherein the discharge capacity of the battery is greater than or equal to 200 mAh per gram of the electrode when current density is set at the value of at least 1000 mA per gram of the electrochemically active material in the electrode; and/or

    wherein the battery is a rechargeable battery; and/or
    wherein the battery is a sodium-ion battery.

3. A rechargeable sodium-ion battery, comprising:

an electrode comprising an electrochemically active material,
wherein the rechargeable sodium-ion battery has a discharge capacity greater than or equal to 200 mAh per gram of the electrode when current density is set at a value of at least 1000 mA per gram of the electrochemically active material in the electrode.

**4.** The battery of claim 3, wherein the electrode comprises a composite comprising the electrochemically active material, optionally wherein the electrochemically active material comprises a bis-tetraamino-benzoquinone molecule and/or a derivative, dimer, tautomer, oligomer, and/or polymer thereof.

**5.** The battery of claim 4, wherein the composite further comprises at least one carbon nanotube (CNT).

**6.** The battery of any one of claims 1-2 and 5, wherein the composite comprises the at least one CNT in an amount less than or equal to 5 weight percent (wt.%) versus a total weight of the composite,
optionally wherein the composite comprises the at least one CNT in the amount less than or equal to 1 wt.% versus the total weight of the composite.

**7.** The battery of claim 6, wherein the composite comprises the at least one CNT in an amount greater than or equal to 0.1 wt.% versus the total weight of the composite.

**8.** The battery of any one of claims 1-7, wherein the battery is capable of being cycled at least 2000 times such that, when current density is set at the value of at least 1000 mA per gram of the electrochemically active material in the electrode, the discharge capacity of the battery decreases by less than or equal to 30%, or less than or equal to 20%, or less than or equal to 10% after the battery is cycled the at least 2000 times; and/or
wherein the battery is capable of being cycled at least 5000 times such that, when current density is set at the value of at least 1000 mA per gram of the electrochemically active material in the electrode, the discharge capacity of the battery decreases by less than or equal to 30% after the battery is cycled the at least 5000 times.

**9.** The battery of any one of claims 1-8, wherein the discharge capacity of the battery is greater than or equal to 125 mAh per gram of the electrode when current density is set at a value of at least 5000 mA per gram of the electrochemically active material in the electrode,
wherein optionally:
the battery is capable of being cycled at least 2000 times such that, when current density is set at the value of at least 5000 mA per gram of the electrochemically active material in the electrode, the discharge capacity of the battery decreases by less than or equal to 30%, or less than or equal to 20%, or less than or equal to 10% after the battery is cycled the at least 2000 times.

**10.** The battery of claim 9, wherein the battery is capable of being cycled at least 5000 times such that, when current density is set at the value of at least 5000 mA per gram of the electrochemically active material in the electrode, the discharge capacity of the battery decreases by less than or equal to 30%, or less than or equal to 20%, or less than or equal to 10% after the battery is cycled the at least 5000 times.

**11.** The battery of any one of claims 1-10, wherein the discharge capacity of the battery is greater than or equal to 100 mAh per gram of the electrode when current density is set at a value of at least 10000 mA per gram of the electrochemically active material in the electrode;
wherein optionally:
the battery is capable of being cycled at least 2000 times such that, when current density is set at the value of at least 10000 mA per gram of the electrochemically active material in the electrode, the discharge capacity of the battery decreases by less than or equal to 30%, or less than or equal to 20%, or less than or equal to 10% after the battery is cycled the at least 2000 times.

**12.** The battery of claim 11, wherein the battery is capable of being cycled at least 5000 times such that, when current density is set at the value of at least 10000 mA per gram of the electrochemically active material in the electrode, the discharge capacity of the battery decreases by less than or equal to 30% %, or less than or equal to 20%, or less than or equal to 10% after the battery is cycled the at least 5000 times.

**13.** A method of operating a battery, comprising:

discharging the battery, wherein the battery comprises an electrode comprising a composite comprising an

electrochemically active material comprising a bis-tetraamino-benzoquinone molecule and/or a dimer, tautomer, oligomer, polymer, and/or derivative thereof, and wherein the composite further comprises at least one carbon nanotube (CNT),
wherein the battery has a discharge capacity greater than or equal to 125 mAh per gram of the electrode when current density is set at a value of at least 1000 mA per gram of the electrochemically active material in the electrode.

**14.** The method of claim 13, wherein:

a) the discharge capacity of the battery is greater than or equal to 200 mAh per gram of the electrode when current density is set at the value of at least 1000 mA per gram of the electrochemically active material in the electrode; and/or
b) wherein the battery is a rechargeable battery, optionally wherein the battery is a sodium-ion battery.

**15.** The method of claim 14b), further comprising charging the battery.

**16.** The method of claim 15, further comprising cycling the battery, wherein the cycling comprises discharging and charging the battery;
optionally:
wherein the cycling comprises cycling the battery at least 2000 times, and wherein, when current density is set at the value of at least 1000 mA per gram of the electrochemically active material in the electrode, the discharge capacity of the battery decreases by less than or equal to 30%, less than or equal to 20%, or less than or equal to 10% after cycling the battery the at least 2000 times.

**17.** The method of claim 16, wherein

a) the cycling comprises cycling the battery at least 5000 times, and
wherein, when current density is set at the value of at least 1000 mA per gram of the electrochemically active material in the electrode, the discharge capacity of the battery decreases by less than or equal to 30% after cycling the battery the at least 5000 times; and/or
b) wherein the discharge capacity of the battery is greater than or equal to 125 mAh per gram of the electrode when current density is set at a value of at least 5000 mA per gram of the electrochemically active material in the electrode.

**18.** The method of claim 17b), wherein the cycling comprises cycling the battery at least 2000 times, and

wherein, when current density is set at the value of at least 5000 mA per gram of the electrochemically active material in the electrode, the discharge capacity of the battery decreases by less than or equal to 30%, less than or equal to 20%, or less than or equal to 10% after cycling the battery the at least 2000 times,
optionally:
wherein the cycling comprises cycling the battery at least 5000 times, and
wherein, when current density is set at the value of at least 5000 mA per gram of the electrochemically active material in the electrode, the discharge capacity of the battery decreases by less than or equal to 30%, less than or equal to 20%, or less than or equal to 10% after cycling the battery the at least 5000 times.

**19.** The method of any one of claims 16-18,
wherein the discharge capacity of the battery is greater than or equal to 100 mAh per gram of the electrode when current density is set at a value of at least 10000 mA per gram of the electrochemically active material in electrode, optionally:

a) wherein the cycling comprises cycling the battery at least 2000 times, and wherein, when current density is set at the value of at least 10000 mA per gram of the electrochemically active material in the electrode, the discharge capacity of the battery decreases by less than or equal to 30%, less than or equal to 20%, or less than or equal to 10% after cycling the battery the at least 2000 times; and/or
b) wherein the cycling comprises cycling the battery at least 5000 times, and wherein, when current density is set at the value of at least 10000 mA per gram of the electrochemically active material in the electrode, the discharge capacity of the battery decreases by less than or equal to 30%, less than or equal to 20%, or less than or equal to 10% after cycling the battery the at least 5000 times.

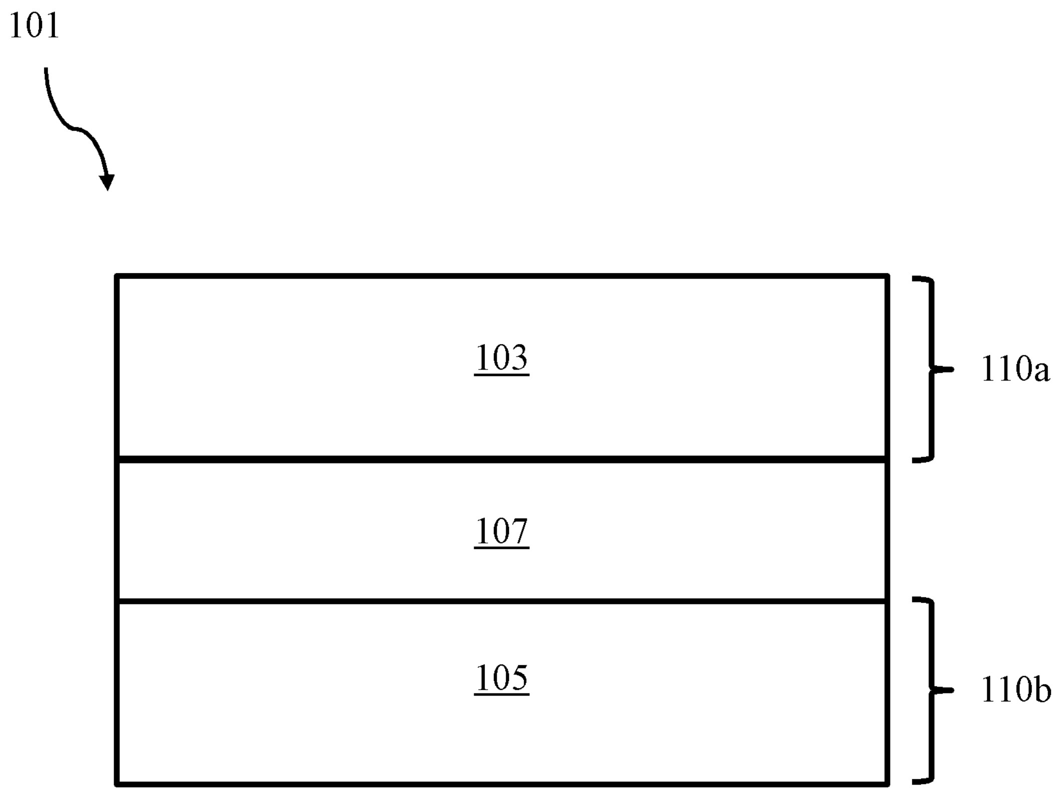


*FIG. 1*

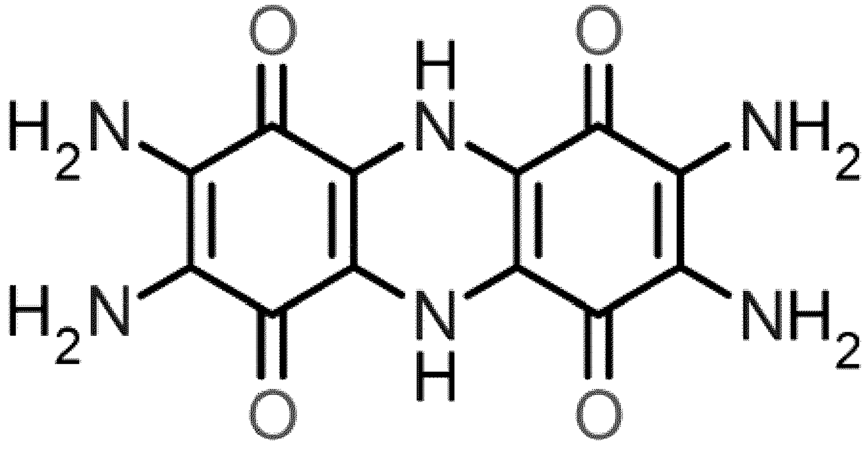

*FIG. 2A*

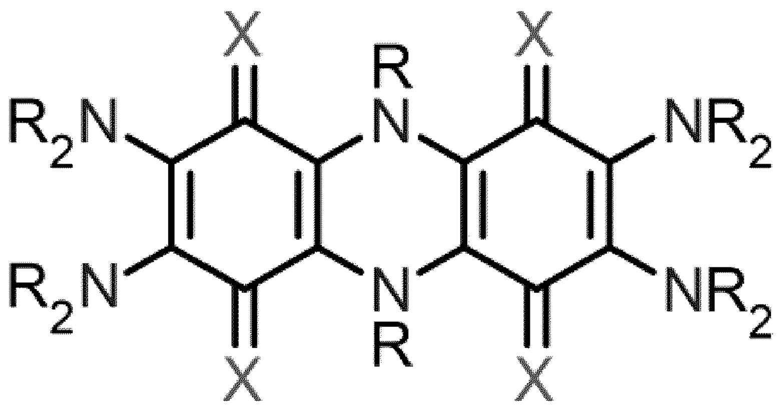

R = alkyl, aryl

X = O, NH, NR, S, Se

*FIG. 2B*

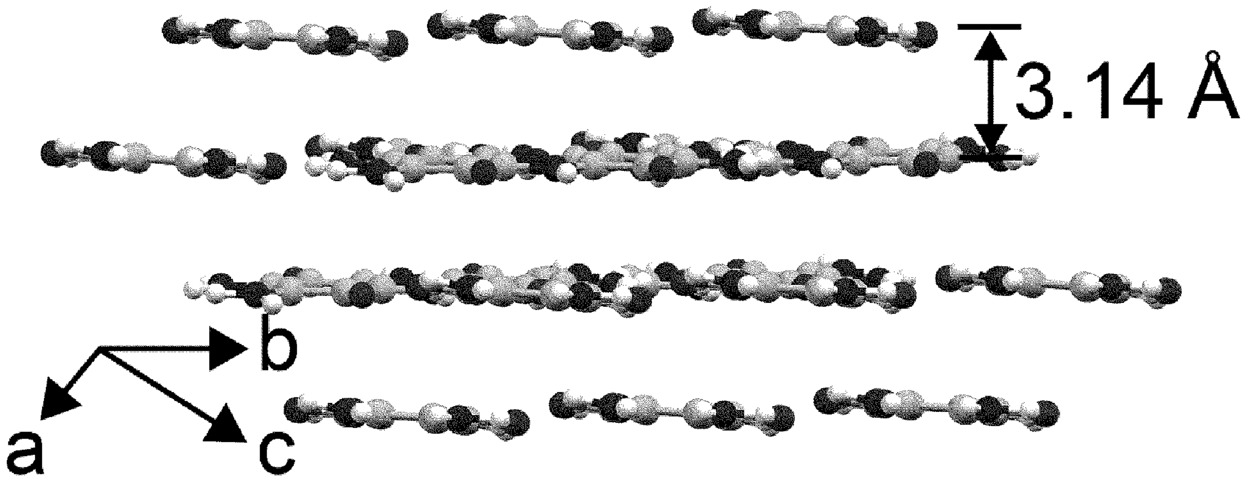


*FIG. 3*

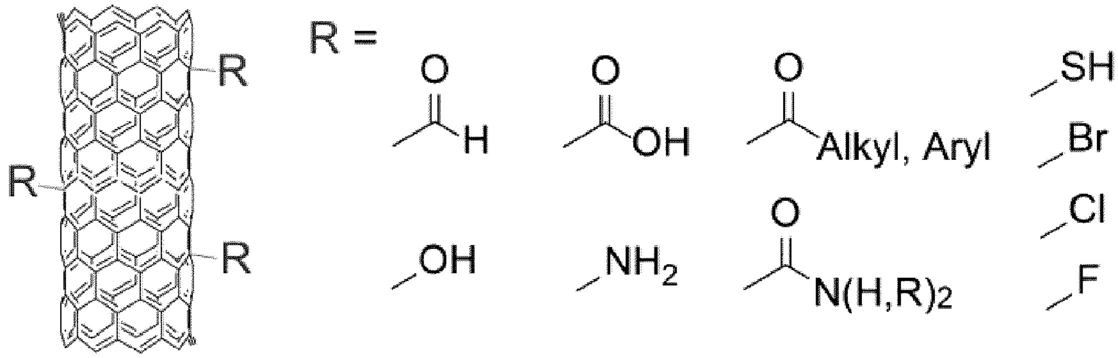

Functionalized Single-walled and Multi-walled CNTs

*FIG. 4*

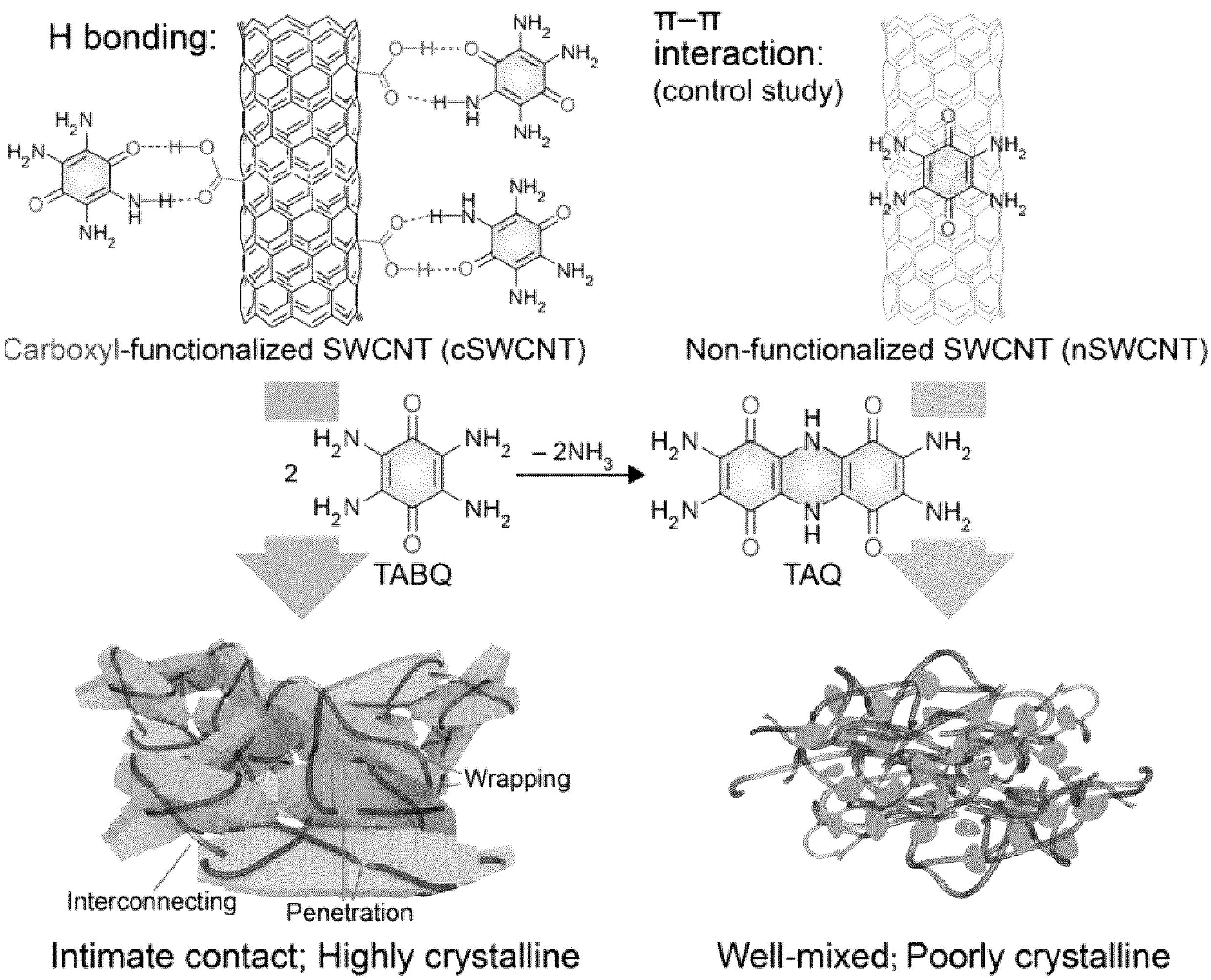


*FIG. 5*

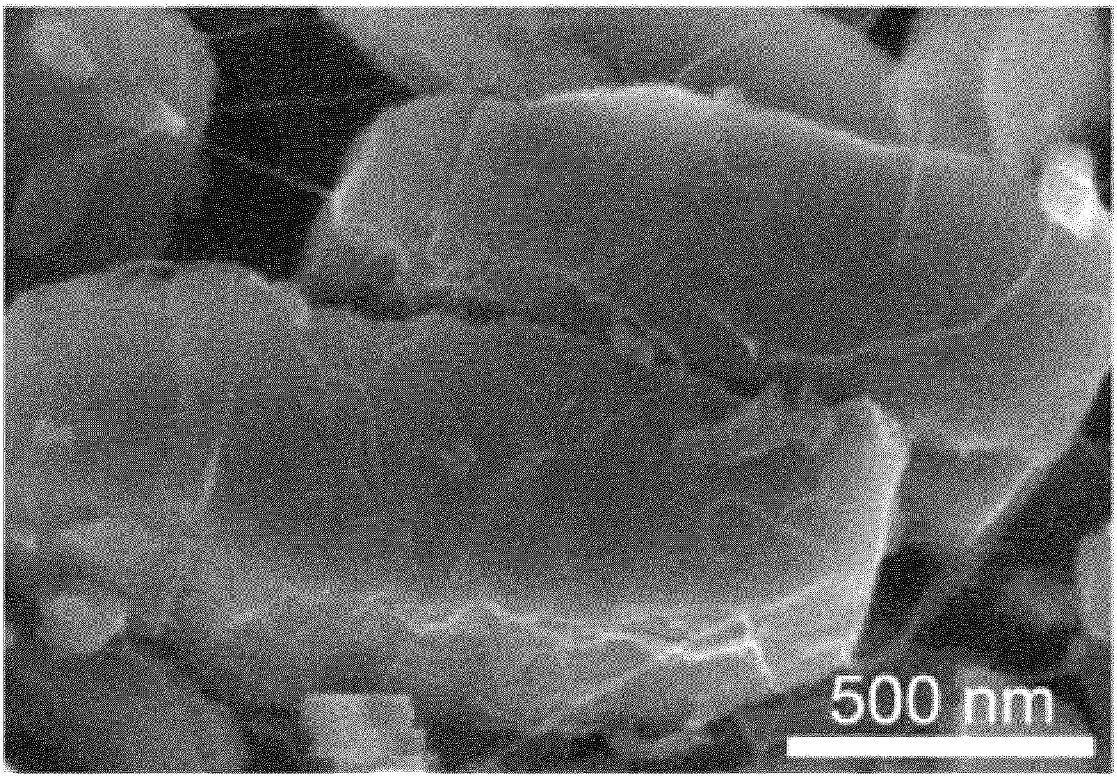


*FIG. 6A*

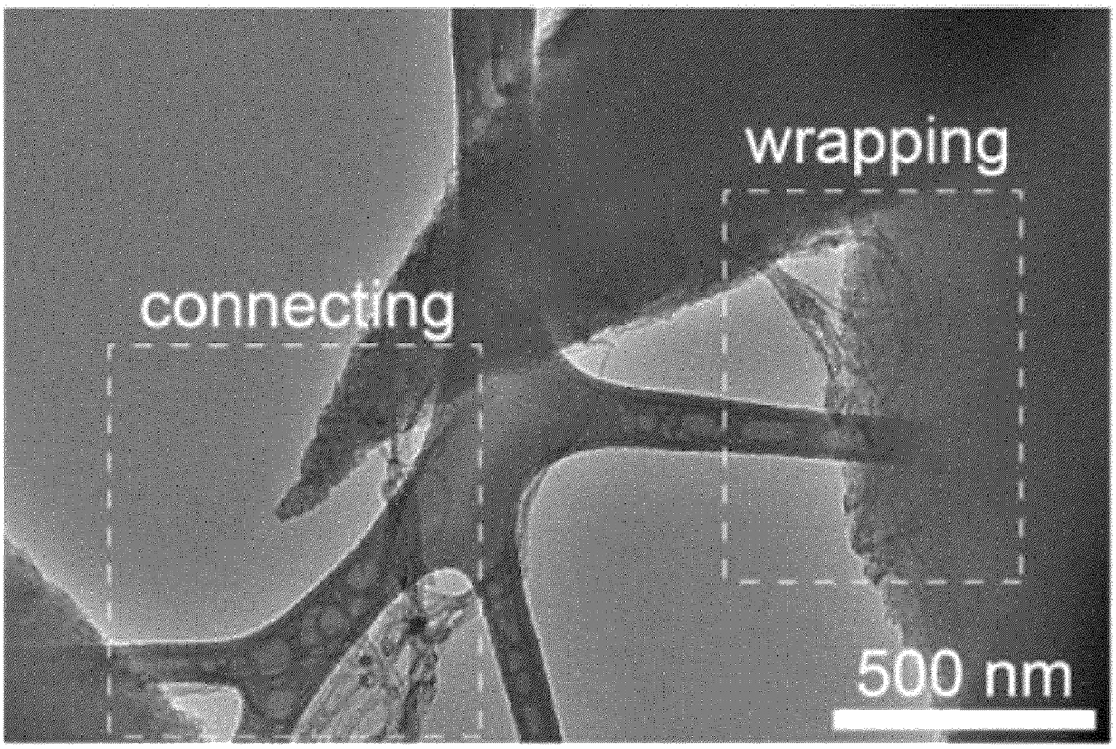


*FIG. 6B*

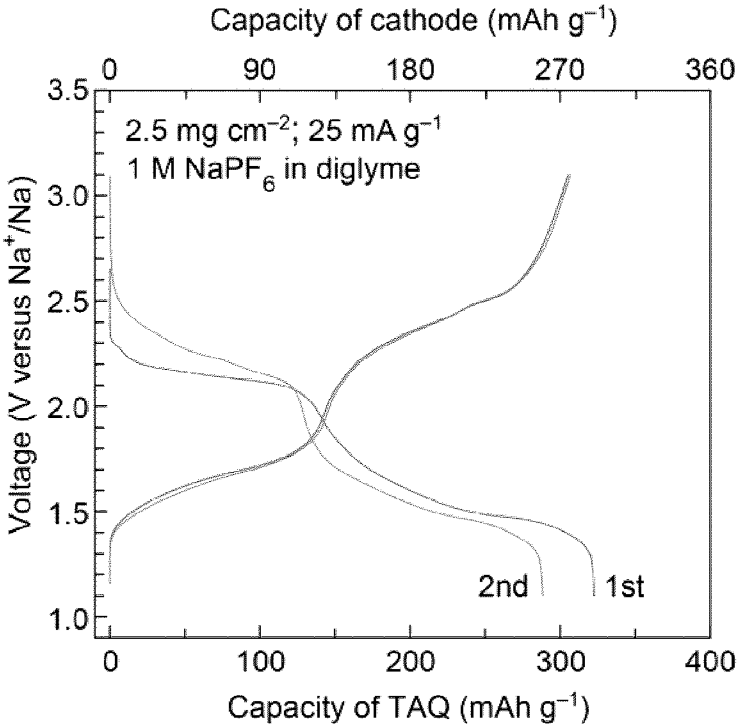
Capacity of cathode (mAh g⁻¹)
0
90
180
270
360
2.5 mg cm⁻²; 25 mA g⁻¹
1 M NaPF6 in diglyme
Voltage (V versus Na⁺/Na)
3.5
3.0
2.5
2.0
1.5
1.0
2nd
1st
0
100
200
300
400
Capacity of TAQ (mAh g⁻¹)

*FIG. 7*

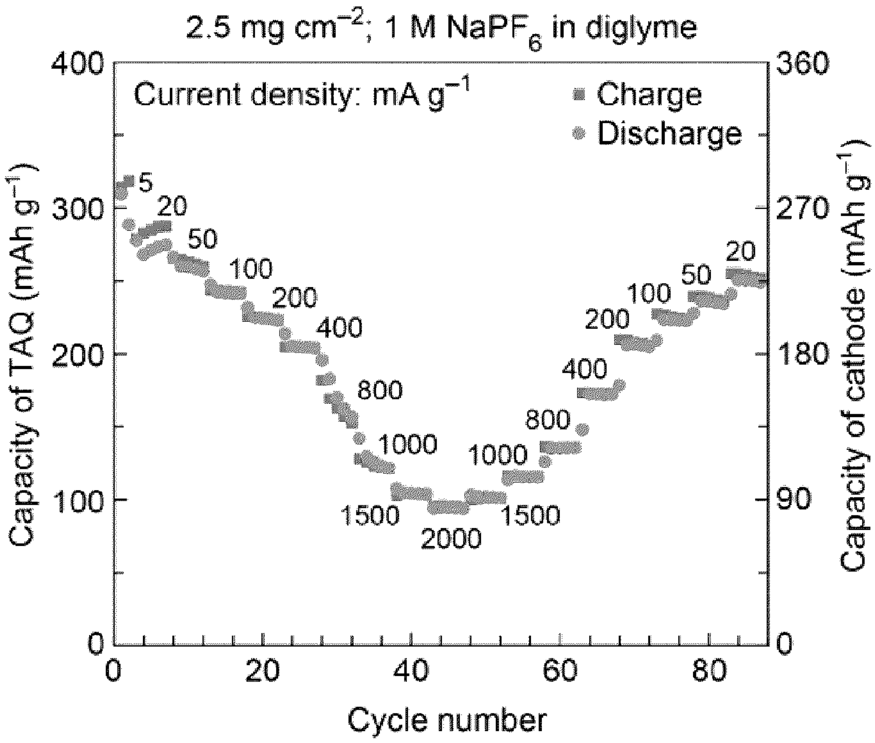
2.5 mg cm⁻²; 1 M NaPF6 in diglyme
Current density: mA g⁻¹
Charge
Discharge
Capacity of TAQ (mAh g⁻¹)
Capacity of cathode (mAh g⁻¹)
400
300
200
100
0
360
270
180
90
0
5
20
50
100
200
400
800
1000
1500
2000
1000
1500
800
400
200
100
50
20
0
20
40
60
80
Cycle number

*FIG. 8*

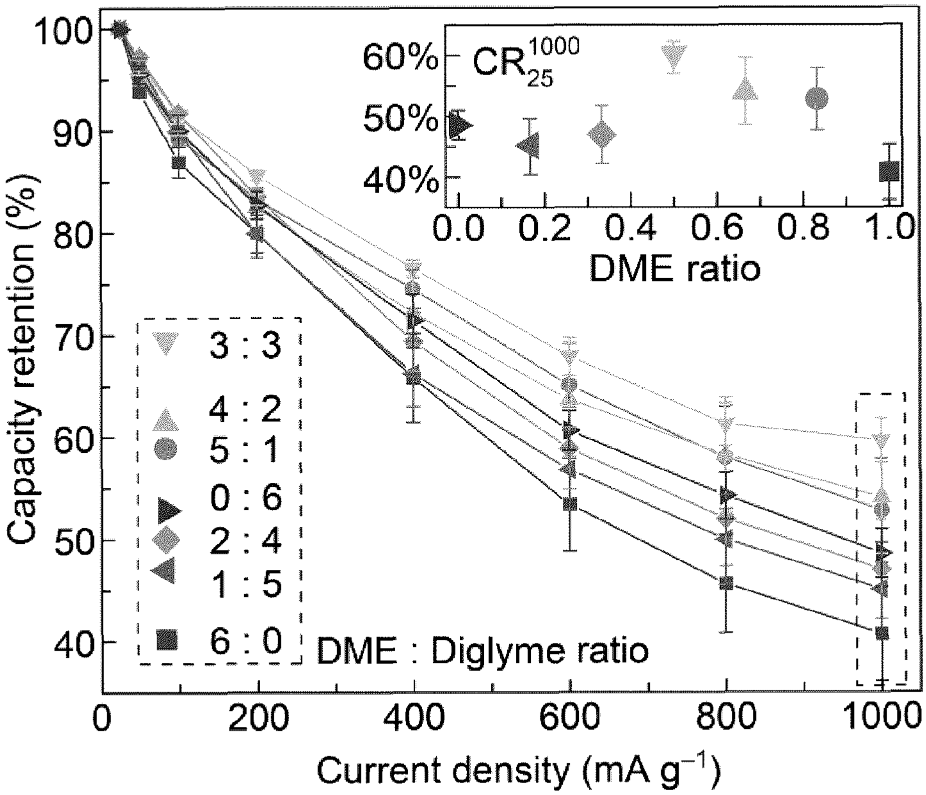
Capacity retention (%)
Current density (mA g$^{-1}$)
$CR_{25}^{1000}$
DME ratio
3 : 3
4 : 2
5 : 1
0 : 6
2 : 4
1 : 5
6 : 0
DME : Diglyme ratio

*FIG. 9*

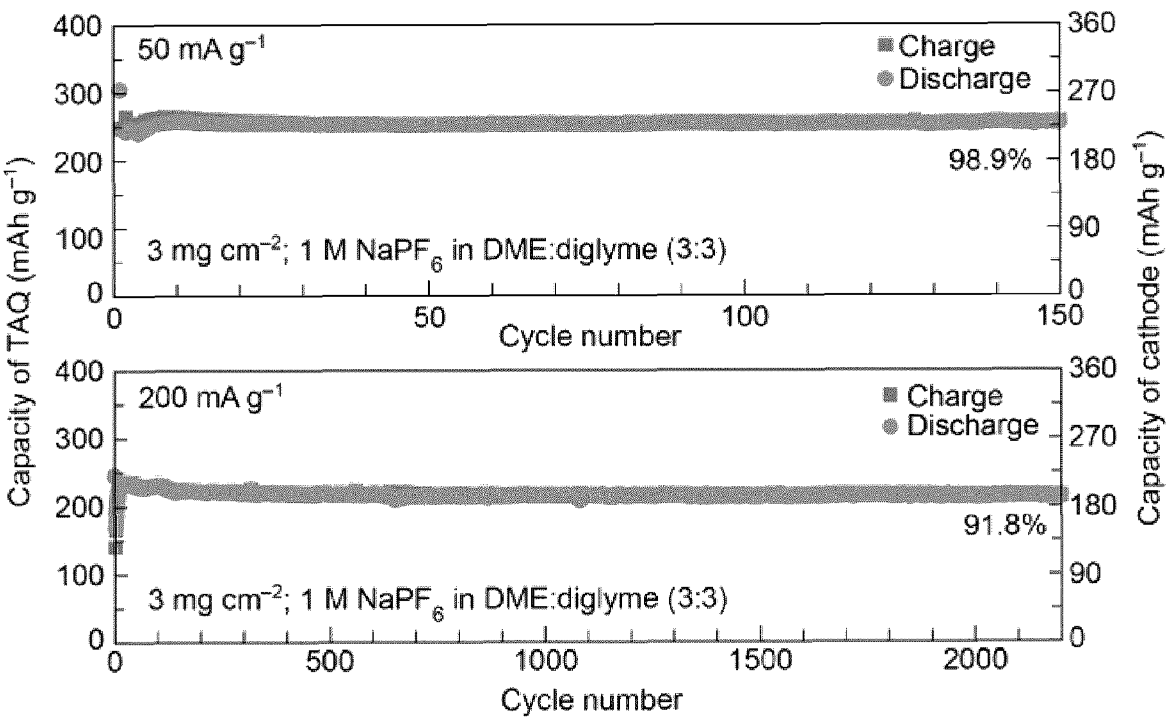
50 mA g$^{-1}$
Charge
Discharge
98.9%
3 mg cm$^{-2}$; 1 M $NaPF_6$ in DME:diglyme (3:3)
Cycle number
200 mA g$^{-1}$
Charge
Discharge
91.8%
3 mg cm$^{-2}$; 1 M $NaPF_6$ in DME:diglyme (3:3)
Cycle number
Capacity of TAQ (mAh g$^{-1}$)
Capacity of cathode (mAh g$^{-1}$)

*FIG. 10*

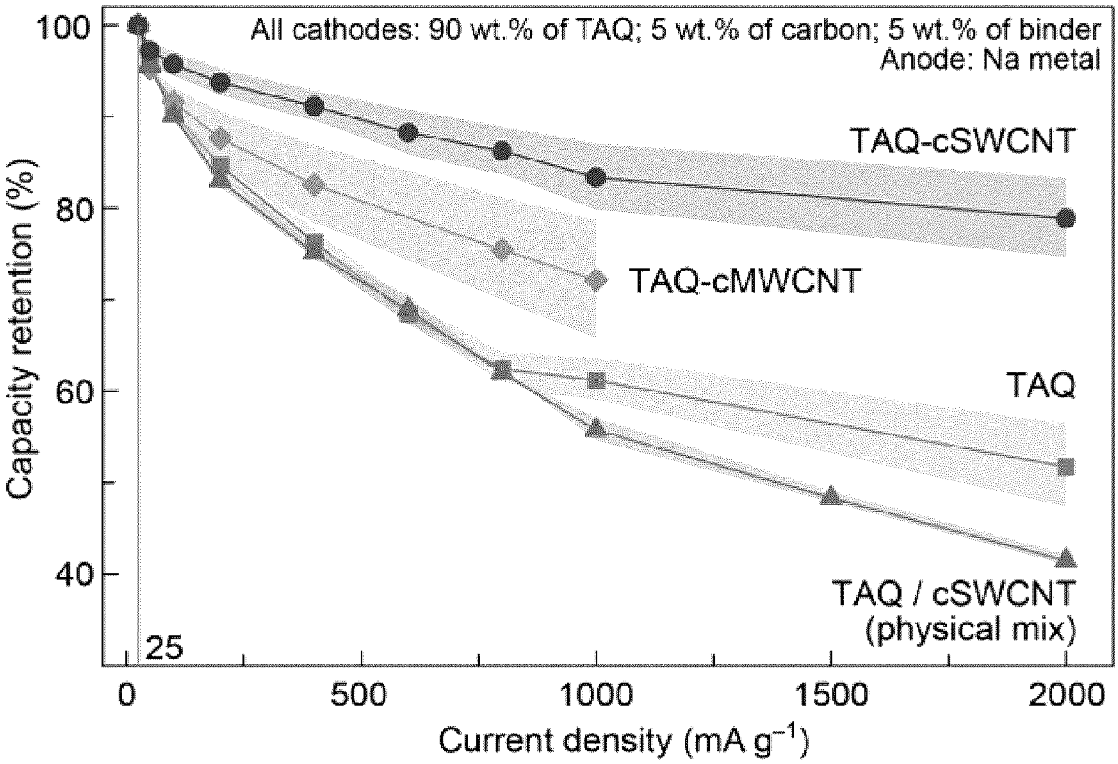
All cathodes: 90 wt.% of TAQ; 5 wt.% of carbon; 5 wt.% of binder
Anode: Na metal
TAQ-cSWCNT
TAQ-cMWCNT
TAQ
TAQ / cSWCNT (physical mix)
Capacity retention (%)
Current density (mA g−1)
25
100
80
60
40
0
500
1000
1500
2000

*FIG. 11*

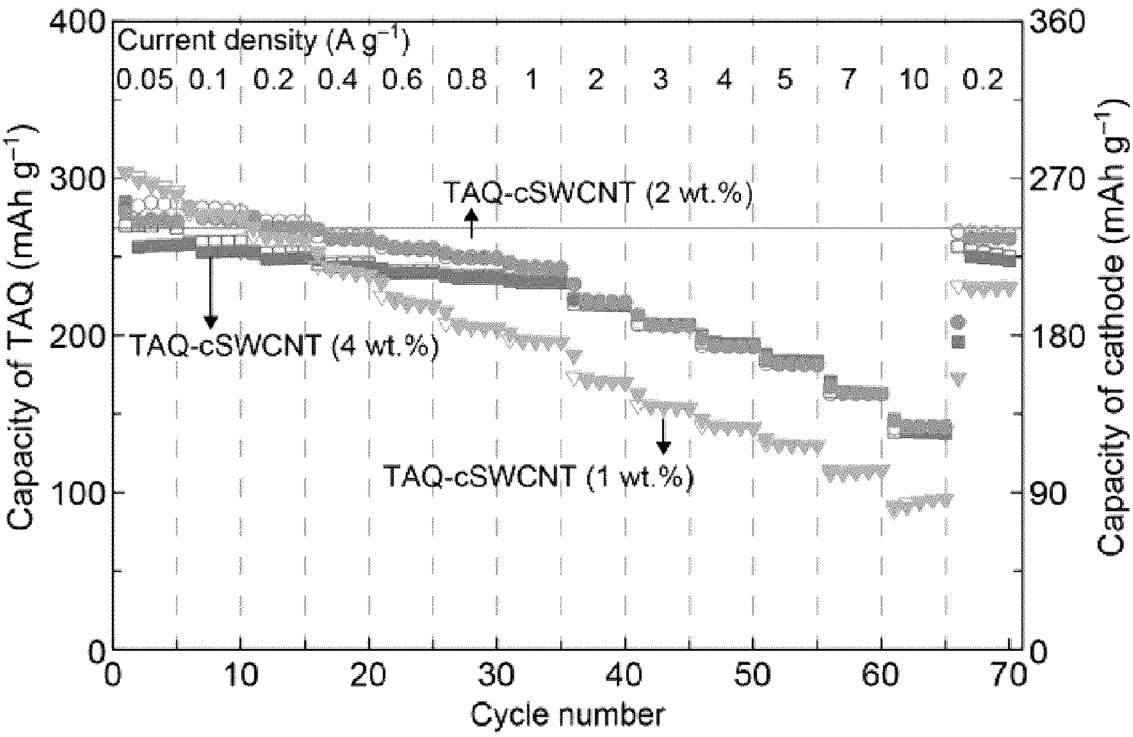
Current density (A g−1)
0.05 0.1 0.2 0.4 0.6 0.8 1 2 3 4 5 7 10 0.2
TAQ-cSWCNT (2 wt.%)
TAQ-cSWCNT (4 wt.%)
TAQ-cSWCNT (1 wt.%)
Capacity of TAQ (mAh g−1)
Capacity of cathode (mAh g−1)
Cycle number
400
300
200
100
0
360
270
180
90
0
10
20
30
40
50
60
70

*FIG. 12*

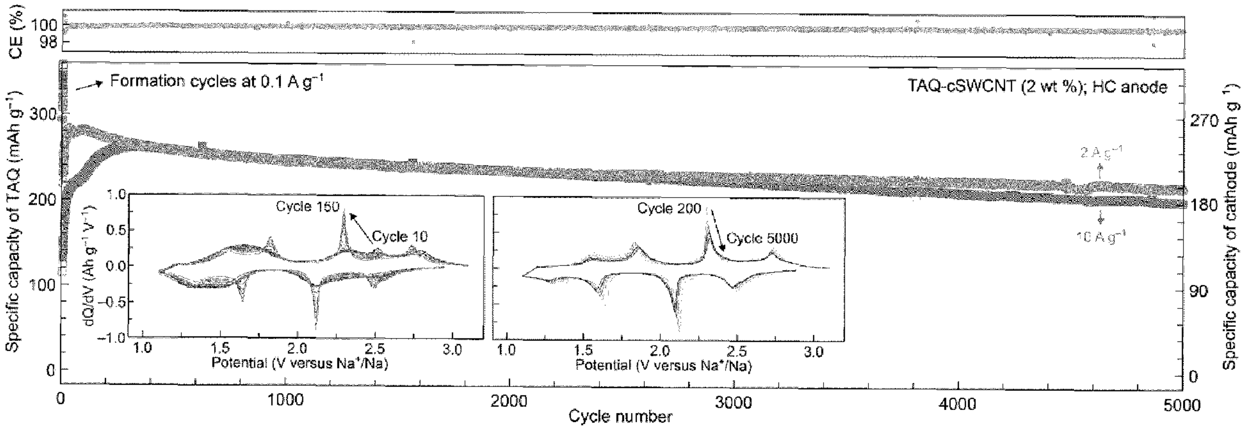
CE (%)
100
98
Formation cycles at 0.1 A g$^{-1}$
TAQ-cSWCNT (2 wt %); HC anode
Specific capacity of TAQ (mAh g$^{-1}$)
Specific capacity of cathode (mAh g$^{-1}$)
2 A g$^{-1}$
10 A g$^{-1}$
Cycle 150
Cycle 10
Cycle 200
Cycle 5000
dQ/dV (Ah g$^{-1}$ V$^{-1}$)
Potential (V versus Na$^+$/Na)
Cycle number

*FIG. 13*

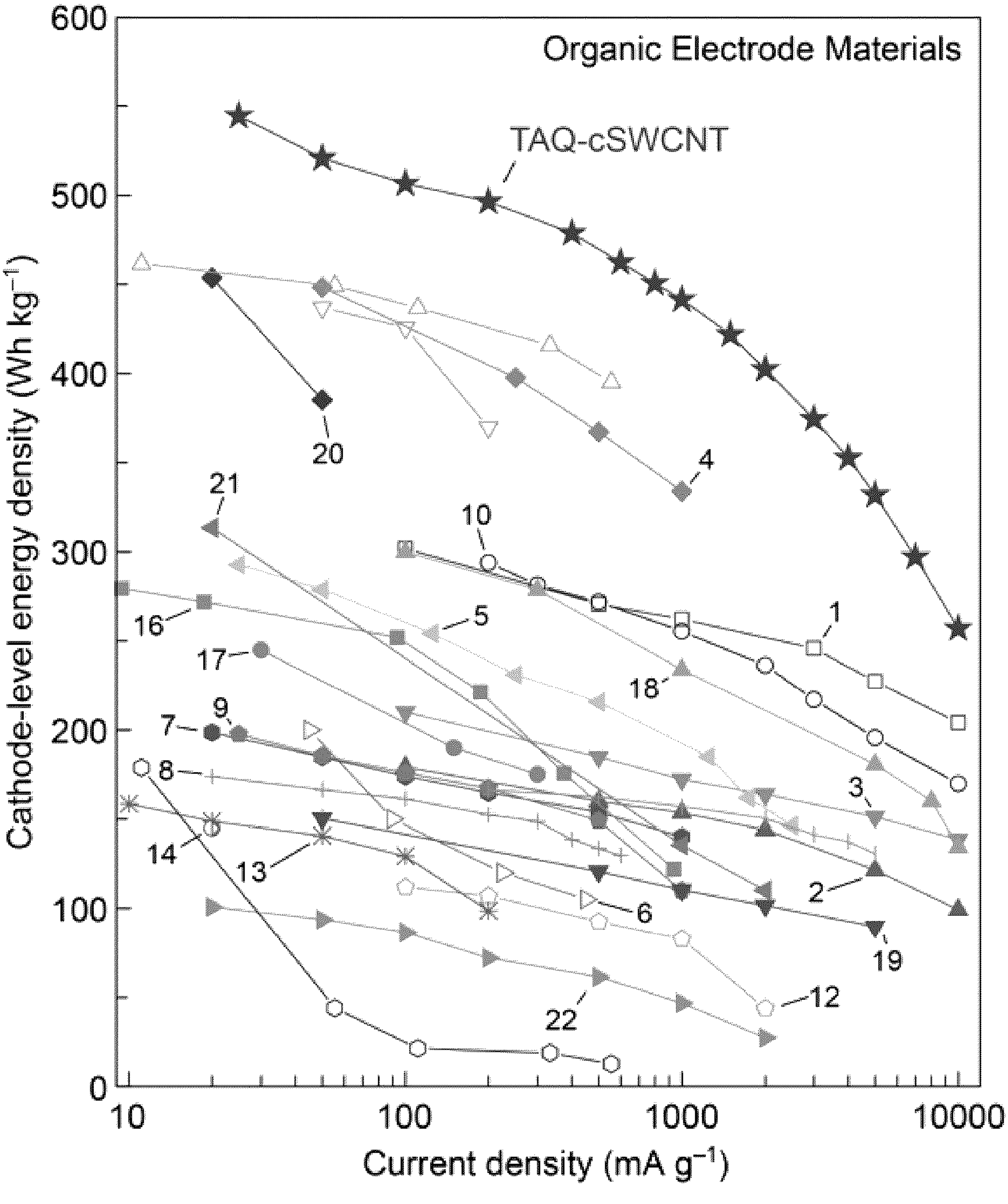
Organic Electrode Materials
TAQ-cSWCNT
Cathode-level energy density (Wh kg$^{-1}$)
Current density (mA g$^{-1}$)
600
500
400
300
200
100
0
10
100
1000
10000
1
2
3
4
5
6
7
8
9
10
12
13
14
16
17
18
19
20
21
22

*FIG. 14A*

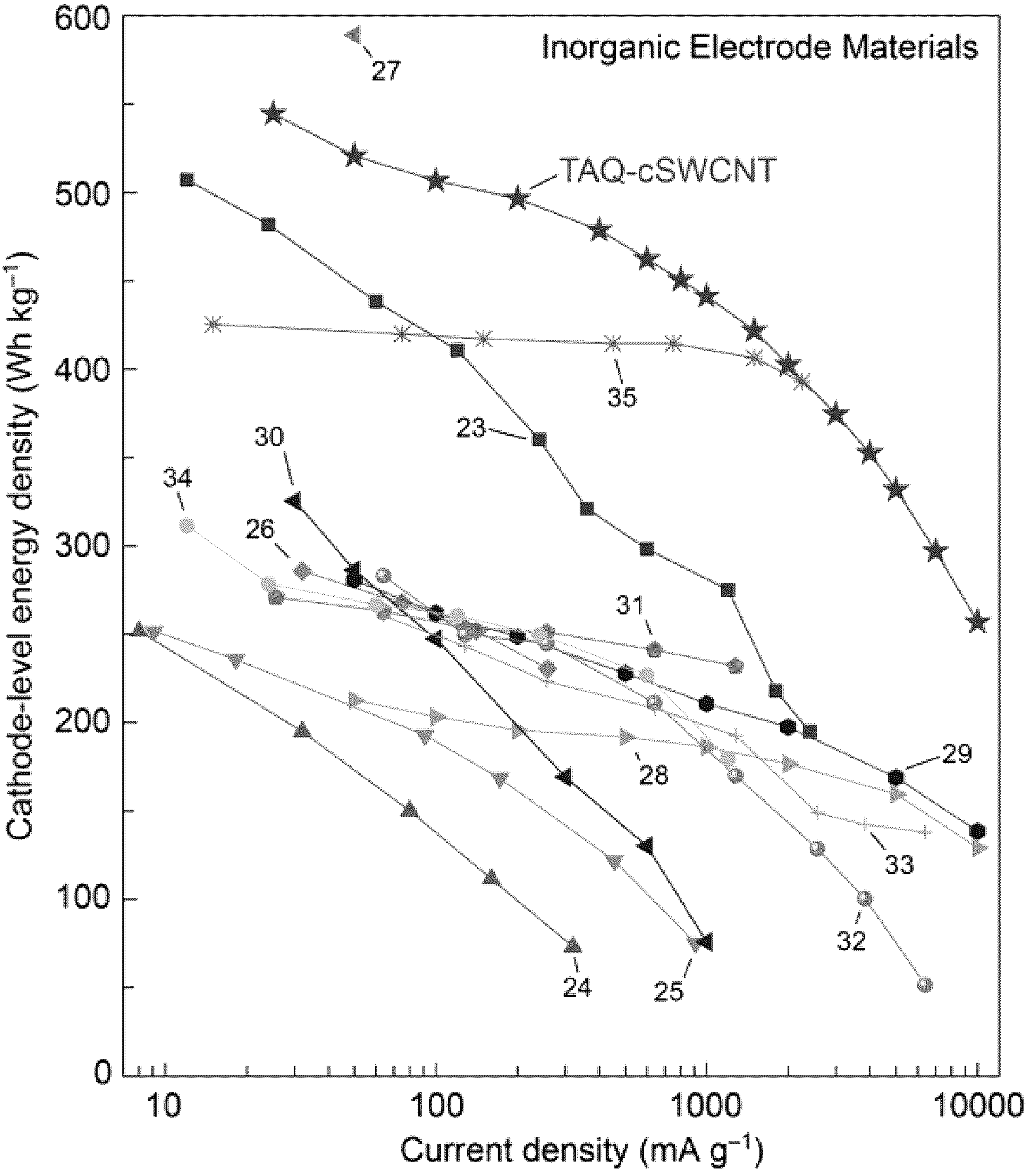
Inorganic Electrode Materials
TAQ-cSWCNT
27
35
23
30
34
26
31
29
28
33
32
24
25
Cathode-level energy density (Wh kg$^{-1}$)
0
100
200
300
400
500
600
10
100
1000
10000
Current density (mA g$^{-1}$)

*FIG. 14B*

| | | | | | | | |
|---|---|---|---|---|---|---|---|
| 1 | PPTO–CNTs[8] | 10 | PYT–TABQ/RGO[17] | 19 | DAPT-TFP-CPF[26] | 28 | Na3.5V1.5Fe0.5(PO4)3 (2 - 3.8 V window)[35] |
| 2 | PPTS[9] | 11 | NTCDA sufamide (PI)[18] | 20 | CuTCNQ[27] | 29 | Na3.5V1.5Fe0.5(PO4)3 (1.7 - 4.3 V window)[36] |
| 3 | PBQS[10] | 12 | PAQI@G (graphene)[19] | 21 | tetrahydroxy-1,4-benzoquinone disodium salt (TBDS)[28] | 30 | Na3V1.5Cr0.5(PO4)3[37] |
| 4 | Na2C6O6[11] | 13 | Na4-PTtSA[20] | 22 | 2,5-dihydroxy-1,4-benzoquinone disodium salt (DBDS)[29] | 31 | Na3V2(PO4)2F3/SWCNTs[38] |
| 5 | Na2C6O6[12] | 14 | Na2-Co-PTtSA[21] | 23 | P2-type Na0.55[Ni0.1Fe0.1Mn0.8]O2[30] | 32 | Na3V2(PO4)2F3@C[39] |
| 6 | P5Q[13] | 15 | 2PTCDA[22] | 24 | Na1.2Fe1.2PO4F0.6_M[31] | 33 | NVPF@C@CNF-5[40] |
| 7 | PTCDA[14] | 16 | Na4C8H2O6[23] | 25 | Na0.6Fe1.2PO4[32] | 34 | Na0.62Mn0.67Ni0.23Cu0.05Mg0.07Ti0.01O2[41] |
| 8 | PTCDI[15] | 17 | PT[24] | 26 | NASICON-structured Na3MnTi(PO4)3/C microsphere[33] | 35 | R-Na1.92Fe[Fe(CN)6][42] |
| 9 | Na2PDHBQS[16] | 18 | TABQ-COF[25] | 27 | Na2MoS4[34] | | |

*FIG. 14C*

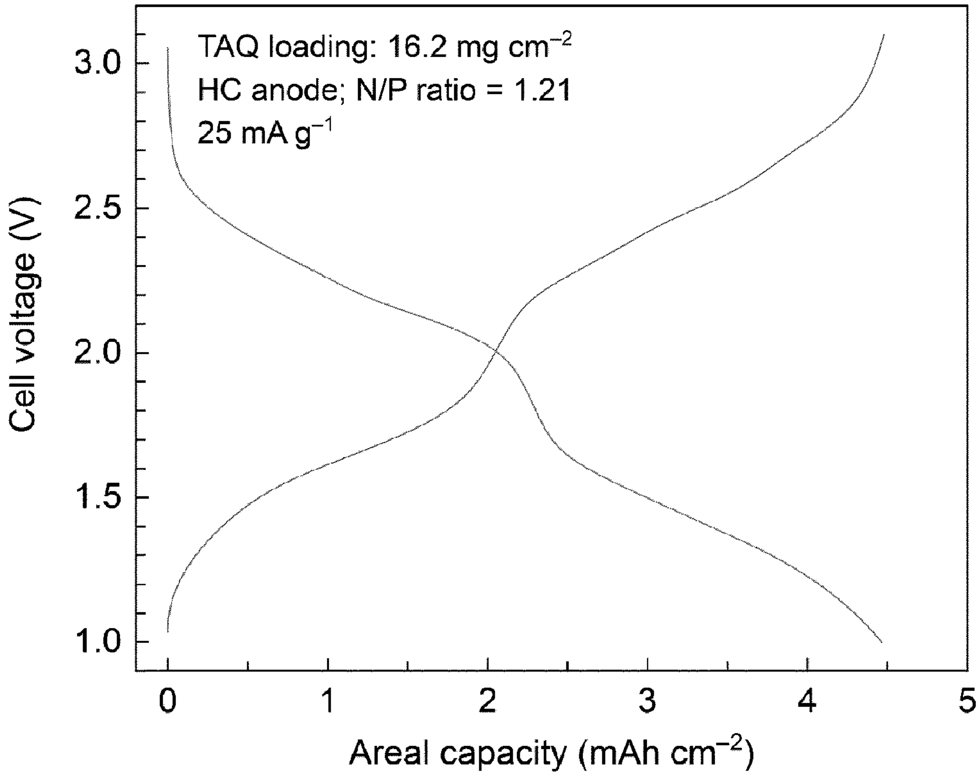


*FIG. 14D*

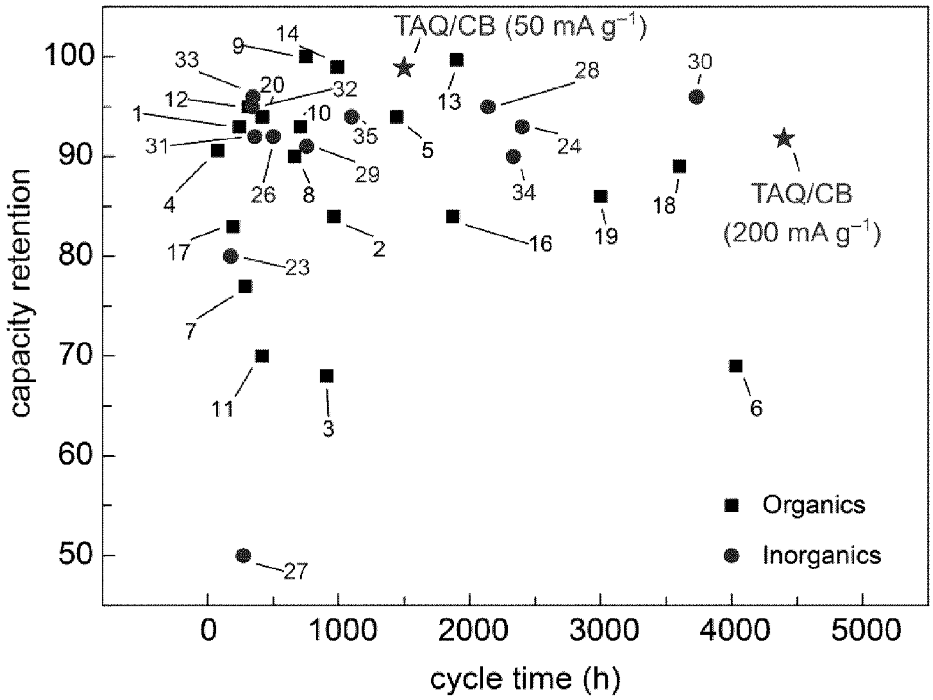


*FIG. 14E*

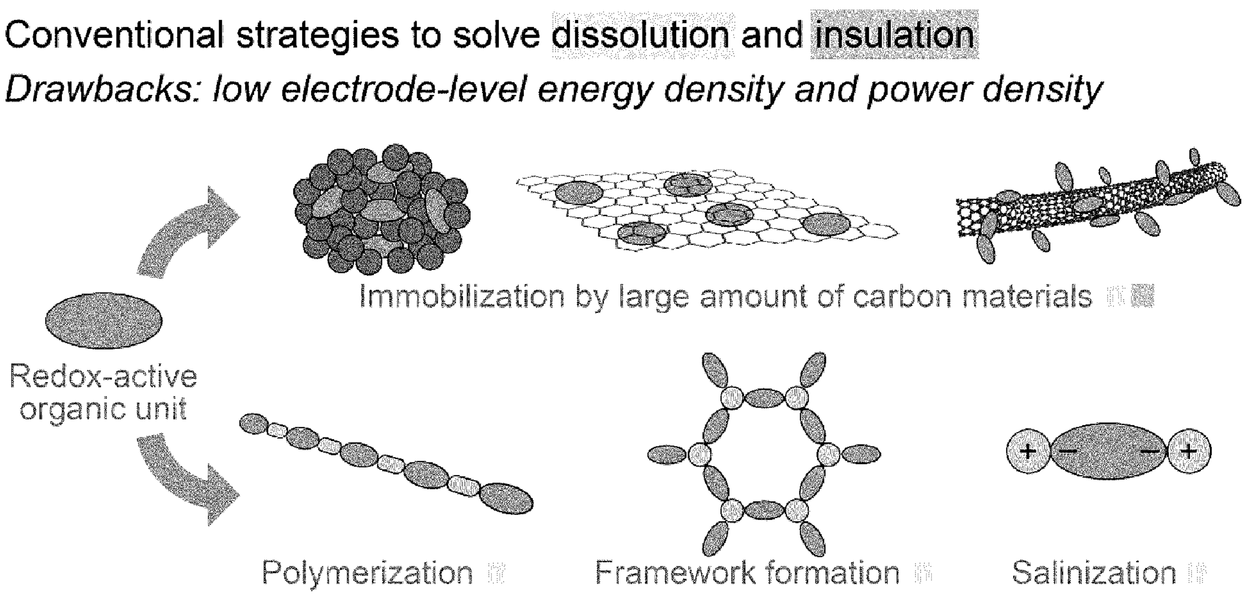
Conventional strategies to solve dissolution and insulation
*Drawbacks: low electrode-level energy density and power density*
Immobilization by large amount of carbon materials
Redox-active organic unit
Polymerization
Framework formation
Salinization
+
−
−
+

*FIG. 15A*

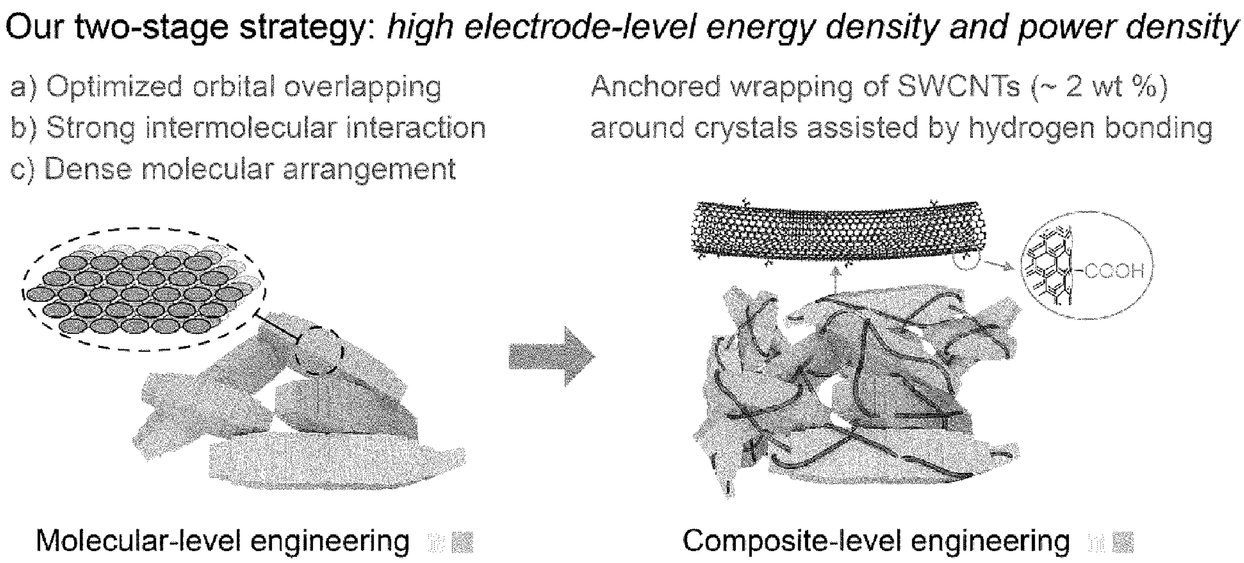
Our two-stage strategy: *high electrode-level energy density and power density*
a) Optimized orbital overlapping
b) Strong intermolecular interaction
c) Dense molecular arrangement
Anchored wrapping of SWCNTs (~ 2 wt %)
around crystals assisted by hydrogen bonding
-COOH
Molecular-level engineering
Composite-level engineering

*FIG. 15B*

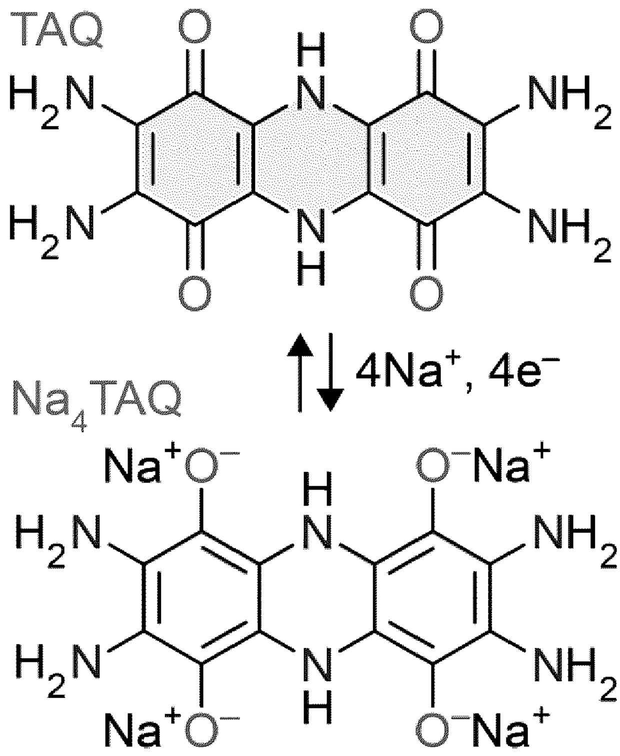


*FIG. 15C*

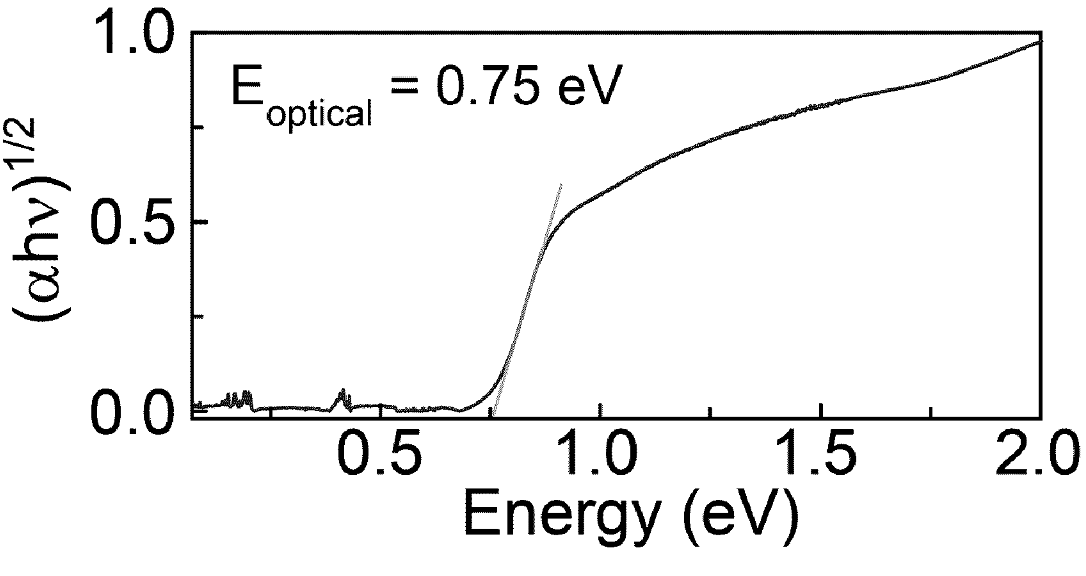


*FIG. 15D*

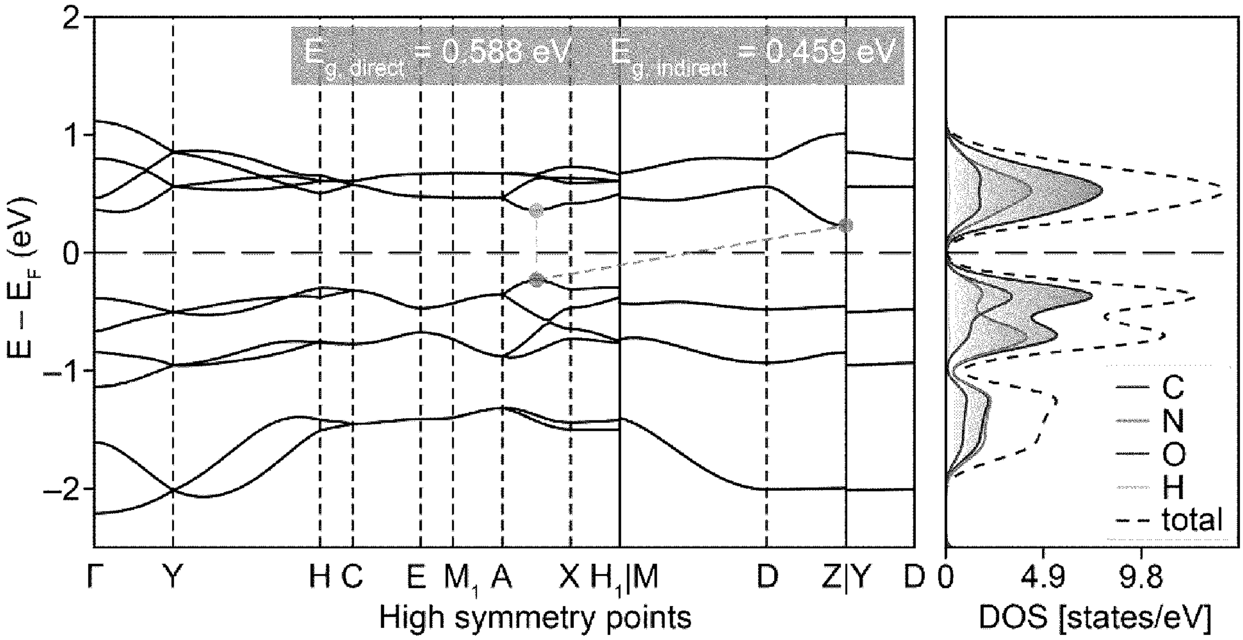

$E_{g,\ direct}$ = 0.588 eV
$E_{g,\ indirect}$ = 0.459 eV
E − $E_F$ (eV)
2
1
0
−1
−2
Γ Y H C E $M_1$ A X $H_1$|M D Z|Y D
High symmetry points
0 4.9 9.8
DOS [states/eV]
C
N
O
H
total


*FIG. 15E*

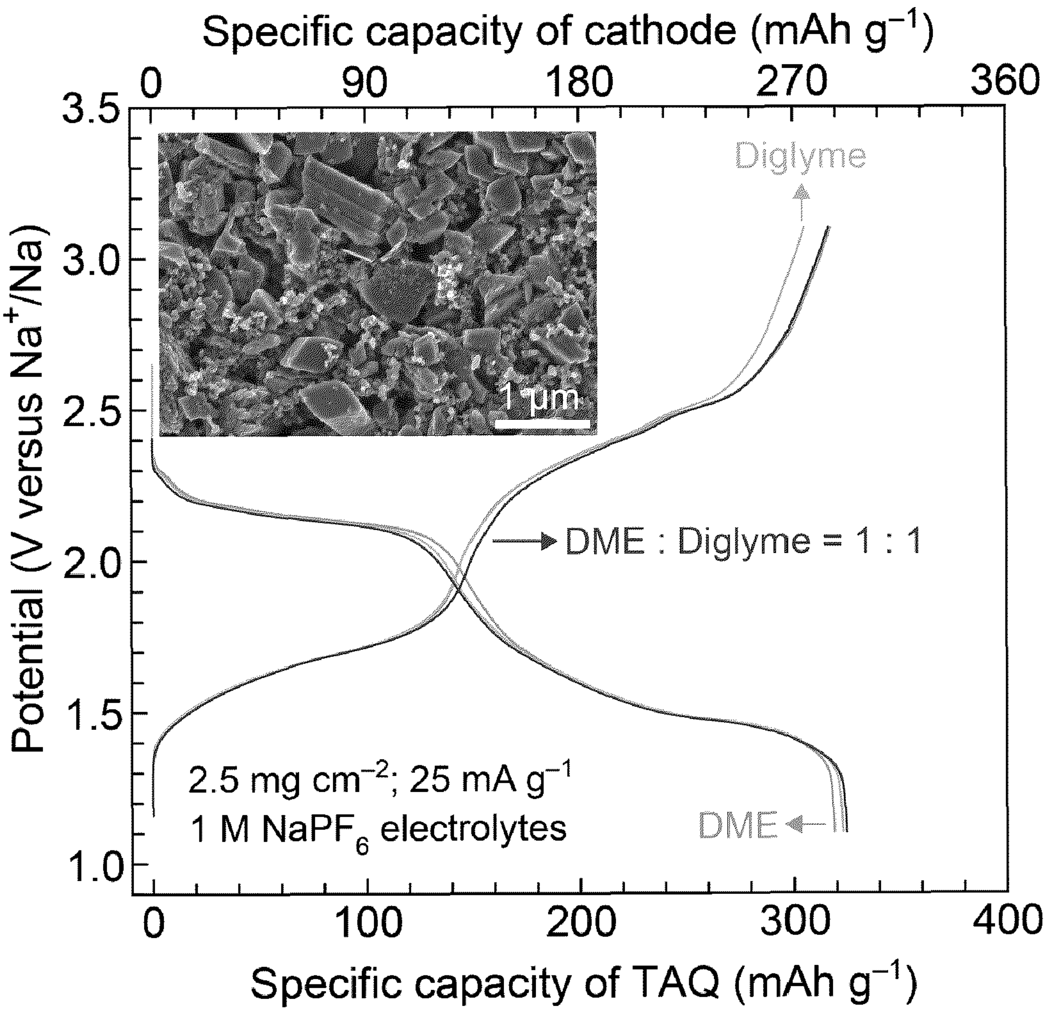
Specific capacity of cathode (mAh g−1)
0
90
180
270
360
3.5
3.0
2.5
2.0
1.5
1.0
Potential (V versus Na+/Na)
1 µm
Diglyme
DME : Diglyme = 1 : 1
DME
2.5 mg cm−2; 25 mA g−1
1 M NaPF6 electrolytes
0
100
200
300
400
Specific capacity of TAQ (mAh g−1)

*FIG. 15F*

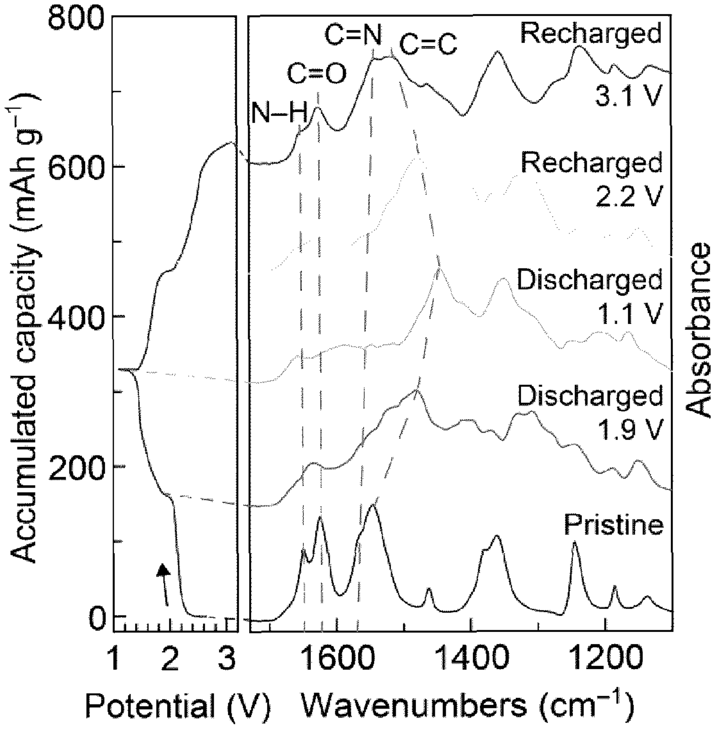


*FIG. 16A*

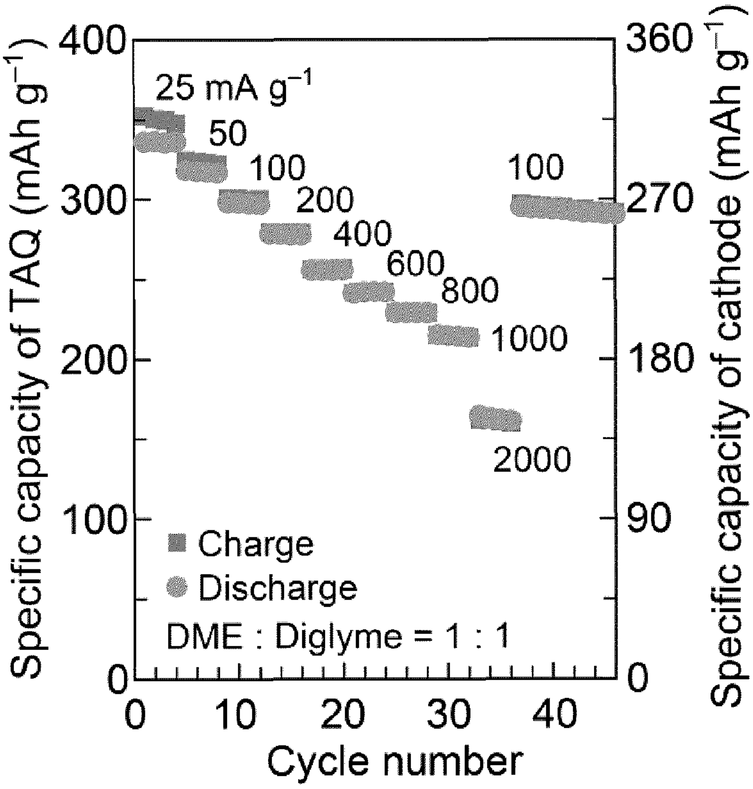


*FIG. 16B*

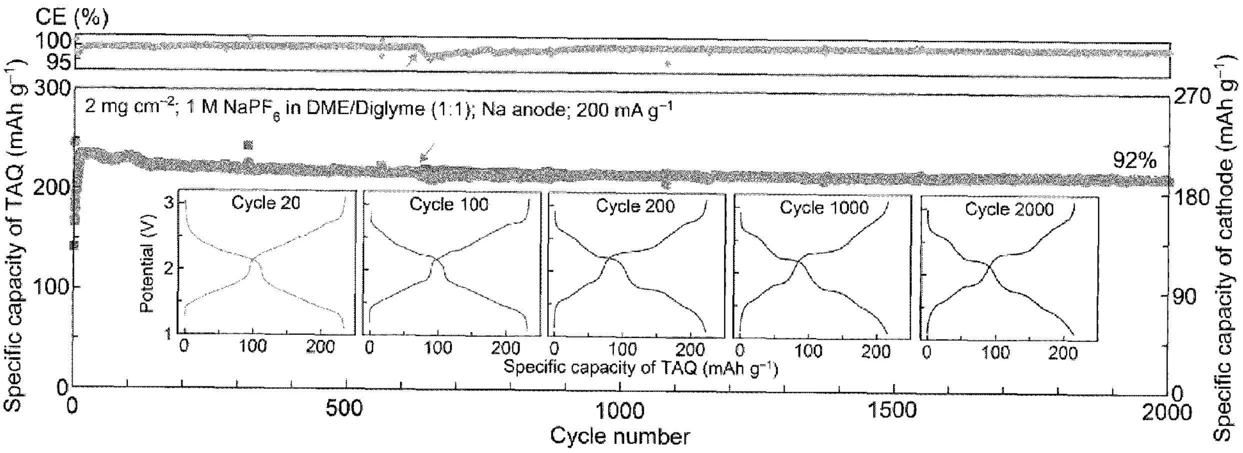
CE (%)
100
95
300
200
100
0
2 mg cm⁻²; 1 M $NaPF_6$ in DME/Diglyme (1:1); Na anode; 200 mA g⁻¹
92%
270
180
90
0
Specific capacity of TAQ (mAh g⁻¹)
Specific capacity of cathode (mAh g⁻¹)
Cycle number
0
500
1000
1500
2000
Cycle 20
Cycle 100
Cycle 200
Cycle 1000
Cycle 2000
Potential (V)
Specific capacity of TAQ (mAh g⁻¹)

*FIG. 16C*

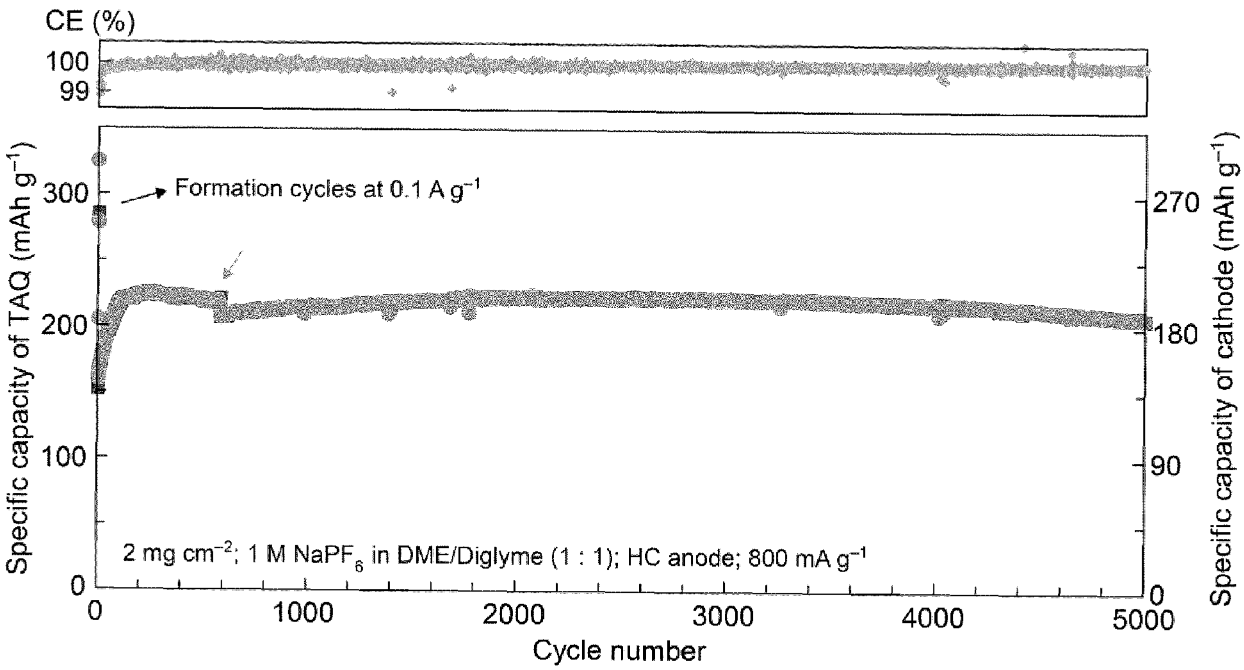
CE (%)
100
99
Specific capacity of TAQ (mAh g$^{-1}$)
Formation cycles at 0.1 A g$^{-1}$
300
200
100
0
270
180
90
0
Specific capacity of cathode (mAh g$^{-1}$)
2 mg cm$^{-2}$; 1 M $NaPF_6$ in DME/Diglyme (1 : 1); HC anode; 800 mA g$^{-1}$
0
1000
2000
3000
4000
5000
Cycle number

*FIG. 16D*

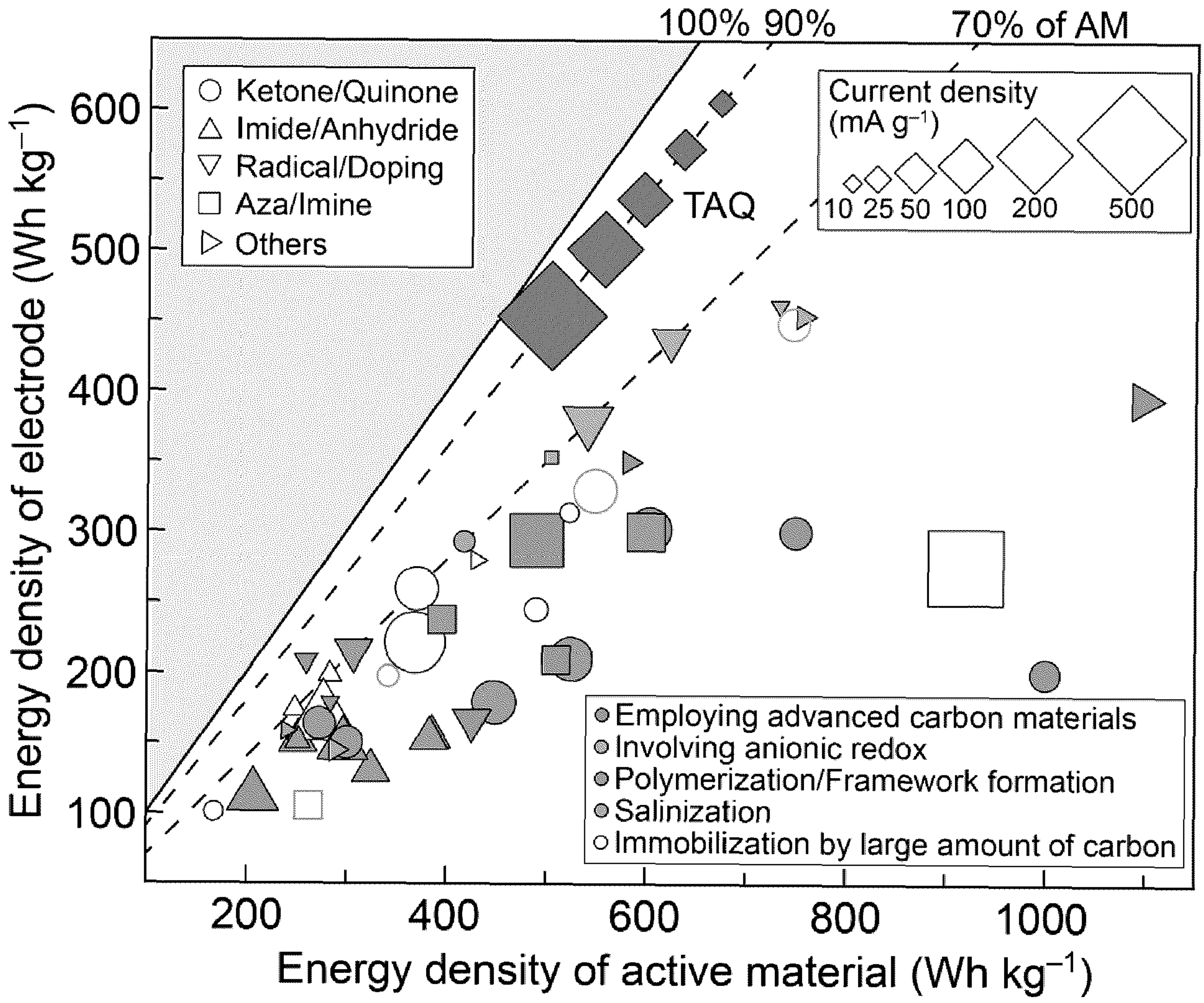
100%
90%
70% of AM
Ketone/Quinone
Imide/Anhydride
Radical/Doping
Aza/Imine
Others
Current density
(mA g-1)
10 25 50 100 200 500
TAQ
Employing advanced carbon materials
Involving anionic redox
Polymerization/Framework formation
Salinization
Immobilization by large amount of carbon
Energy density of electrode (Wh kg-1)
Energy density of active material (Wh kg-1)
100
200
300
400
500
600
200
400
600
800
1000

*FIG. 16E*

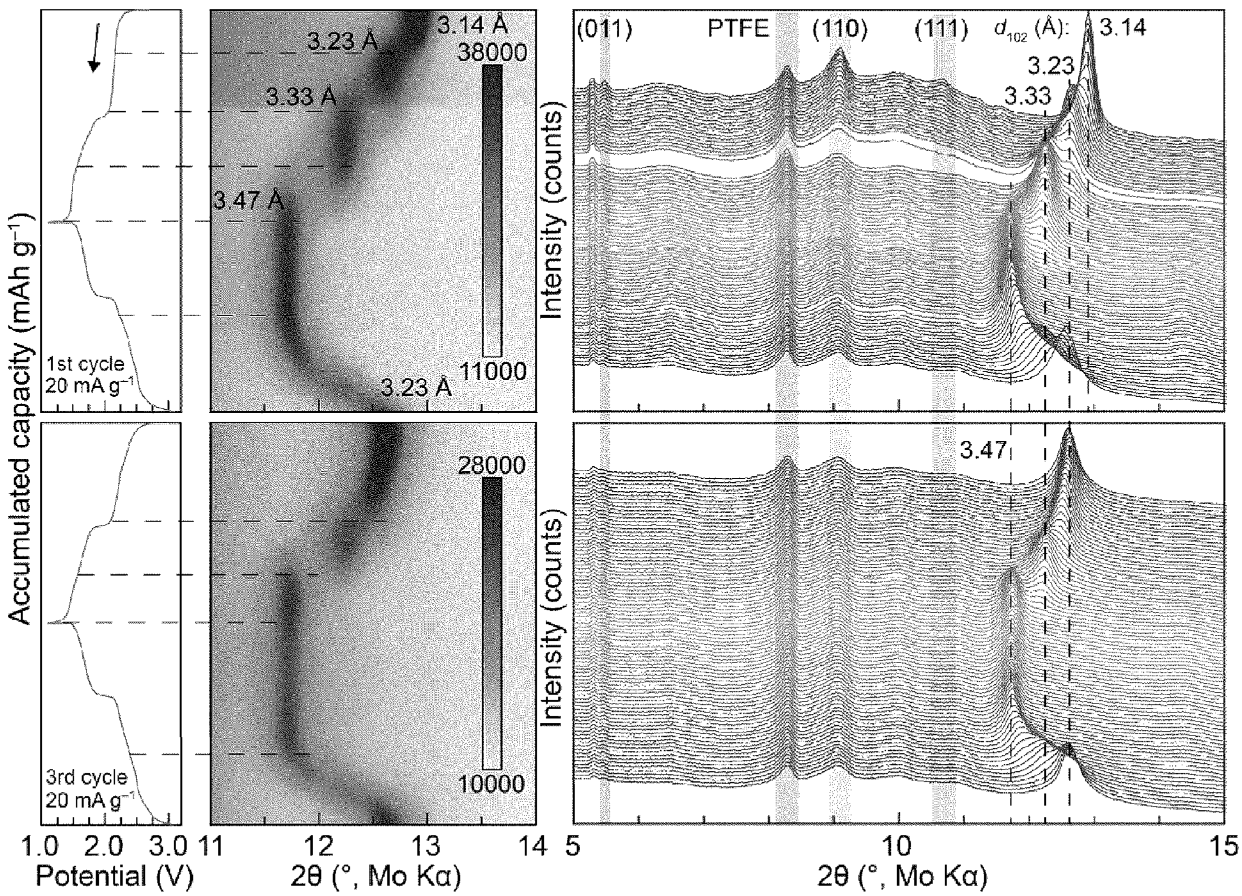

Accumulated capacity (mAh g⁻¹)
1st cycle
20 mA g⁻¹
3rd cycle
20 mA g⁻¹
1.0 2.0 3.0
Potential (V)
3.14 Å
3.23 Å
3.33 Å
3.47 Å
3.23 Å
38000
11000
28000
10000
11 12 13 14
2θ (°, Mo Kα)
(011)
PTFE
(110)
(111)
d102 (Å):
3.14
3.23
3.33
3.47
Intensity (counts)
5 10 15
2θ (°, Mo Kα)


*FIG. 17A*

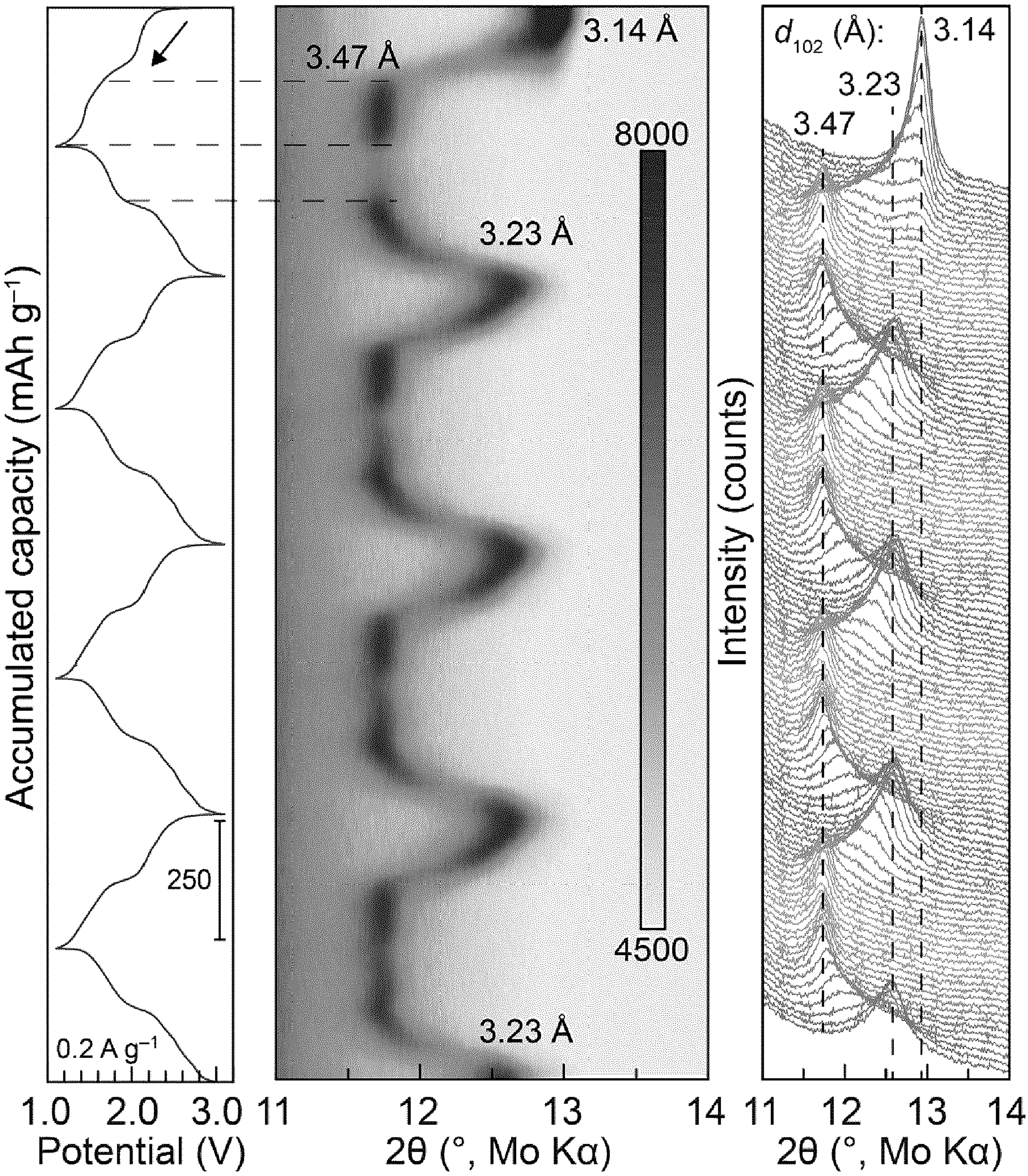
Accumulated capacity (mAh g⁻¹)
250
0.2 A g⁻¹
1.0
2.0
3.0
Potential (V)
3.47 Å
3.14 Å
3.23 Å
8000
4500
3.23 Å
11
12
13
14
2θ (°, Mo Kα)
Intensity (counts)
d102 (Å):
3.14
3.23
3.47
11
12
13
14
2θ (°, Mo Kα)

*FIG. 17B*

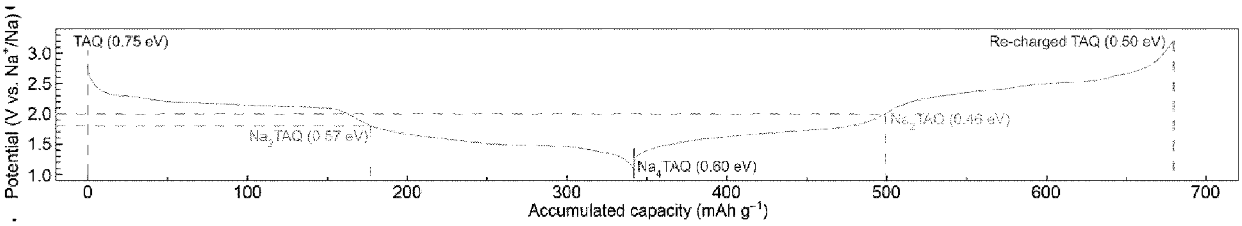
TAQ (0.75 eV)
Re-charged TAQ (0.50 eV)
Na$_2$TAQ (0.57 eV)
Na$_2$TAQ (0.46 eV)
Na$_4$TAQ (0.60 eV)
Potential (V vs. Na$^+$/Na)
3.0
2.5
2.0
1.5
1.0
0
100
200
300
400
500
600
700
Accumulated capacity (mAh g$^{-1}$)

*FIG. 17C*

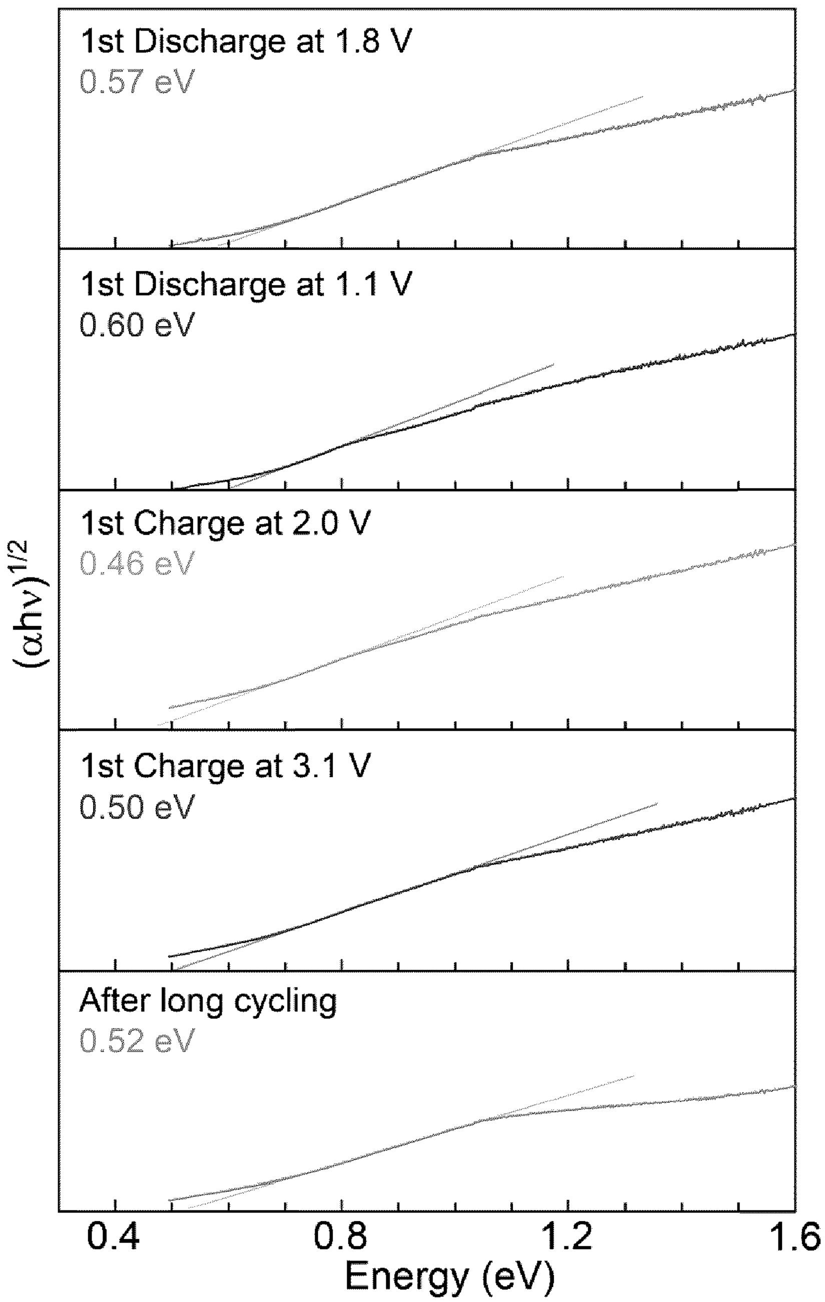
1st Discharge at 1.8 V
0.57 eV
1st Discharge at 1.1 V
0.60 eV
1st Charge at 2.0 V
0.46 eV
1st Charge at 3.1 V
0.50 eV
After long cycling
0.52 eV
$(\alpha h\nu)^{1/2}$
0.4
0.8
1.2
1.6
Energy (eV)

*FIG. 17D*

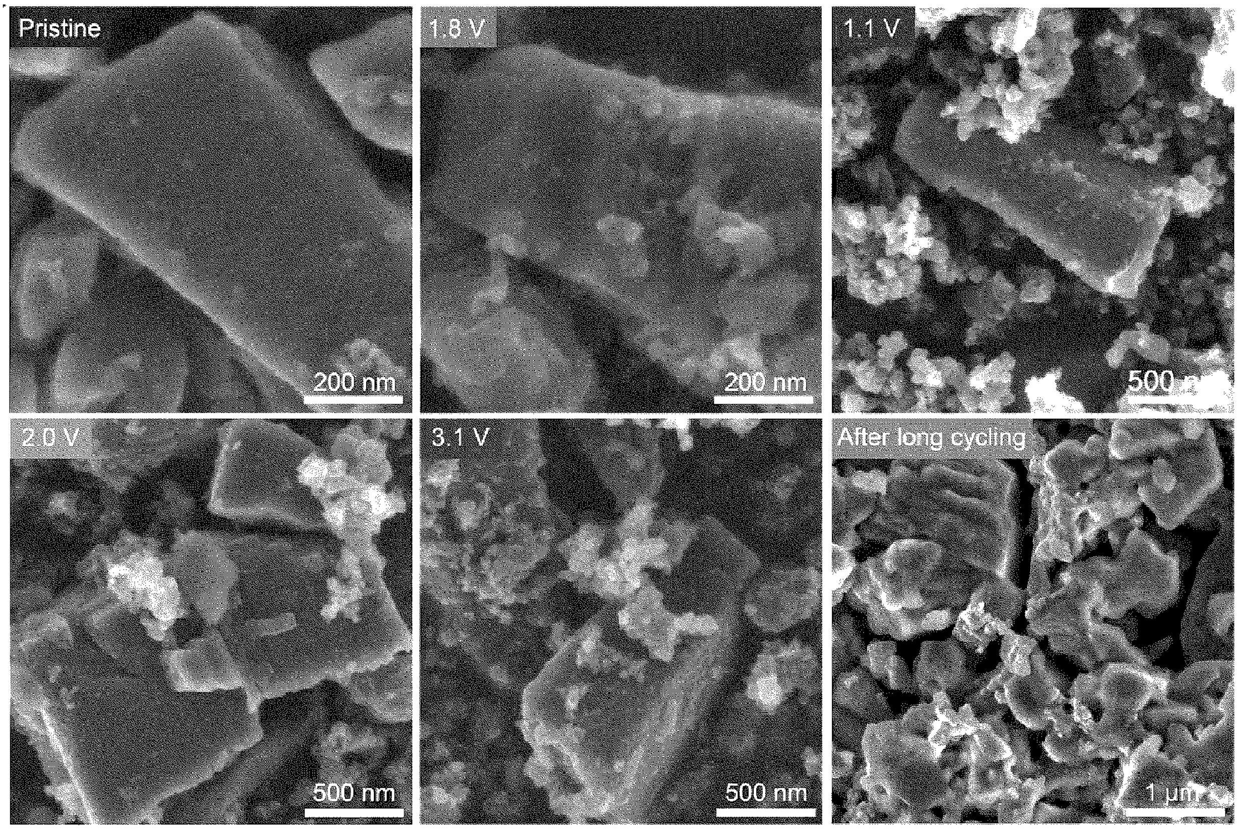
Pristine
200 nm
1.8 V
200 nm
1.1 V
500 nm
2.0 V
500 nm
3.1 V
500 nm
After long cycling
1 μm

*FIG. 17E*

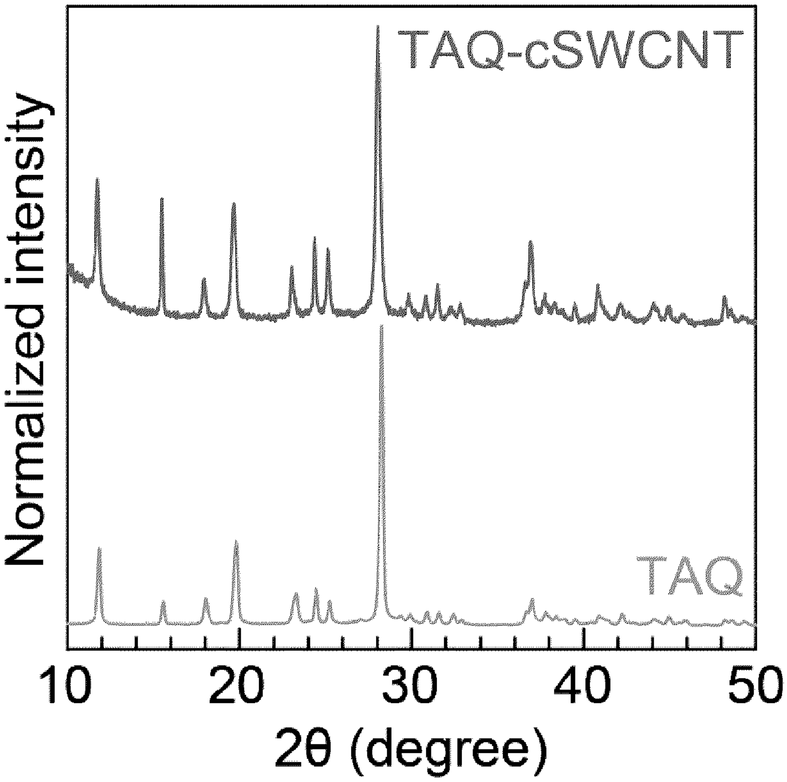


*FIG. 18A*

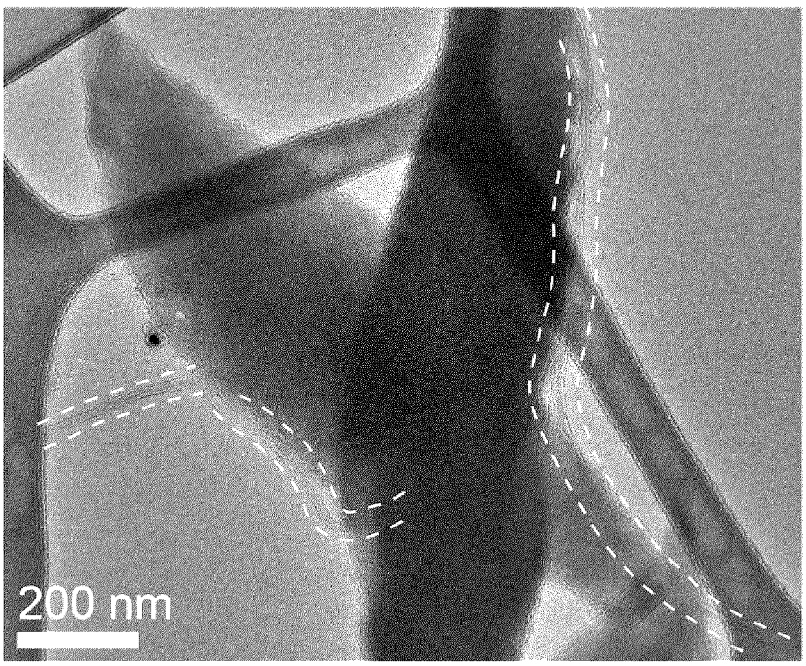


*FIG. 18B*

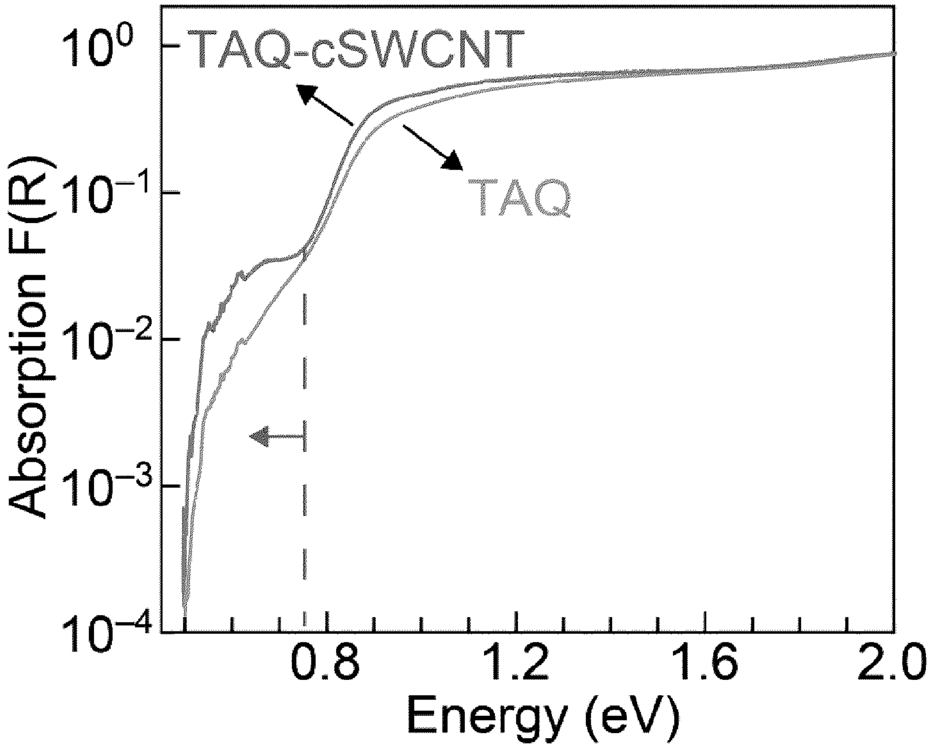


*FIG. 18C*

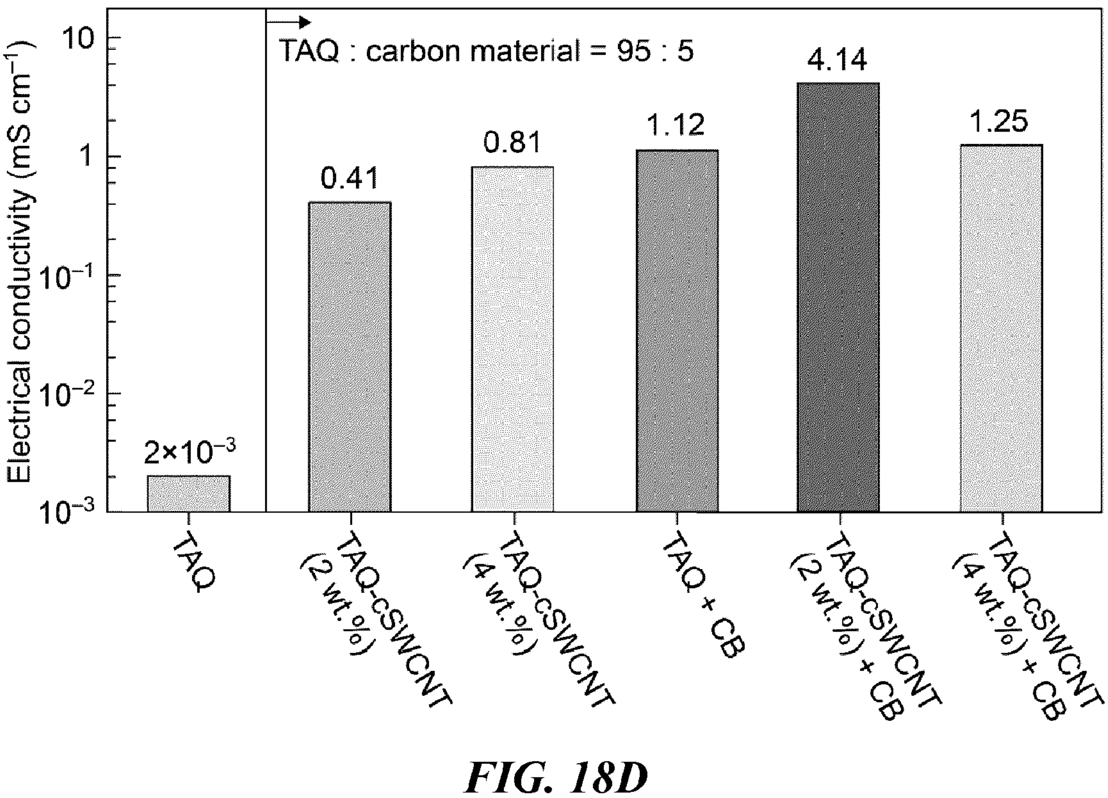


*FIG. 18D*

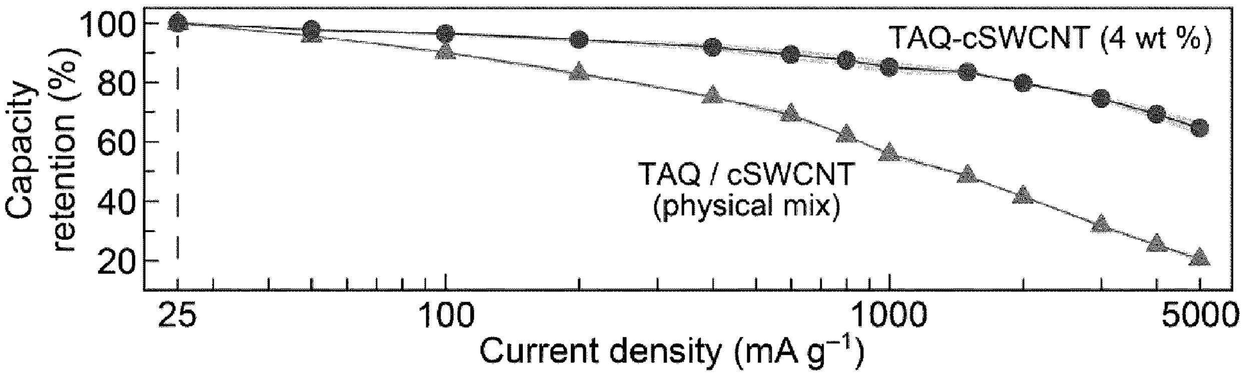


*FIG. 18E*

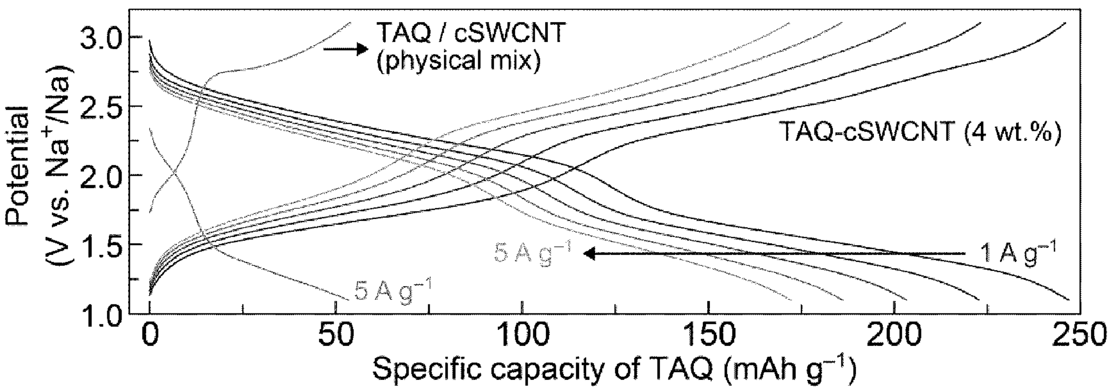


*FIG. 18F*

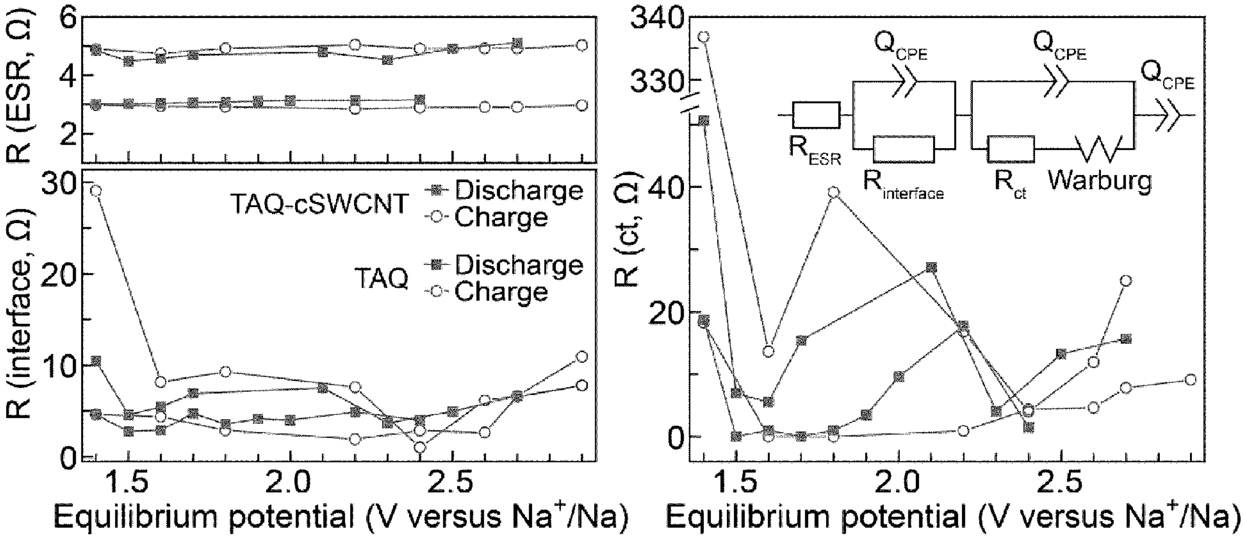
R (ESR, Ω)
R (interface, Ω)
TAQ-cSWCNT
Discharge
Charge
TAQ
Discharge
Charge
Equilibrium potential (V versus Na+/Na)
R (ct, Ω)
$Q_{CPE}$
$Q_{CPE}$
$Q_{CPE}$
$R_{ESR}$
$R_{interface}$
$R_{ct}$
Warburg
Equilibrium potential (V versus Na+/Na)

*FIG. 18G*

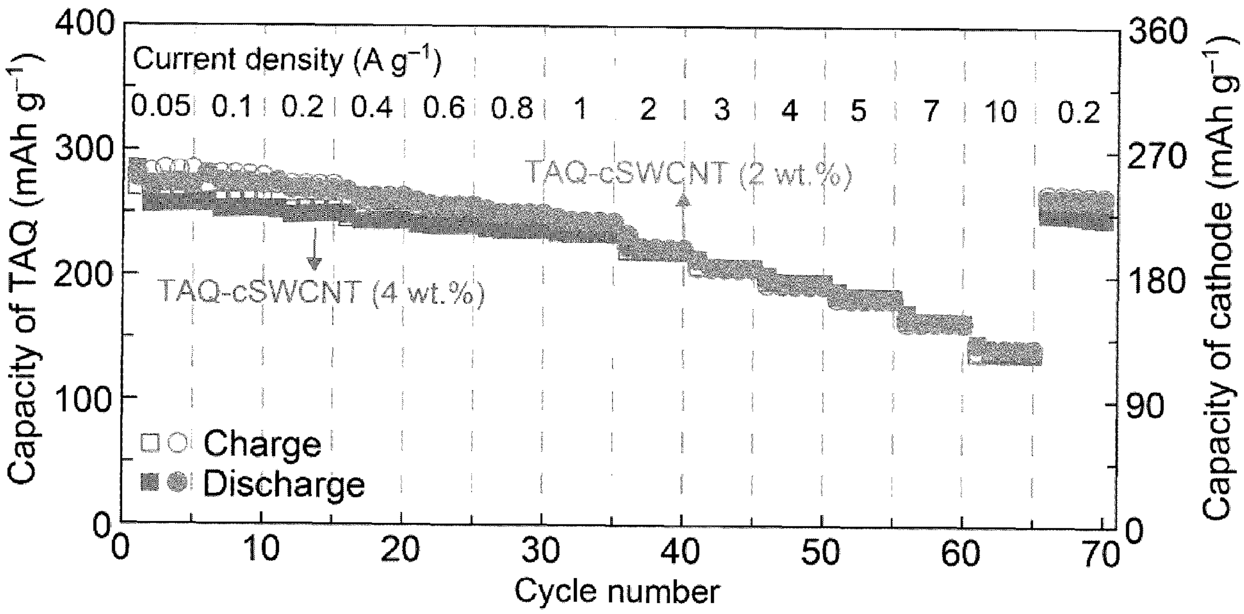

Current density (A g⁻¹)
0.05 0.1 0.2 0.4 0.6 0.8 1 2 3 4 5 7 10 0.2
TAQ-cSWCNT (2 wt.%)
TAQ-cSWCNT (4 wt.%)
Charge
Discharge
Capacity of TAQ (mAh g⁻¹)
Capacity of cathode (mAh g⁻¹)
Cycle number
0
100
200
300
400
10
20
30
40
50
60
70
90
180
270
360


*FIG. 18H*

Europäisches Patentamt
European Patent Office
Office européen des brevets

# EUROPEAN SEARCH REPORT

Application Number
EP 24 16 7905

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | EP 4 345 968 A1 (MASSACHUSETTS INST TECHNOLOGY [US]) 3 April 2024 (2024-04-03)<br>* paragraph [0040] *<br>* claims 1,2,18 *<br>----- | 1-5,7-19 | INV.<br>H01M4/137<br>H01M4/60<br>H01M4/62<br>H01M10/0525<br>H01M10/054 |
| X | QIANQIAN PENG ET AL: "Constructing Carbon Nanotube-Enhanced Ultra-Thin Organic Compounds with Multi-Redox Sites for "All-Temperature" Potassium-Ion Battery Anode and its Step-Wise K-Storage Mechanism",<br>SMALL, WILEY, HOBOKEN, USA,<br>vol. 20, no. 20,<br>10 December 2023 (2023-12-10), page n/a,<br>XP072637643,<br>ISSN: 1613-6810, DOI:<br>10.1002/SMLL.202308953<br>* the whole document *<br>----- | 1-19 | |
| | | | TECHNICAL FIELDS SEARCHED (IPC) |
| | | | H01M |

The present search report has been drawn up for all claims

| Place of search | Date of completion of the search | Examiner |
|---|---|---|
| The Hague | 24 October 2024 | Knoflacher, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....
& : member of the same patent family, corresponding document

2

EPO FORM 1503 03.82 (P04C01)

## ANNEX TO THE EUROPEAN SEARCH REPORT ON EUROPEAN PATENT APPLICATION NO.

EP 24 16 7905

This annex lists the patent family members relating to the patent documents cited in the above-mentioned European search report. The members are as contained in the European Patent Office EDP file on
The European Patent Office is in no way liable for these particulars which are merely given for the purpose of information.

24-10-2024

| Patent document cited in search report | Publication date | Patent family member(s) | Publication date |
|---|---|---|---|
| EP 4345968 A1 | 03-04-2024 | EP 4345968 A1 | 03-04-2024 |
| | | WO 2024072426 A1 | 04-04-2024 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2022013925 W
- US 2022047839 W